(19) Europäisches Patentamt
European Patent Office
Office européen des brevets

(11) **EP 4 636 046 A1**

(12) **EUROPEAN PATENT APPLICATION**
published in accordance with Art. 153(4) EPC

(43) Date of publication:
**22.10.2025 Bulletin 2025/43**

(21) Application number: **23903010.9**

(22) Date of filing: **03.08.2023**

(51) International Patent Classification (IPC):
**C09D 11/322** (2014.01)     **C09D 11/40** (2014.01)
**B41M 5/00** (2006.01)     **B41J 2/01** (2006.01)
**B41J 2/21** (2006.01)

(52) Cooperative Patent Classification (CPC):
**B41J 2/01; B41J 2/21; B41M 5/00; C09D 11/322;
C09D 11/40**

(86) International application number:
**PCT/JP2023/028406**

(87) International publication number:
**WO 2024/127704 (20.06.2024 Gazette 2024/25)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **16.12.2022 JP 2022201213**

(71) Applicants:
• **artience Co., Ltd.**
**Chuo-ku**
**Tokyo 104-0031 (JP)**

• **TOYOCOLOR CO., LTD.**
**Tokyo 104-8381 (JP)**

(72) Inventors:
• **HAYAMIZU, Mayuko**
**Tokyo 104-8381 (JP)**
• **SUZUKI, Norio**
**Tokyo 104-8381 (JP)**
• **JONAI, Kazuhiro**
**Tokyo 104-8381 (JP)**

(74) Representative: **SSM Sandmair
Patentanwälte Rechtsanwalt
Partnerschaft mbB
Joseph-Wild-Straße 20
81829 München (DE)**

(54) **INK SET AND METHOD FOR PRODUCING PRINTED MATTER**

(57)     An ink set includes: an aqueous white inkjet ink containing dispersed particles (PW) of an inorganic white pigment; and an aqueous yellow inkjet ink containing dispersed particles (PY) of C.I. Pigment Yellow 155, wherein when a content of the dispersed particles (PW) is represented by WW (% by mass), an average particle size and a density of the dispersed particles (PW) are represented by SW (nm) and DW (g/cm$^3$), respectively, and a content of the dispersed particles (PY) is represented by WY (% by mass), formulas (1) to (4) below are all satisfied.

$$150 \leq SW \leq 350 \quad (1)$$

$$6 \leq WW \leq 30 \quad (2)$$

$$0.010 \times SW \times DW \leq WW \leq [9.0 \times 10^6 \div (SW^2 \times DW)] \quad (3)$$

$$0.30 \leq (WY \times DW / WW) \leq 1.5 \quad (4)$$

EP 4 636 046 A1

**Description**

Technical Field

An embodiment of the present invention relates to an ink set including an aqueous white inkjet ink and an aqueous yellow inkjet ink, and a method for manufacturing a printed matter using the ink set.

Background Art

Unlike a forme-based printing method, a digital printing method does not require a plate, and therefore can achieve downsizing of a printing apparatus, cost reduction, and the like. In an inkjet printing method which is a type of digital printing method, ink is discharged from a nozzle of an inkjet head and attached to a substrate to record characters and/or images. In addition to the features described above, the inkjet printing method has advantages such as low noise during printing, low cost of a printing apparatus, and easy colorization, and the inkjet printing method is increasingly used not only in office applications and home applications but also in industrial applications.

Hitherto, in industrial applications, inkjet printing has been performed using a solvent ink or an ultraviolet curable ink. However, in recent years, there has been an increasing demand for an aqueous ink from the viewpoint of health of workers and environmental consideration. Note that, in the present application, the aqueous ink used in the inkjet printing method is also simply referred to as "aqueous inkjet ink".

Recently, there is a strong expectation to the development of the inkjet printing method into the printing market for packages and labels where the forme-based printing method has been used until now. In the forme-based printing method, which has been conventionally used in the printing market, many special color inks have been used, and a printed matter having an excellent color reproduction region has been prepared. Therefore, in order to achieve practical application of the inkjet printing method in the printing market, it is extremely important to achieve excellent color reproducibility. In addition, in the printing market for packages and labels, substrate versatility (printability on various substrates), light resistance at a certain level or higher, various types of resistance (abrasion resistance, water resistance, solvent resistance, and the like), and the like are also required.

In general, color reproducibility and light resistance of a printed matter largely depend on what type of colorant is selected in an ink used for preparing the printed matter, particularly, for the three color inks, yellow, cyan, and magenta, which are process colors. As described in Patent Literature 1, a special color ink can be used also in the inkjet printing method, for improving color reproducibility. However, this is not a preferable measure from the viewpoint of the advantage of the inkjet printing method where a printing apparatus is small and inexpensive. Therefore, in order to improve the above characteristics, selecting a colorant to be used for the three color inks is very important.

For example, C.I. Pigment Yellow 155 is known as a colorant used for a yellow aqueous inkjet ink (aqueous yellow inkjet ink). C.I. Pigment Yellow 155 has characteristics such as high light resistance, and low hazardous property as it does not contain heavy metal, such as nickel, or a halogen, such as chlorine. On the other hand, there are issues such as difficulty in stably maintaining C.I. Pigment Yellow 155 in an aqueous yellow inkjet ink due to its high hydrophobicity, and its slightly low coloring power. Various studies aimed at solving the above issues have been conducted so far (see Patent Literatures 2 and 3).

Meanwhile, in the printing market for packages and labels, a transparent substrate, such as a polyethylene terephthalate (PET) film or a polypropylene film, and a porous and colored (non-white) substrate, such as kraft paper or liner paper, are also used. In order to improve color reproducibility of a printed matter with respect to these substrates, a method for printing a white ink before printing a process-colored ink may be adopted. In such a case, a layer printed using a white ink is required to have an opacifying property from the viewpoint of improving color reproducibility of the process-colored ink that is to be printed later. Of course, the white ink should not inhibit image formation of an ink to be printed later.

Therefore, in order to use the aqueous yellow inkjet ink containing C.I. Pigment Yellow 155 in the printing market for packages and labels, in addition to solving the above-described issues, it is necessary to further solve the above-described problems, which may occur when the aqueous yellow inkjet ink is used in combination with a white aqueous inkjet ink (aqueous white inkjet ink).

However, in fact, no studies on the above-described problems concerning the combination of the aqueous white inkjet ink and the aqueous yellow inkjet ink containing C.I. Pigment Yellow 155 have been sufficiently conducted. For example, Patent Literature 4 relates to an inkjet recording method in which an aqueous white inkjet ink containing a urethane resin and not containing a high-boiling-point alkyl polyol-based solvent is printed on a soft packaging film, and then a color aqueous inkjet ink is printed on a layer of the aqueous white inkjet ink. In Examples of Patent Literature 4, an aqueous yellow inkjet ink containing C.I. Pigment Yellow 155 is manufactured as the color aqueous inkjet ink, and inkjet printing is performed on a polypropylene film or a nylon film together with the aqueous white inkjet ink. In contrast, as a result of studies by the present inventors, it has been found that when printing is performed with a combination of the aqueous white inkjet ink and the aqueous yellow inkjet ink disclosed in the above Examples on a porous substrate, such as kraft paper or liner paper, a printed matter excellent in image quality could not necessarily be obtained. In addition, depending on use conditions and the like, discharge stability of the aqueous yellow inkjet ink is also unreliable.

Patent Literature 5 discloses a set of a metal oxide-containing aqueous white inkjet ink and a C.I. Pigment Yellow 155-containing aqueous yellow inkjet ink, each of which contains a siloxane-based surface additive and urethane resin particles and has a specified amount of dissolved oxygen, as an ink set for obtaining a printed matter excellent in substrate adhesion, beading (coalescence and contraction of adjacent ink droplets) suppression, various types of resistance, and the like. Meanwhile, since the aqueous white inkjet ink specifically disclosed in Examples of Patent Literature 5 contains only 5% by mass of titanium oxide ultrafine particles ("STR-100W" manufactured by Sakai Chemical Industry Co., Ltd.) having a primary particle size of 15 nm as a colorant, it can be easily imagined that a layer printed using the aqueous white inkjet ink has a poor opacifying property.

Furthermore, Patent Literature 6 discloses a set of an aqueous white inkjet ink containing a white pigment having cationic responsiveness, and a non-white aqueous inkjet ink containing a non-white pigment having a larger absolute value of zeta potential than the white pigment. In addition, Patent Literature 6 describes that by using the set, whiteness and an opacifying property of a layer printed using the aqueous white inkjet ink, and color developability of a non-white aqueous inkjet ink layer printed on the layer are improved. Meanwhile, a substrate used in Examples of Patent Literature 6 is only a fabric substrate, and for example, it is not described whether a printed matter excellent in image quality can be formed on a substrate such as a polyethylene terephthalate (PET) film or a polypropylene film often used in the printing market for packages and labels. In addition, a primary particle size of titanium oxide (white pigment) used in the manufacturing of the aqueous white inkjet ink in Examples of Patent Literature 6 and an average particle size of a dispersion manufactured using the titanium oxide are not described in the Examples. As might be expected, these particle sizes largely affect an opacifying property of a layer printed using the aqueous white inkjet ink. In addition, as a result of studies by the present inventors, it has also been found that image quality (for example, uniformity in a solid printed matter, and thin line reproducibility, and the like) of the finally obtained printed matter deteriorates depending on the average particle size of the dispersion, but there is no description regarding such an effect in Patent Literature 6.

Note that the "solid printed matter" in the present application refers to a printed matter in which a surface of a substrate is completely covered with ink. In the present application, a layer formed by printing a white ink and a layer formed by printing a yellow ink are also referred to as "white ink layer" and "yellow ink layer", respectively. Furthermore, a printed matter obtained by printing a yellow ink on a white ink layer is also simply referred to as "printed matter".

As described above, when the aqueous white inkjet ink and the aqueous yellow inkjet ink containing C.I. Pigment Yellow 155 are used in combination, it can be said that no studies have yet been made for simultaneously improving both of the opacifying property of a white ink layer, and the image quality and visibility of a printed matter . Note that the image quality of the printed matter specifically means uniformity in a solid printed matter (hereinafter, also referred to as "solid uniformity" in the present application) and thin line reproducibility.

Citation List

Patent Literature

Patent Literature 1: JP 2009-24072 A
Patent Literature 2: JP 2018-111742 A
Patent Literature 3: JP 2022-100822 A
Patent Literature 4: JP 2014-94495 A
Patent Literature 5: JP 2017-186534 A
Patent Literature 6: JP 2022-40645 A

Summary of Invention

Technical Problem

The present invention has been made to solve the above-described problems, and an object of the present invention is to provide an ink set including an aqueous white inkjet ink capable of forming a white ink layer excellent in opacifying property, and an aqueous yellow inkjet ink capable of forming a printed matter excellent in solid uniformity, thin line reproducibility, and visibility, in which both aqueous inkjet inks are excellent in discharge stability.

Solution to Problem

As a result of intensive studies by the present inventors to solve the above-described problems, an ink set including an inorganic white pigment-containing aqueous white inkjet ink and a C.I. Pigment Yellow 155-containing aqueous yellow inkjet ink satisfying the following requirements has been found, and the present invention has been completed.

That is, an embodiment of the present invention relates to the following [1] to [6]. Note that the embodiment of the present invention is not limited to the following description, and includes various embodiments.

[1] An ink set including: an aqueous white inkjet ink; and an aqueous yellow inkjet ink used to be printed on a layer formed by printing the aqueous white inkjet ink, wherein

the aqueous white inkjet ink contains dispersed particles (PW) of an inorganic white pigment,
the aqueous yellow inkjet ink contains dispersed particles (PY) of C.I. Pigment Yellow 155, and
when a content of the dispersed particles (PW) to a total amount of the aqueous white inkjet ink is represented by WW (% by mass), an average particle size and a density of the dispersed particles (PW) are represented by SW (nm) and DW (g/cm$^3$), respectively, and a content of the dispersed particles (PY) to a total amount of the aqueous yellow inkjet ink is represented by WY (% by mass), formulas (1) to (4) below are all satisfied.

$$150 \leq SW \leq 350 \quad (1)$$

$$6 \leq WW \leq 30 \quad (2)$$

$$0.010 \times SW \times DW \leq WW \leq [9.0 \times 10^6 \div (SW^2 \times DW)] \quad (3)$$

$$0.30 \leq (WY \times DW / WW) \leq 1.5 \quad (4)$$

[2] The ink set according to [1], wherein the inorganic white pigment contains titanium oxide treated with alumina.
[3] The ink set according to [1] or [2], wherein

the aqueous white inkjet ink further contains a polyolefin resin as a binder resin, and
the aqueous yellow inkjet ink further contains a polyolefin resin as a binder resin.

[4] The ink set according to any one of [1] to [3], wherein

the aqueous white inkjet ink further contains at least one selected from the group consisting of a siloxane-based surface additive and an acetylene diol-based surface additive as a surface additive (AW), and
the aqueous yellow inkjet ink further contains at least one selected from the group consisting of a siloxane-based surface additive and an acetylene diol-based surface additive as a surface additive (AY).

[5] The ink set according to [4], wherein a ratio of a content of the surface additive (AY) contained in the aqueous yellow inkjet ink to a content of the surface additive (AW) contained in the aqueous white inkjet ink is 0.9 to 1.6.
[6] A method for manufacturing a printed matter using the ink set according to any one of [1] to [5], the method including:

performing, in this order, a step (step 1) of discharging the aqueous white inkjet ink from an inkjet head onto a substrate, a step (step 2) of discharging the aqueous yellow inkjet ink from an inkjet head onto a layer formed by printing the aqueous white inkjet ink, and a step (step 3) of drying the aqueous white inkjet ink and the aqueous yellow inkjet ink on the substrate.
The disclosure of the present application relates to subject matters described in Japanese Patent Application No. 2022-201213 filed on December 16, 2022, the entire disclosure of which is incorporated herein by reference.

Advantageous Effects of Invention

According to the present invention, it is possible to provide an ink set including an aqueous white inkjet ink capable of forming a white ink layer excellent in opacifying property, and an aqueous yellow inkjet ink capable of forming a printed matter excellent in solid uniformity, thin line reproducibility, and visibility, in which both aqueous inkjet inks are excellent in discharge stability.

Description of Embodiments

Hereinafter, a preferred embodiment of the present invention will be described in detail. Note that the embodiment described below describes an example of the present invention. The present invention is not limited to the following embodiment, and includes modifications performed without departing from the summary of the invention.

As described above, C.I. Pigment Yellow 155 is a yellow pigment often used as a colorant of an aqueous yellow inkjet ink. Meanwhile, C.I. Pigment Yellow 155 has issues such as high hydrophobicity and low coloring power as compared with other yellow pigments.

In contrast, an inorganic white pigment, such as titanium oxide or zinc oxide, used as a colorant of an aqueous white inkjet ink generally has high affinity for water. Therefore, when an aqueous white inkjet ink containing the inorganic white pigment is printed on a highly hydrophobic substrate, such as a plastic substrate, the surface of the white ink layer may be microscopically uneven. In addition, when an aqueous white inkjet ink containing the inorganic white pigment is printed on porous substrates, such as some paper substrates, the unevenness may also occur. When an aqueous yellow inkjet ink containing C.I. Pigment Yellow 155 is printed on the white ink layer having such an uneven surface, there is a possibility that the C.I. Pigment Yellow 155 does not uniformly spread on the white ink layer, and as a result, issues such as obtaining a non-uniform solid printed matter and deterioration of thin line reproducibility may occur.

In addition, when the opacifying property of the white ink layer is insufficient and/or the surface of the white ink layer is non-uniform, it is considered that visibility of the yellow ink layer printed on the white ink layer is likely to decrease.

As a result of intensive studies by the present inventors, it has been found that the above problems can be solved particularly by optimizing characteristics and the blend amount of dispersed particles containing an inorganic white pigment contained in the aqueous white inkjet ink, along with determining, according to the characteristics and blend amount of the dispersed particles, the blend amount of dispersed particles containing C.I. Pigment Yellow 155 in the aqueous yellow inkjet ink to be used in combination.

Specifically, the composition satisfies all of the following formulas (1) to (4), when the content of the dispersed particles (PW) of the inorganic white pigment contained in the aqueous white inkjet ink is represented by WW (% by mass), the average particle size and density of the dispersed particles (PW) are represented by SW (nm) and DW (g/cm$^3$), respectively, and also, the content of the dispersed particles (PY) of C.I. Pigment Yellow 155 contained in the aqueous yellow inkjet ink is represented by WY (% by mass). In a set of the aqueous white inkjet ink and the aqueous yellow inkjet ink thus configured, it has been found that a white ink layer having an excellent opacifying property, and a printed matter with excellent solid uniformity, and thin line reproducibility and visibility are obtained, and furthermore, the discharge stability of both inks is also excellent.

$$150 \leq SW \leq 350 \quad (1)$$

$$6 \leq WW \leq 30 \quad (2)$$

$$0.010 \times SW \times DW \leq WW \leq [9.0 \times 10^6 \div (SW^2 \times DW)] \quad (3)$$

$$0.30 \leq (WY \times DW / WW) \leq 1.5 \quad (4)$$

The above formula (1) defines the average particle size (SW) of the dispersed particles (PW). By setting the average particle size to 150 nm or more, a white ink layer excellent in an opacifying property is obtained. Furthermore, even when printing is performed on a porous substrate, it is possible to obtain the uniform white ink layer without unevenness without being affected by pores. On the other hand, by setting the average particle size to 350 nm or less, an aqueous white inkjet ink that does not excessively cause precipitation and thus has excellent discharge stability is obtained, even when dispersed particles (PW) having a high density are used.

Note that SW is also included in formula (3) described later, and a value of the SW is determined so as to satisfy the requirement of formula (3).

The above formula (2) defines upper and lower limit values of the content (WW) of the dispersed particles (PW) contained in the aqueous white inkjet ink. When the content is 6% by mass or more, a white ink layer excellent in opacifying property is obtained, and even when printing is performed on a highly hydrophobic substrate, the dispersed particles (PW) uniformly spread on the substrate, and unevenness of the white ink layer is prevented. On the other hand, by setting the content to 30% by mass or less, clogging of the dispersed particles (PW) in an inkjet head is reduced regardless of the average particle size, and an aqueous white inkjet ink excellent in discharge stability is obtained.

Meanwhile, the content (WW) of the dispersed particles (PW) is also defined in the above formula (3), but in formula (3), the WW is limited from the average particle size and density of the dispersed particles (PW).

The inequality formed by the left side and the middle side of formula (3) represents an area occupied when it is assumed that the dispersed particles (PW) contained in a certain amount of aqueous white inkjet ink are arranged in one layer. Specifically, since a volume per dispersed particle (PW) is proportional to $SW^3$, and a mass per dispersed particle (PW) is proportional to $(DW \times SW^3)$, the number of dispersed particles (PW) contained in a certain amount of aqueous white inkjet ink is proportional to $WW / (DW \times SW^3)$. When it is assumed that the dispersed particles (PW) are arranged in a layer, since an area occupied by a dispersed particle (PW) on the plane is proportional to $SW^2$, the area occupied by the dispersed particles (PW) contained in a certain amount of aqueous white inkjet ink is proportional to $[WW / (DW \times SW^3)] \times SW^2$, that is, $WW / (DW \times SW)$.

The constant existing on the left side of formula (3) is a value found as a result of studies by the present inventors. In the aqueous white inkjet ink, which satisfies the inequality formed by the left side and the middle side of formula (3), it is considered that a sufficient amount of dispersed particles (PW) exists on a white ink layer. As a result, unevenness of the white ink layer due to, for example, partial deviation of the dispersed particles (PW) can be prevented, and a white ink layer excellent in opacifying property can be obtained. Furthermore, as a result, a printed matter of the aqueous yellow inkjet ink formed on the white ink layer is excellent in solid uniformity (in particular, solid uniformity relative to a porous substrate) and thin line reproducibility.

Note that the constant existing on the left side of formula (3), that is, a value corresponding to the minimum value of $WW / (SW \times DW)$, is preferably 0.012, more preferably 0.013, and particularly preferably 0.014, from the viewpoint of more suitably exhibiting the above-described effect.

On the other hand, the inequality formed by the middle side and the right side of the above formula (3) represents that the precipitation rate of the dispersed particles (PW) in the aqueous white inkjet ink is proportional to the product of $SW^2$ and DW. Specifically, it can be derived from the gravity applied to the dispersed particles (PW) during precipitation, and the resistance to the precipitation.

As described above, the above formula (1) is also a value related to precipitation of the dispersed particles (PW), but the present inventors have found that a negative effect due to precipitation of the dispersed particles (PW) cannot be completely eliminated only by simply satisfying formula (1), and as a result of continuing intensive studies, the present inventors derived a constant existing on the right side of the above formula (3). In other words, in an aqueous white inkjet ink that satisfies the inequality formed by the middle side and the right side of formula (3), precipitation of the dispersed particles (PW) can be prevented at a higher level, and discharge stability is significantly improved. In addition, when forming a white ink layer, it is possible to prevent non-uniform deposition of the dispersed particles (PW) on the substrate due to excessive precipitation, and to reduce unevenness of the surface. As a result, solid uniformity (in particular, solid uniformity relative to a highly hydrophobic substrate) and thin line reproducibility in a printed matter of the aqueous yellow inkjet ink, which is formed on the white ink layer, are improved.

Note that the constant existing on the right side of formula (3), that is, a value corresponding to a maximum value of $WW \times SW^2 \times DW$, is preferably $8.0 \times 10^6$, more preferably $7.5 \times 10^6$, and particularly preferably $7.0 \times 10^6$, from the viewpoint of more suitably exhibiting the above-described effect.

The above formula (4) compares the amount of the dispersed particles (PW) contained in the white ink layer with the amount of the dispersed particles (PY) of C.I. Pigment Yellow 155 contained in the yellow ink layer formed on the white ink layer, based on volume. As a result of studies by the present inventors, by using the aqueous white inkjet ink and the aqueous yellow inkjet ink in combination, both satisfying the above formula (4), a sufficient amount of dispersed particles (PY) can be deposited on the white ink layer, and as a result, a printed matter excellent in visibility, solid uniformity, and thin line reproducibility can be obtained.

Note that the constant on the left side of formula (4) is preferably 0.40, more preferably 0.50, and particularly preferably 0.60, from the viewpoint of more suitably exhibiting the above-described effect. Similarly, the constant on the right side of formula (4) is preferably 1.3, and particularly preferably 1.1.

As described above, in an ink set including an aqueous white inkjet ink containing an inorganic white pigment, and an aqueous yellow inkjet ink containing C.I. Pigment Yellow 155, each of the inks satisfies the above-described conditions, whereby a white ink layer excellent in opacifying property, and a printed matter excellent in solid uniformity, thin line reproducibility, and visibility can be obtained, and the ink set also excellent in discharge stability can be easily achieved.

Note that the contents described above are estimated by the present inventors, and the present invention is not to be construed as being limited by the contents.

Subsequently, constituent materials and the like of the ink set according to the embodiment of the present invention, and the aqueous white inkjet ink (hereinafter, also simply referred to as "white ink (of the present invention)") and the aqueous yellow inkjet ink (hereinafter, also simply referred to as "yellow ink (of the present invention)") configuring the ink set will be described in detail below. Note that, in the present application, the white ink of the present invention and the yellow ink of the present invention are also collectively referred to as "ink of the present invention".

[Dispersed particles]

First, constituent materials and the like of the dispersed particles (PW) contained in the white ink of the present invention and the dispersed particles (PY) contained in the yellow ink of the present invention will be described in detail below.

As described above, the white ink of the present invention contains the dispersed particles (PW) containing an inorganic white pigment. The yellow ink of the present invention contains the dispersed particles (PY) containing C.I. Pigment Yellow 155.

In general, examples of a method for stably dispersing a water-insoluble colorant in an aqueous medium (a liquid medium containing water) include (1) a method in which at least part of a surface of a water-insoluble colorant is covered with a dispersing resin, (2) a method in which a water-soluble and/or water-dispersible surfactant is adsorbed on a surface of a water-insoluble colorant, and (3) a method in which a hydrophilic functional group is chemically or physically introduced into a surface of a water-insoluble colorant and dispersed in an aqueous medium without a dispersing resin or a surfactant. Also the "state in which a dispersing resin covers a water-insoluble colorant" may be any one of (1-1) a state in which a dispersing resin is adsorbed on a surface of a water-insoluble colorant, (1-2) a state in which a dispersing resin exists so as to cover a surface of a water-insoluble colorant (so-called "microcapsule type"), and (1-3) a state of so-called "sea-island type" particles in which a water-insoluble colorant is an island and a dispersing resin is the sea.

The "dispersed particles" in the present application refer to particles containing at least a water-insoluble colorant and maintaining a dispersed state in an aqueous medium. Specifically, when a water-insoluble colorant is dispersed in an aqueous medium using the method (1), the "dispersed particles" refer to particles containing the water-insoluble colorant and a dispersing resin covering the water-insoluble colorant. When a water-insoluble colorant is dispersed in an aqueous medium using the method (2), the "dispersed particles" refer to particles containing the water-insoluble colorant and a surfactant adsorbed on the water-insoluble colorant. Furthermore, when a water-insoluble colorant is dispersed in an aqueous medium using the method (3), the "dispersed particles" refer to the water-insoluble colorant itself.

In the white ink of the present invention and the yellow ink of the present invention, the water-insoluble colorant is specifically an inorganic white pigment in the case of the white ink of the present invention, and is C.I. Pigment Yellow 155 in the case of the yellow ink of the present invention. Both of these water-insoluble colorants are suitably dispersed using the method (1) among the methods listed above, that is, a method using a dispersing resin.

As described above, since the inorganic white pigment has high affinity for water, by covering the inorganic white pigment with a dispersing resin, affinity for the substrate is increased, for example, even when the white ink of the present invention is printed on a highly hydrophobic substrate, formation of an uneven surface of the white ink layer can be prevented, and the opacifying property is improved.

In addition, as C.I. Pigment Yellow 155 covered with a dispersing resin is printed on the white ink layer containing the inorganic white pigment covered with the dispersing resin, affinity between the white ink layer and C.I. Pigment Yellow 155 is improved, and solid uniformity and thin line reproducibility are improved. In addition, since C.I. Pigment Yellow 155 has low affinity for water, it is difficult to stably disperse C.I. Pigment Yellow in the yellow ink of the present invention, which contains an aqueous medium. However, by covering the surface of C.I. Pigment Yellow with a dispersing resin, C.I. Pigment Yellow can be stably dispersed even in the aqueous medium, and as a result, discharge stability of the yellow ink is improved.

In particular, by using dispersed particles formed with the method (1-1) among dispersed particles dispersed with a method using a dispersing resin, discharge stability is particularly improved. On the other hand, by using dispersed particles formed with the method (1-2) or (1-3) for the white ink, an opacifying property of the white ink layer is improved, and by using the dispersed particles for the yellow ink, uniformity of a solid printed matter becomes favorable.

As described above, the average particle size (SW) of the dispersed particles (PW) is determined so as to satisfy the above formulas (1) and (3). As is clear from the above formula (1), SW as an absolute value is 150 to 350, but a lower limit value of the above formula (1) is preferably 180, and particularly preferably 200 because the effect of the above formula (1) is suitably exhibited. For the same reason, an upper limit value of formula (1) is preferably 330, and particularly preferably 310.

On the other hand, the average particle size of the dispersed particles (PY) is preferably 60 to 250 nm, more preferably 80 to 220 nm, and particularly preferably 100 to 200 nm, from the viewpoint of improvement of discharge stability of the yellow ink containing the dispersed particles (PY), and solid uniformity of a printed matter and visibility. In addition, a value obtained by dividing the average particle size (SW) (nm) of the dispersed particles (PW) by the average particle size (nm) of the dispersed particles (PY) is preferably 1 to 3, and more preferably 1.2 to 2.5, from the viewpoint of obtaining a printed matter excellent in all of solid uniformity, thin line reproducibility, and visibility.

The "average particle size of dispersed particles" in the present application refers to a volume-based median diameter (D50), and is a value measured by diluting a sample with water as necessary, using "Nanotrac UPA-EX150" manufactured by MicrotracBEL Corp.

Meanwhile, the density (DW) of the dispersed particles (PW) is determined so as to satisfy the above formulas (3) and (4).

The "density of dispersed particles" in the present application can be measured, for example, using the following method. A certain amount of a dispersion of the dispersed particles, or a certain amount of the white ink or the yellow ink containing the dispersed particles is weighed, and subjected to an ultracentrifugation treatment (for example, at 30,000 rpm for four hours). Thereafter, a precipitate is separated and dried, and then the density of the dried precipitate is measured by a method described in JIS Z 8807 (for example, a method using a pycnometer). Note that, in the ultracentrifugation treatment, the sample may be diluted with a small amount of water.

In addition, for example, when the dispersed particles are formed of only the water-insoluble colorant and the dispersing resin, and the content of the water-insoluble colorant contained in the white ink or the yellow ink and the densities of the water-insoluble colorant and the dispersing resin are known, the density of the dispersed particles can be calculated, for example, using the following method.

A certain amount of the white ink or the yellow ink containing the dispersed particles is weighed, and subjected to an ultracentrifugation treatment (for example, at 30,000 rpm for four hours). Thereafter, a precipitate is separated and dried, and then the mass of the precipitate is precisely weighed (defined as WO (g)). Next, the content (defined as W1 (g)) of the water-insoluble colorant contained in the white ink or the yellow ink as a sample is subtracted from WO, and the amount (defined as W2 (g)) of the dispersing resin contained in the dispersed particles is calculated. Then, the density of the resin particles can be calculated with the following formula (5), using the abovementioned W1 and W2, and the density of the water-insoluble colorant (defined as D1 (g/cm$^3$)) and the density of the dispersing resin (defined as D2 (g/cm$^3$)).

$$\text{(Density of resin particles) (g/cm}^3) = W0/\{W1/D1 + W2/D2\} \qquad (5)$$

(Dispersing resin)

As described above, when the dispersed particles are dispersed using the method (1) among the methods listed above, the dispersed particles contain a dispersing resin.

The type of the dispersing resin that can be used in each of the white ink of the present invention and the yellow ink of the present invention is not particularly limited. For example, a (meth)acrylic resin, a styrene-(anhydrous) maleic acid resin, a urethane resin, a urethane-(meth)acrylic resin, a polyester resin (polycondensate of polycarboxylic acid and polyhydric alcohol), and the like can be used, but are not limited thereto.

Among those listed above, it is preferable to use one or more selected from the group consisting of a (meth)acrylic resin and a styrene-(anhydrous) maleic acid resin from the viewpoint of wide material selectivity and ease of synthesis. In addition, when both of the white ink of the present invention and the yellow ink of the present invention contain dispersing resins, the types of the dispersing resins are preferably the same from the viewpoint of the above-described affinity between the white ink layer and the yellow ink.

Note that the "(meth)acrylic resin" refers to an acrylic resin and/or a methacrylic resin, and the "(anhydrous) maleic acid" refers to maleic acid and/or maleic anhydride. A monomer configuring the (meth)acrylic resin may contain a styrene-based monomer, such as styrene, α-methylstyrene, 4-t-butylstyrene, p-methoxystyrene, 4-t-butoxystyrene, sodium p-styrene sulfonate, or divinylbenzene.

The dispersing resin can be synthesized by a known method, or a commercially available product can be used. A structure thereof is not particularly limited, and for example, a resin having a random structure, a block structure, a comb structure, a star structure, or the like can be used.

When the dispersed particles (PY) contain a dispersing resin, the dispersing resin preferably has an aromatic ring structure. Since C.I. Pigment Yellow 155 contained in the dispersed particles (PY) has a plurality of aromatic ring structures, a π-π interaction acts between these aromatic rings, and the C.I. Pigment Yellow 155 and the dispersing resin can be firmly bonded to each other. As a result, discharge stability of the yellow ink is significantly improved. In addition, since the affinity of the dispersed particles (PY) for various substrates is improved, visibility and solid uniformity of a printed matter are improved regardless of a substrate. Furthermore, when the dispersed particles (PW) contain a dispersing resin having an aromatic ring structure, affinity between the white ink layer and the yellow ink is particularly improved, and therefore a printed matter excellent in solid uniformity and thin line reproducibility can be obtained. From the above-described viewpoint, in each of the dispersed particles (PY) and the dispersed particles (PW), the amount of aromatic ring structures to the total amount of the dispersing resin is preferably 10 to 80% by mass, more preferably 15 to 75% by mass, and particularly preferably 20 to 70% by mass. Note that the "amount of aromatic ring structures" is a mass ratio of a monomer having an aromatic ring structure to the total amount of monomers configuring the dispersing resin.

In one embodiment, the dispersing resin suitably contains an ethylene oxide group. By introducing an ethylene oxide group into the dispersing resin, hydrophilicity of the dispersing resin is improved, dispersion stability of the dispersed particles becomes favorable, and as a result, discharge stability of the white ink and the yellow ink is improved. When each of the dispersed particles (PY) and the dispersed particles (PW) contains a dispersing resin containing an ethylene oxide group, affinity between the white ink layer and the yellow ink is particularly improved, and therefore a printed matter excellent in solid uniformity and thin line reproducibility can be obtained. From the above-described viewpoint, in each of the dispersed particles (PY) and the dispersed particles (PW), the amount of an ethylene oxide group to the total amount of the dispersing resin is preferably 5 to 50% by mass, and particularly preferably 10 to 40% by mass.

Note that, in the present application, when the type and content of a monomer configuring the dispersing resin are known, a value calculated with the following formula (6) is used as the content of an ethylene oxide group. In addition, when the type and content of a monomer configuring the dispersing resin are unknown, the content of a monomer having an ethylene oxide group and the number of added moles of the ethylene oxide group are measured, for example, using nuclear magnetic resonance (NMR) measurement, and the content of the ethylene oxide group is calculated using the following formula (6).

$$\text{(Content of ethylene oxide group) (\% by mass)} = \Sigma\,[(\text{ni} \times 44.05 \div \text{Mi}) \times \text{Wi}] \qquad (6)$$

In the above formula (6), ni represents the number of added moles of an ethylene oxide group in a monomer having the ethylene oxide group among monomers configuring the dispersing resin, Mi represents a molecular weight of the monomer having the ethylene oxide group, and Wi represents a blending ratio (% by mass) of the monomer having the ethylene oxide group to the total amount of monomers configuring the dispersing resin. "44.05" is the molecular weight of the ethylene oxide group.

The dispersing resin described above may be a water-soluble resin or a water-insoluble resin. Meanwhile, among the dispersing resins listed above, the dispersing resin forming the state of (1-1) is preferably a water-soluble resin, and the dispersing resin forming the state of (1-2) is preferably a water-insoluble resin, from the viewpoint that: affinity between the white ink and the highly hydrophobic substrate, and affinity between the white ink layer and the yellow ink are enhanced; and the opacifying property of the white ink layer and uniformity of a solid printed matter, and thin line reproducibility and visibility are improved, and also from the viewpoint that dispersion stability of C.I. Pigment Yellow 155 in the yellow ink is improved, and discharge stability of the yellow ink is improved.

Note that the "water-soluble resin (polymer)" in the present application refers to one in which a 1% by mass aqueous solution of a target resin is transparent as viewed with the naked eye at 20°C. In addition, a resin that does not correspond to the "water-soluble resin (polymer)" is referred to as "water-insoluble resin (polymer)" in the present application.

The water-soluble dispersing resin preferably has an acid value of 30 to 375 mgKOH/g. By adjusting the acid value within the above range, the dispersed particles can stably exist in the white ink or the yellow ink, and therefore discharge stability of the white ink or the yellow ink is improved. When each of the dispersing resin contained in the dispersed particles (PW) and the dispersing resin contained in the dispersed particles (PY) is a water-soluble resin having an acid value within the above range, affinity between the white ink layer containing the dispersed particles (PW) and the yellow ink is enhanced, and therefore solid uniformity of a printed matter, and thin line reproducibility and visibility are improved. The acid value of the water-soluble dispersing resin is more preferably 65 to 350 mgKOH/g, still more preferably 100 to 300 mgKOH/g, and particularly preferably 120 to 280 mgKOH/g because the above-described effect is more suitably exhibited.

On the other hand, the water-insoluble dispersing resin preferably has an acid value of 0 to 100 mgKOH/g. By adjusting the acid value within the above range, the water-insoluble dispersing resin is unable to dissolve the aqueous inkjet ink, and dispersion stability of the dispersed particles and discharge stability of the white ink and/or the yellow ink containing the dispersed particles are improved. In addition, when the dispersing resin contained in the dispersed particles (PW) is a water-insoluble resin having an acid value within the above range, affinity for C.I. Pigment Yellow 155 in the yellow ink to be printed later is high, and therefore solid uniformity of a printed matter and thin line reproducibility are improved. The acid value of the water-insoluble dispersing resin is more preferably 1 to 90 mgKOH/g, still more preferably 3 to 80 mgKOH/g, and particularly preferably 5 to 75 mgKOH/g because the above-described effect is more suitably exhibited.

Note that, when a dispersion containing a water-insoluble colorant covered with a water-insoluble resin is manufactured using a method C described later, an acid value (residual acid value) of the dispersing resin after a crosslinking treatment is preferably 5 to 140 mgKOH/g, more preferably 10 to 120 mgKOH/g, and particularly preferably 20 to 90 mgKOH/g. When a certain amount of acid groups remains, dispersed particles can stably exist in the ink, and discharge stability is improved, and furthermore, affinity for C.I. Pigment Yellow 155 in the yellow ink to be printed later is enhanced, and solid uniformity of a printed matter and thin line reproducibility are improved. When the ink contains a polyolefin resin described later, affinity for the polyolefin resin is also enhanced, whereby solid uniformity of the printed matter and thin line reproducibility are particularly excellent regardless of the type of substrate.

The "acid value( of a resin)" in the present application is the number of mg of potassium hydroxide required to neutralize acid groups contained in 1 g of the resin. In the present application, when an acid group is not involved in reaction in obtaining a resin (for example, a (meth)acrylic resin, a urethane resin, or a urethane-(meth)acrylic-based resin), a theoretical value calculated with the following method is used as the acid value of the resin. On the other hand, when an acid group is involved in reaction in obtaining a resin (for example, a polyester resin), a measured value measured with the following method is used as the acid value of the resin.

As an example of a method for calculating the theoretical value of the acid value, when a resin contains a polymerizable monomer which has na acid groups with valency of va in one molecule and has a molecular weight of Ma in an amount of Wa% by mass in polymerizable monomers configuring the resin, an acid value of the resin is obtained by the following formula (7).

$$(\text{Acid value}) \ (\text{mgKOH/g}) = \{(\text{va} \times \text{na} \times \text{Wa}) \div (100 \times \text{Ma})\} \times 56.11 \times 1000 \qquad (7)$$

In the above formula (7), 56.11 is the molecular weight of potassium hydroxide.

On the other hand, the measured value of the acid value is measured by, for example, a potentiometric titration method. Specifically, a resin is dissolved in an ethanol/toluene mixed solvent, then titration is performed with a 0.1 mol/L potassium hydroxide-ethanol solution using "automatic potentiometric titrator AT-610" manufactured by Kyoto Electronics Manufacturing Co., Ltd., and an acid value is calculated from an obtained titration curve.

When a water-soluble resin having an acid group is used as the dispersing resin, the acid group in the dispersing resin is preferably neutralized with a base in order to increase solubility in the white ink and the yellow ink and to improve dispersion stability of the dispersed particles and discharge stability of the white ink and the yellow ink. Examples of the base for neutralizing the dispersing resin include: alkanolamines such as diethanolamine, triethanolamine, or N-methyldiethanolamine; ammonia water; alkali metal hydroxides such as lithium hydroxide, sodium hydroxide, or potassium hydroxide; and alkali metal carbonates such as sodium carbonate, sodium hydrogen carbonate, or potassium carbonate.

In each of the dispersed particles (PY) and the dispersed particles (PW), the weight average molecular weight of the dispersing resin is preferably in a range of 1,000 to 200,000, and more preferably in a range of 5,000 to 100,000. When the weight average molecular weight is within the above ranges, the resin particles can stably maintain a dispersed state in water. In particular, when the weight average molecular weight is 1,000 or more, the dispersing resin can hardly dissolved in a water-soluble organic solvent or the like existing in the white ink and the yellow ink, and therefore dispersion stability of the dispersed particles is improved. As a result, discharge stability of the white ink and the yellow ink is improved. When the weight average molecular weight is 200,000 or less, the viscosity of the white ink and the yellow ink is kept low, whereby discharge stability from an inkjet head is also excellent, and stable printing can be performed over a long period of time.

In the present application, the weight average molecular weight of the resin is a polystyrene equivalent value that can be measured, for example, using a method according to JIS K 7252. Examples of a specific measurement method include a method where a measurement is performed using a GPC measurement apparatus (HLC-8120GPC manufactured by Tosoh Corporation) equipped with a TSKgel column manufactured by Tosoh Corporation and an RI detector, and using THF as a developing solvent.

Although details will be described later, when the dispersed particles contain a dispersing resin, the dispersing resin may also have a function as a binder resin. In this case, the blend amount of the dispersing resin is preferably 40 to 250% by mass with respect to a water-insoluble colorant. By adjusting the blend amount of the dispersing resin within the above range, not only the above-described function by the dispersing resin, that is, improvement of the opacifying property of the white ink layer, improvement of the uniformity of a solid printed matter and the thin line reproducibility, and improvement of the discharge stability of the yellow ink can be achieved, but also substrate adhesion and abrasion resistance of a printed matter can be improved. The amount is more preferably 60 to 220% by mass, and particularly preferably 75 to 200% by mass, from the viewpoint of further improving these effects.

On the other hand, when a dispersing resin having no function as a binder resin is used, the blend amount of the dispersing resin is preferably 1 to 60% by mass with respect to a water-insoluble colorant. By setting the blend amount of the dispersing resin within the above range, in addition to achievement of the above-described function by the dispersing resin, when the dispersed particles (PW) satisfy the above amount requirement, discharge stability of the white ink containing the dispersed particles (PW) is also improved. In particular, a ratio of the content of the dispersing resin to the content of the water-insoluble colorant is more preferably 2 to 50% by mass, still more preferably 3 to 40% by mass, and most preferably 4 to 35% by mass, from the viewpoint of improving discharge stability of the white ink or the yellow ink.

(Inorganic white pigment)

As the inorganic white pigment contained in the white ink of the present invention, any conventionally known inorganic compound can be used. Specific examples thereof include titanium oxide (density: 3.8 to 4.2 [g/cm$^3$]), zinc oxide (density: 5.6 [g/cm$^3$]), zirconium oxide (density: 5.9 [g/cm$^3$]), silicon oxide (silica) (density: 2.2 to 2.7 [g/cm$^3$]), and lithopone (mixture of barium sulfate and zinc sulfide) (density 4.1 to 4.4 g/cm$^3$). Note that the inorganic white pigments listed above may be formed into hollow particles from the viewpoint of improving the opacifying property of the white ink layer and adjusting the density of the dispersed particles (PW) so as to satisfy the above-described formulas (3) and (4).

Among those listed above, as the inorganic white pigment, titanium oxide and/or zinc oxide is preferably used, and titanium oxide is particularly preferably used, from the viewpoint of the excellent opacifying property of the white ink layer and ease of manufacturing the dispersed particles (PW) so as to satisfy the above-described formulas (1) to (4).

A primary particle size of the inorganic white pigment, that is, a particle size of the inorganic white pigment itself is preferably 150 to 320 nm, more preferably 180 to 300 nm, and particularly preferably 200 to 280 nm. When the primary particle size of the inorganic white pigment is within the above ranges, the dispersed particles (PW) satisfying the above-described formulas (1) to (4) are easily manufactured. In addition, since light incident on the white ink layer is likely to be diffusely reflected by the inorganic white pigment having the above primary particle size, the opacifying property of the inorganic white pigment is also favorable. Furthermore, discharge stability of the white ink tends to be improved.

Note that the "primary particle size" in the present application is obtained by photographing a scanning electron microscope (SEM) image of target particles, measuring diameters (equivalent circle diameters) of 100 particles randomly selected from the image, and calculating an average value thereof.

An oil absorption amount of the inorganic white pigment is preferably 10 to 30 mL/100 g, more preferably 12 to 25 mL/100 g, and particularly preferably 15 to 22 mL/100 g.

When the dispersed particles (PW) are dispersed using the method (1) among the methods listed above, by using an inorganic white pigment having an oil absorption amount within the above range, dispersibility by the dispersing resin is improved, and dispersion stability of the inorganic white pigment, discharge stability of the white ink, and the opacifying property of the white ink layer are improved. As a result, uniformity of a solid printed matter, and thin line reproducibility and visibility are also improved.

Note that the "oil absorption amount" in the present application is a value measured using a method described in JIS K 5101-13-1.

The surface of the inorganic white pigment (preferably titanium oxide) is preferably treated with at least alumina from the viewpoint of enhancing stability during dispersion, enhancing discharge stability of the white ink, and obtaining a white ink layer having a high opacifying property. In doing so, a surface treatment amount with alumina is preferably 0.2 to 7% by mass, and particularly preferably 0.5 to 5% by mass with respect to the total mass of the inorganic white pigment (preferably titanium oxide) from the viewpoint of suitably exhibiting the above-described effect.

When the dispersed particles (PW) form the state of (1-2) or (1-3) among the forms listed above, it is suitable for the surface of the inorganic white pigment to be further treated with an organic compound in addition to alumina. By treating the surface of the inorganic white pigment with an organic compound, affinity between the dispersing resin and the inorganic white pigment is enhanced, and dispersion stability and discharge stability are improved. In addition, by covering the surface of the inorganic white pigment sufficiently and firmly with the dispersing resin, the affinity between the white ink and a highly hydrophobic substrate and the affinity between the white ink layer and the yellow ink are improved, and the opacifying property of the white ink layer and uniformity of a solid printed matter, and thin line reproducibility and visibility are improved.

Specific examples of the organic compound include a polyhydric alcohol, an organosilicon compound, an alkanolamine, a higher fatty acid, a metal salt of a higher fatty acid, and an organometallic compound.

Examples of the polyhydric alcohol include trimethylolethane, trimethylolpropane, tripropanolethane, hexanetriol, pentaerythritol, and sorbitol. Examples of the organosilicon compound include: organosilanes such as an aminosilane compound, an epoxysilane compound, a (meth)acrylsilane compound, a vinylsilane compound, a mercaptosilane compound, an alkylsilane compound, a halogenated alkylsilane compound, and a phenylsilane compound; organopolysiloxanes such as polydimethylsiloxane, poly(methylhydro) siloxane, alkyl modified products thereof, epoxy modified products thereof, (meth)acrylic modified products thereof, and polyether modified products thereof; and organosilazanes such as alkyl disilazane and alkyl trisilazane. Examples of the higher fatty acid include stearic acid and lauric acid. Examples of the metal salt of the higher fatty acid include magnesium salts and zinc salts of stearic acid and lauric acid. Examples of the organometallic compound include a titanium-based coupling agent, an aluminum-based coupling agent, and a zirconium-based coupling agent.

Note that examples of the alkanolamine are the same as examples of an alkanolamine-based solvent that can be used as a water-soluble organic solvent described later.

When the surface of the inorganic white pigment is treated with an organic compound, it is preferable to use one or more selected from the group consisting of a polyhydric alcohol, an organosilicon compound, and an alkanolamine as the organic compound from the viewpoint of enhancing affinity between the dispersing resin and the inorganic white pigment and improving dispersion stability and discharge stability. In addition, the amount of surface treatment with the organic compound is preferably 0.03 to 3% by mass, more preferably 0.06 to 2% by mass, and particularly preferably 0.1 to 1.5% by mass with respect to the mass of the inorganic white pigment from the viewpoint of suitably exhibiting the effect of the surface treatment with the organic compound described above, and improving discharge stability of the white ink, an opacifying property of the white ink layer, and uniformity of a solid printed matter, and thin line reproducibility and visibility.

The content of the inorganic white pigment contained in the white ink of the present invention is preferably 4 to 30% by mass, more preferably 6 to 25% by mass, still more preferably 8 to 20% by mass, and particularly preferably 10 to 18% by mass in the white ink. When the content of the inorganic white pigment is within the above ranges, the opacifying property of the white ink layer and discharge stability of the white ink are favorable. As a result, uniformity of a solid printed matter, and thin line reproducibility and visibility are also improved. Note that, as described above, the content of the inorganic white pigment is determined so as to satisfy the above formulas (2) to (4).

(C.I. Pigment Yellow 155)

As described above, the yellow ink of the present invention contains the dispersed particles (PY) containing C.I. Pigment Yellow 155.

As C.I. Pigment Yellow 155, a commercially available product may be used, or a synthesized product may be used. Examples of a method for synthesizing C.I. Pigment Yellow 155 include a method described in Examples of JP 2016-89020 A.

C.I. Pigment Yellow 155 may be a solid solution pigment with another pigment (for example, an organic yellow pigment described later). Note that, when a solid solution pigment is used, the content of C.I. Pigment Yellow 155 in the solid solution pigment is preferably 50% by mass or more, more preferably 70% by mass or more, and particularly preferably 80% by mass or more, from the viewpoint of suitably obtaining the above-described effect of the present invention.

A primary particle size of C.I. Pigment Yellow 155 is preferably 50 to 200 nm, and more preferably 70 to 150 nm. A specific surface area of C.I. Pigment Yellow 155 is preferably 30 to 80 $m^2/g$, and more preferably 40 to 70 $m^2/g$. A yellow ink using C.I. Pigment Yellow 155 having a primary particle size and/or a specific surface area within the above ranges is excellent in discharge stability and also excellent in visibility of a printed matter.

Note that the specific surface area in the present application is a value obtained by a BET method, and can be measured using, for example, "Flowsorb III 2310" manufactured by Shimadzu Corporation.

When the dispersed particles (PY) are dispersed using the method (1) among the methods listed above, by using C.I. Pigment Yellow 155 having a specific surface area within the above ranges, dispersibility by the dispersing resin is improved, and dispersion stability of the C.I. Pigment Yellow 155, discharge stability of the yellow ink, and uniformity of a solid printed matter and visibility are improved.

The content of C.I. Pigment Yellow 155 contained in the yellow ink of the present invention is preferably 1 to 10% by mass, more preferably 2 to 7% by mass, and particularly preferably 1.5 to 4% by mass in the yellow ink. When the content of C.I. Pigment Yellow 155 is within the above ranges, a printed matter excellent in visibility and thin line reproducibility is obtained when C.I. Pigment Yellow 155 is combined with the white ink of the present invention. In addition, discharge stability of the yellow ink tends to be improved. Note that, as described above, the content of the C.I. Pigment Yellow 155 is determined so as to satisfy the above formula (4).

(Other colorant)

When the dispersed particles (PW) and the dispersed particles (PY) are dispersed using the method (1-3) among the methods listed above, the dispersed particles (PW) and the dispersed particles (PY) may contain a colorant other than the inorganic white pigment and a colorant other than C.I. Pigment Yellow 155 (collectively referred to as "other colorant" in the present application), respectively. Specific examples of the colorant that can be used as the other colorant are the same to examples of a colorant that can be used for "other dispersed particles" described later.

When the other colorant is contained in the dispersed particles, the content thereof is preferably 1 to 50% by mass, more preferably 2 to 40% by mass, and particularly preferably 3 to 35% by mass with respect to the content of each of the inorganic white pigment and C.I. Pigment Yellow 155. By setting the blend amount as described above, it is possible to adjust color developability and color tone of the dispersed particles without affecting the above-described effect of the present invention, and the opacifying property of the white ink layer and visibility of a printed matter are improved.

(Colorant derivative)

Each of the dispersed particles (PW) contained in the white ink of the present invention and the dispersed particles (PY) contained in the yellow ink of the present invention may contain a colorant derivative. In particular, when the dispersed particles are dispersed in an aqueous medium using the method (1) or (2) and a colorant derivative having the same partial structure as a water-insoluble colorant contained in the dispersed particles is used, affinity between the water-insoluble colorant and the dispersing resin or a surfactant is significantly improved, and dispersion stability of the dispersed particles and discharge stability of the white ink and the yellow ink containing the dispersed particles are improved. When the dispersed particles (PY) contain a colorant derivative, in addition to the effect described above, the C.I. Pigment Yellow 155 contained in the dispersed particles (PY) is firmly bonded to the dispersing resin and the surfactant, whereby the degree of hydrophobicity of the C.I. Pigment Yellow 155 is prevented, leading to improvement of uniformity of a solid printed matter and thin line reproducibility.

As described above, when a colorant derivative is used, a structure thereof preferably has the same partial structure as a water-insoluble colorant used in combination with the colorant derivative. In addition, a compound having an organic pigment as a basic skeleton and having a substituent introduced into a molecule thereof can be suitably used. As the substituent, for example, a sulfo group, a sulfonate group, a carboxyl group, a carboxylate group, or a phthalimidoalkyl group can be preferably used. Examples of counter cations of a sulfonate group and a carboxylate group include an alkali metal cation, an ammonium ion, a primary ammonium cation, a secondary ammonium cation, a tertiary ammonium cation, and a quaternary ammonium cation.

When a colorant derivative is used, a use amount thereof is preferably 0.05 to 10% by mass, more preferably 0.1 to 5% by mass, and particularly preferably 0.2 to 3% by mass with respect to the content of the water-insoluble colorant. By setting the use amount as described above, the discharge stability, solid uniformity, thin line reproducibility, and the like described above are suitably improved.

(Method for manufacturing dispersed particles)

The dispersed particles (PW), the dispersed particles (PY), and other dispersed particles described later can be manufactured using a conventionally known method.

For example, when a water-soluble resin is used as the dispersing resin, and a water-insoluble colorant (in a case of the dispersed particles (PW), the water-insoluble colorant contains an inorganic white pigment, in a case of the dispersed particles (PY), the water-insoluble colorant contains C.I. Pigment Yellow 155, and in a case of other dispersed particles, the water-insoluble colorant contains a colorant described later) is dispersed using the method (1-1) among the methods listed above, examples of a method for manufacturing a dispersion of dispersed particles containing the water-insoluble colorant include the following method A.

(Method A)

A dispersing resin water-based solution containing a water-soluble dispersing resin, water, and if necessary, a water-soluble organic solvent is prepared in advance. A water-insoluble colorant and, if necessary, a water-soluble organic solvent, a surfactant, an antiseptic, and the like are added to the dispersing resin aqueous solution, and the mixture is mixed and stirred (pre-mixed) and then subjected to a dispersion treatment using a conventionally known dispersing apparatus.

Note that, after the dispersion treatment, centrifugation, filtration, and the like may be performed to remove coarse components. The "water-based solution" in the present application refers to a solution containing an aqueous solvent and a component dispersed and/or dissolved in the aqueous solvent.

When the water-insoluble colorant is dispersed using the method (1-2) among the methods listed above, examples of a method for manufacturing a dispersion of dispersed particles containing the water-insoluble colorant include the following methods B, C, and D.

(Method B)

A water-insoluble dispersing resin is dissolved in an organic solvent, such as methyl ethyl ketone, and the dispersing resin is neutralized as necessary to prepare a dispersing resin solution. Note that the dispersing resin solution may contain water. A water-insoluble colorant, water, and, if necessary, a water-soluble organic solvent, a surfactant, an antiseptic, and the like are added to the pigment dispersing resin solution, and the mixture is mixed and stirred (pre-mixed) and then subjected to a dispersion treatment using a conventionally known dispersing apparatus. Thereafter, the organic solvent is distilled off by distillation under reduced pressure, and if necessary, centrifugation, filtration, and the like are performed to remove coarse components.

Note that, after the organic solvent is distilled off, a crosslinking treatment by addition of a crosslinking agent (for example, a polyepoxy compound or a polycarbodiimide compound) may be performed. After the crosslinking treatment, coarse components may be removed (again).

(Method C)

A dispersing resin water-based solution containing a water-soluble dispersing resin having a carboxy group, water, and if necessary, a water-soluble organic solvent is prepared in advance. A water-insoluble colorant and, if necessary, a water-soluble organic solvent, a surfactant, an antiseptic, and the like are added to the dispersing resin aqueous solution, and the mixture is mixed and stirred (pre-mixed) and then subjected to a dispersion treatment using a conventionally known dispersing apparatus. Thereafter, the water-soluble dispersing resin is water-insolubilized by a crosslinking treatment by addition of a crosslinking agent (for example, a polyepoxy compound or a polycarbodiimide compound).

Note that, after the crosslinking treatment, centrifugation, filtration, and the like may be performed to remove coarse components.

(Method D)

A water-insoluble colorant is added to a mixture of hydrophobic monomers configuring a dispersing resin, and the mixture is mixed and stirred and then subjected to a dispersion treatment using a conventionally known dispersing apparatus to prepare a monomer mixture in which the water-insoluble colorant is dispersed. Next, the monomer mixture in which the water-insoluble colorant is dispersed is mixed with an emulsifier aqueous solution prepared in advance, and a hydrophobic material (hydrophobe) is further added thereto to disperse the monomer mixture in water (O/W type mini-emulsion). Thereafter, a polymerization initiator is added to polymerize the monomers.

Note that, after the polymerization, centrifugation, filtration, and the like may be performed to remove coarse components.

When the water-insoluble colorant is dispersed using the method (1-3) among the methods listed above, examples of a method for manufacturing a dispersion of dispersed particles containing the water-insoluble colorant include the following method E in addition to the above-described method D.

(Method E)

Using a planetary mixer, a Henschel mixer, a Banbury mixer, a kneader, or the like, a water-insoluble colorant, a dispersing resin, and if necessary, water, a water-soluble organic solvent, a surfactant, and the like are mixed (kneaded) such that a solid content concentration is 50% by mass or more, and then if necessary, melt kneading is further performed using a twin-screw extruding kneader or the like. Thereafter, water, and if necessary, a water-soluble organic solvent, a surfactant, an antiseptic, and the like are mixed with the obtained kneaded product, and if necessary, a pulverization treatment is further performed using a conventionally known wet pulverizing apparatus or dispersing apparatus.

Note that, after the (melting) kneading treatment, the obtained kneaded product may be pulverized. In addition, after mixing the kneaded product with water or after the subsequent pulverization treatment, centrifugation, filtration, and the like may be performed to remove coarse components.

(Other dispersed particles)

In addition to the dispersed particles (PW), the white ink of the present invention may contain dispersed particles containing a water-insoluble colorant other than an inorganic white pigment. In addition to the dispersed particles (PY), the yellow ink of the present invention may contain dispersed particles containing a water-insoluble colorant other than C.I. Pigment Yellow 155.

Note that, in the present application, dispersed particles other than the dispersed particles (PW) contained in the white ink are referred to as "dispersed particles (P2W)", and dispersed particles other than the dispersed particles (PY) contained in the yellow ink are referred to as "dispersed particles (P2Y)". In addition, the dispersed particles (P2W) and the dispersed particles (P2Y) are collectively referred to as "other dispersed particles".

Examples of the water-insoluble colorant that can be used for the dispersed particles (P2W) include: an organic white pigment such as hollow resin particles, solid (non-hollow) resin particles, or an alkylene bismelamine compound; a fluorescent pigment such as a fluorescent dye-resin solid solution or a fluorescent lumogen-based pigment; an organic blue pigment; an organic violet pigment; and an organic green pigment. Examples of the water-insoluble colorant that can be used for the dispersed particles (P2Y) include: an organic yellow pigment (excluding C.I. Pigment Yellow 155); an organic red pigment; an organic orange pigment; and an organic green pigment.

Furthermore, specific examples thereof include the following.

Examples of the organic blue pigment include C.I. Pigment Blue 15, 15:3, 15:4, 15:6, 16, 60, 64, and 79.

Examples of the organic violet pigment include C.I. Pigment Violet 19, 23, 29, 32, 36, 37, 42, and 50.

Examples of the organic green pigment include C.I. Pigment Green 7, 10, 36, and 48.

Examples of the organic yellow pigment include C.I. Pigment Yellow 1, 2, 3, 5, 12, 13,14, 16, 17, 24, 73, 74, 83, 87, 93, 94, 95, 97, 98, 109, 110, 111, 112, 120, 126, 127, 128, 129, 137, 138, 139, 147, 150, 151, 154, 166, 167, 168, 170, 180, 185, and 213.

Examples of the organic red pigment include C.I. Pigment Red 2, 5, 7, 9, 12, 17, 22, 23, 31, 48:1, 48:2, 48:3, 48:4, 49:1, 49:2, 57:1, 57:2, 112, 122, 123, 146, 147, 149, 150, 166, 168, 170, 171, 175, 176, 177, 178, 184, 188, 202, 207, 209, 254, 255, 260, 264, 266, 269, and 282.

Examples of the organic orange pigment include C.I. Pigment Orange 1, 2, 3, 5, 7, 13, 14, 15, 16, 22, 34, 36, 38, 40, 43, 47, 48, 49, 51, 52, 53, 60, 61, 62, 64, 65, 66, 69, 71, and 73.

Note that solid solution pigments may be used as the organic blue pigment, the organic violet pigment, the organic green pigment, the organic yellow pigment, the organic red pigment, and the organic orange pigment listed above.

By containing the dispersed particles (P2W) including the organic white pigment, the fluorescent pigment, and the like listed above in the white ink of the present invention, the opacifying property of a layer formed of the white ink is improved. In addition, when the white ink is printed on a highly hydrophobic substrate, the white ink layer tends to be flat and smooth, and therefore solid uniformity of a printed matter and thin line reproducibility are improved. In this case, the content of the dispersed particles (P2W) contained in the white ink is preferably 1 to 40% by mass, and particularly preferably 2 to 30% by mass with respect to the content of the dispersed particles (PW) contained in the white ink from the viewpoint of suitably exhibiting the above-described effect.

In addition, by containing the organic blue pigment, the organic violet pigment, the organic green pigment, and the like listed above in the white ink of the present invention, a layer formed of the white ink has a white color with a blue tint, and color beauty of the white ink layer is improved. In addition, since the above pigment exhibits a color opposite to a yellow color, visibility and thin line reproducibility of a printed matter are significantly improved. In this case, the content of the dispersed particles (P2W) contained in the white ink is preferably 0.05 to 10% by mass, and particularly preferably 0.1 to 5% by mass with respect to the content of the dispersed particles (PW) contained in the white ink from the viewpoint of suitably exhibiting the above-described effect.

On the other hand, by inclusion of the dispersed particles (P2Y) containing the organic yellow pigment (excluding C.I. Pigment Yellow 155), the organic red pigment, the organic orange pigment, and the organic green pigment listed above in the yellow ink of the present invention, the color of the yellow ink can be adjusted to a suitable color, and visibility, color beauty, color reproducibility, thin line reproducibility, and the like of a printed matter can be improved. The content of the dispersed particles (P2Y) contained in the yellow ink is preferably 2 to 60% by mass, more preferably 5 to 50% by mass, and particularly preferably 10 to 40% by mass with respect to the content of the dispersed particles (PY) contained in the yellow ink from the viewpoint of suitably exhibiting such an effect.

[Constituent material other than dispersed particles]

Subsequently, constituent materials other than the dispersed particles (PW) contained in the white ink of the present invention and constituent materials other than the dispersed particles (PY) contained in the yellow ink of the present invention will be described in detail below. Note that suitable material types, specifications, blend amounts, and the like of each constituent material described below are common to the white ink and the yellow ink unless otherwise specified.

<Binder resin>

Each of the white ink of the present invention and the yellow ink of the present invention may contain a binder resin. The "binder resin" in the present application refers to a resin having a function of bringing a layer formed of an aqueous inkjet ink into close contact with a substrate and/or a function of imparting abrasion resistance, water resistance, chemical resistance (solvent resistance, acidic solution resistance, basic solution resistance, and the like), and the like to the layer.

As the binder resin, a water-soluble resin may be used, resin particles may be used, or both may be used in combination. Note that the "resin particles" in the present application are one form of the water-insoluble resin described above, and refer to those having a volume-based median diameter (D50) of a water mixed liquid of a target resin of 5 to 1,000 nm as measured using a dynamic light scattering particle size distribution analyzer (for example, Nanotrac UPA-EX150 manufactured by MicrotracBEL Corporation).

On the other hand, even when a water-soluble resin is added as a binder resin to each of the white ink of the present invention and the yellow ink of the present invention, when at least part of the water-soluble resin is adsorbed on each of the dispersed particles (PW) in the white ink and the dispersed particles (PY) in the yellow ink, the adsorbed water-soluble resin is regarded as a resin configuring each of the dispersed particles (PW) and the dispersed particles (PY). In contrast, only a non-adsorbed water-soluble resin is treated as the binder resin.

Among the forms described above, the resin particles can contain a resin having a large weight average molecular weight, can reduce the viscosity of each of the white ink and the yellow ink, and can contain a larger amount of resin while maintaining discharge stability. For these reasons, the resin particles are suitable for enhancing abrasion resistance of the white ink layer and a printed matter. In addition, when a white ink containing the resin particles as a binder resin is printed on a porous substrate, the resin particles function to fill the pores existing in the porous substrate, and therefore solid uniformity of a printed matter and thin line reproducibility are improved.

From the above-described viewpoint, that is, from the viewpoint that ink discharge stability, abrasion resistance of a printed matter, and solid uniformity and thin line reproducibility when printing is performed on a porous substrate can all be at favorable levels, when the resin particles are used as a binder resin, a volume-based median diameter (D50) of the binder resin is preferably 10 to 300 nm, more preferably 20 to 240 nm, and particularly preferably 30 to 180 nm.

In addition, when the resin particles are used as a binder resin, an acid value of the binder resin is preferably 0 to 85 mgKOH/g, more preferably 0 to 60 mgKOH/g, and particularly preferably 0 to 40 mgKOH/g, from the viewpoint of ink discharge stability, and solid uniformity and thin line reproducibility when printing is performed on a porous substrate.

On the other hand, when a water-soluble resin is used, it is preferable to use a resin having a weight average molecular weight within a range of 10,000 to 80,000, it is more preferable to use a resin having a weight average molecular weight of 15,000 to 50,000, and it is particularly preferable to use a resin having a weight average molecular weight of 18,000 to 45,000. It is preferable when the weight average molecular weight is 10,000 or more, as the abrasion resistance of a printed matter can be made suitable. Furthermore, it is preferable when the weight average molecular weight is 80,000 or less, as discharge stability from an inkjet head can be maintained in a suitable state.

The type of the resin used as the binder resin is not particularly limited, and examples thereof include a (meth) acrylic resin, a urethane resin, a (meth)acryl-urethane resin, a vinyl chloride resin, a polyolefin resin, and a polyester resin.

In one embodiment, each of the white ink of the present invention and the yellow ink of the present invention preferably contains a polyolefin resin as the binder resin. Although details are not clear, since the polyolefin resin does not adversely affect dispersion states of the dispersed particles (PW) and the dispersed particles (PY), the discharge stability is unlikely to deteriorate even in an ink containing a certain amount of the polyolefin resin. Furthermore, since the polyolefin resin itself is a material having relatively high hydrophobicity, when a white ink containing a polyolefin resin is printed on a highly hydrophobic substrate, it is considered that part of the polyolefin resin is oriented at an interface with the substrate. As a result, the white ink wet-spreads without forming unevenness on the highly hydrophobic substrate, and the opacifying property of the white ink layer, and solid uniformity of a printed matter and thin line reproducibility are improved. When each of the white ink and the yellow ink contains a polyolefin resin, affinity between the white ink layer on which the white ink is printed and the yellow ink is improved, and solid uniformity and thin line reproducibility are improved.

In particular, in considering further improvement in discharge stability and improvement in solid uniformity and thin line reproducibility when printing is performed on a highly hydrophobic substrate and a porous substrate as described above, it is suitable to use a polyolefin resin having the form of resin particles.

From the viewpoint of suitably exhibiting the above effect, when each of the white ink of the present invention and the yellow ink of the present invention contains a polyolefin resin (preferably polyolefin resin particles), the content thereof is preferably 0.5 to 5% by mass, and particularly preferably 1 to 4% by mass in terms of the solid content equivalent with respect to the total amount of each of the white ink and the yellow ink. In particular, when the content of the polyolefin resin is 5% by mass or less, solid uniformity and thin line reproducibility particularly on a highly hydrophobic substrate are improved.

On the other hand, when each of the white ink of the present invention and the yellow ink of the present invention contains a binder resin separately from a resin contained in the dispersed particles (excluding a case where the binder resin is a polyolefin resin), the content of the binder resin is preferably in a range of 1 to 20% by mass, more preferably in a range of 2 to 15% by mass, and particularly preferably in a range of 3 to 10% by mass in terms of the solid content equivalent with respect to the total amount of each of the white ink and the yellow ink from the viewpoint of suitably exhibiting the above-described effect by blending the binder resin.

Note that, as described later, when the dispersed particles contain a dispersing resin, the dispersing resin may also have a function as a binder resin. Whether or not the dispersing resin also has a function as a binder resin can be determined by whether or not a film obtained by applying a water-based dispersion of the dispersed particles, diluted with water as necessary, to a substrate (for example, a PET substrate) after drying (for example, by leaving the water-based dispersion to stand in an environment of 80°C for two minutes) adheres tightly to the substrate. Adhesion can be evaluated, for example, by sticking a cellophane tape to the dried film, then peeling off the cellophane tape, and visually confirming whether 50% or more of the film remains on the substrate.

The suitable blend amount of the binder resin (excluding a case where the binder resin is a polyolefin resin) described above is an amount in the case where the dispersed particles do not contain a dispersing resin or an amount in the case where the dispersed particles contain a dispersing resin having no function as a binder resin.

When the dispersed particles contain a dispersing resin having a function as a binder resin, the dispersed particles do not have to contain a binder resin different from the dispersing resin (excluding a case where the binder resin is a polyolefin resin) from the viewpoint of improving discharge stability, and when the dispersed particles contain a dispersing resin having a function as a binder resin, the content of the dispersing resin is preferably in a range of 0.2 to 10% by mass, more preferably in a range of 0.5 to 3% by mass, and particularly preferably in a range of 0.8 to 2% by mass in terms of the solid content equivalent with respect to the total amount of each of the white ink and the yellow ink.

<Surface additive>

Each of the white ink of the present invention and the yellow ink of the present invention preferably contains a surface additive. The surface additive can be used for the purpose of ensuring wet-spreadability on the substrate and the white ink layer by adjusting surface tension, and improving the opacifying property of the white ink layer, and solid uniformity of a printed matter, thin line reproducibility, and visibility. On the other hand, when the surface tension is too low by adding an excessive amount of the surface additive or when a specific type of surface additive is used, a nozzle surface of the inkjet head is wetted by the aqueous inkjet ink, and not only discharge stability is impaired, but also the solid uniformity and thin line reproducibility may be adversely affected.

Note that, in the present application, the surface additive contained in the white ink is collectively referred to as "surface additive (AW)", and the surface additive contained in the yellow ink is collectively referred to as "surface additive (AY)".

The white ink of the present invention and the yellow ink of the present invention suitably use a siloxane-based and/or acetylene diol-based surface additive as the surface additive from the viewpoint of solving the above problems and improving discharge stability, solid uniformity of a printed matter, and thin line reproducibility. Although the cause is unclear, a siloxane-based and/or acetylene diol-based surface additive has a suitable orientation rate to an interface as compared with other surface additives, and thus, the following is presumed. That is, the discharge stability of the white ink and the yellow ink, the wet-spreadability of the white ink on the substrate, and the wet-spreadability of the yellow ink on the white ink layer improve, and furthermore, the opacifying property of the white ink layer, and solid uniformity of a printed matter, thin line reproducibility, and visibility also improve; and adhesion of the white ink layer and a printed matter with respect to a highly hydrophobic substrate is reinforced by chemical interaction via the siloxane-based and/or acetylene diol-based surface additive.

When each of the surface additive (AW) and the surface additive (AY) contains a siloxane-based and/or acetylene diol-based surface additive in order to improve the opacifying property of the white ink layer, and solid uniformity of a printed matter, thin line reproducibility, and visibility, the total content of each of the siloxane-based surface additives and the acetylene diol-based surface additives is preferably 0.2 to 4% by mass, more preferably 0.4 to 3.5% by mass, still more preferably 0.7 to 3.2% by mass, and particularly preferably 1 to 3% by mass with respect to the total amount of the ink.

In the present application, the "surface additive" refers to a compound having a hydrophilic moiety and a hydrophobic moiety in a molecular structure thereof, and capable of adjusting surface tension of the added white ink and yellow ink. For example, when a difference in surface tension is 3 mN/m or more between an aqueous inkjet ink to which an amount of 1.0% by mass in terms of outer ratio of the target compound is added and an aqueous inkjet ink to which the compound is not added, the above compound is a "surface additive" in the present application.

Note that static surface tension in the present application refers to surface tension measured by a Wilhelmy method under an environment of 25°C, and can be measured with a platinum plate, for example, using CBVP-Z manufactured by Kyowa Interface Science Co., Ltd.

Examples of the acetylene diol-based surface additive include 2,4,7,9-tetramethyl-5-decyne-4,7-diol, 2,5,8,11-tetramethyl-6-dodecyne-5,8-diol, hexadeca-8-yne-7,10-diol, 6,9-dimethyl-tetradeca-7-yne-6,9-diol, 7,10-dimethylhexadeca-8-yne-7,10-diol, and ethylene oxide adducts thereof and/or propylene oxide adducts thereof, but are not limited thereto.

Among these compounds, one or more selected from the group consisting of an ethylene oxide adduct and/or a propylene oxide adduct of 2,4,7,9-tetramethyl-5-decine-4,7-diol and an ethylene oxide adduct of 2,5,8,11-tetramethyl-6-dodecine-5,8-diol can be particularly suitably used from the viewpoint that wet-spreadability of the white ink on a substrate and wet-spreadability of the yellow ink on the white ink layer are favorable. Note that these acetylene diol-based surface additives may be used singly or in combination of two or more types thereof.

Examples of the siloxane-based surface additive include: 8032ADDITIVE, FZ-2104, FZ-2120, FZ-2122, FZ-2162, FZ-2164, FZ-2166, FZ-2404, FZ-7001, FZ-7002, FZ-7006, L-7001, L-7002, SF8427, SF8428, SH3748, SH3749, SH3771M, SH3772M, SH3773M, SH3775M, and SH8400 manufactured by Dow Corning Toray Co., Ltd.;

BYK-331, BYK-333, BYK-345, BYK-346, BYK-347, BYK-348, BYK-349, BYK-3420, BYK-3450, BYK-3451, BYK-3550, BYK-3560, and BYK-3565 manufactured by BYK Japan KK; TEGO Wet 240, TEGO Wet 250, TEGO Wet 260, TEGO Wet 270, TEGO Wet 280, TEGO Glide 410, TEGO Glide 432, TEGO Glide 435, TEGO Glide 440, TEGO Glide 450, TEGO Twin 4000, and TEGO Twin 4100 manufactured by Evonik Industries, Ltd.; KF-351A, KF-352A, KF-353, KF-354L, KF-355A, KF-615A, KF-640, KF-642, KF-643, KF-644, KF-945, KF-6011, KF-6012, KF-6015, KF-6017, KF-6020, KF-6204, and X-22-4515 manufactured by Shin-Etsu Chemical Co., Ltd.; and

SILFACE SAG series manufactured by Nissin Chemical Industry Co., Ltd.

In particular, a siloxane-based surface additive in which one or more ethylene oxide groups and/or propylene oxide groups are introduced into a side chain and/or both terminals of a polydimethylsiloxane chain can be suitably used, and a siloxane-based surface additive in which an ethylene oxide group and/or a propylene oxide group is introduced at least into a side chain can be particularly suitably used from the viewpoint that wet-spreadability of the white ink on a substrate and wet-spreadability of the yellow ink on the white ink layer are favorable. These siloxane-based surface additives may be used singly or in combination of two or more types thereof.

In addition, the siloxane-based surface additive and the acetylene diol surface additive are suitably not very large molecules from the viewpoint of the above-described orientation rate to an interface. Specifically, it is preferable to select a surface additive having a molecular weight of 100 to 6,000, it is more preferable to select a surface additive having a molecular weight of 180 to 4,000, and it is particularly preferable to select a surface additive having a molecular weight of 220 to 3,000. The size of the molecule can also be expressed by viscosity. Specifically, it is preferable to select a surface additive having a kinematic viscosity of 10 to 450 mm$^2$/s at 25°C, it is more preferable to select a surface additive having a kinematic viscosity of 20 to 400 mm$^2$/s at 25°C, and it is particularly preferable to select a surface additive having a kinematic viscosity of 40 to 300 mm$^2$/s at 25°C. Note that the kinematic viscosity can be measured using, for example, an Ubbelohde viscosimeter.

When the siloxane-based surface additive and the acetylene diol surface additive are used in combination, the content of the siloxane-based surface additive is preferably 20 to 500% by mass, more preferably 25 to 400% by mass, and particularly preferably 35 to 300% by mass with respect to 100% by mass of the content of the acetylene diol surface additive. By setting the content ratio within the above-described ranges, solid uniformity of a printed matter and thin line reproducibility are improved, although detailed reasons thereof are unclear.

Each of the surface additive (AW) and the surface additive (AY) may contain a surface additive other than the siloxane-based surface additive and the acetylene diol surface additive as long as the opacifying property of the white ink layer, solid uniformity of a printed matter, and thin line reproducibility and visibility, and discharge stability are not impaired. Examples of the surface additive other than the siloxane-based surface additive and the acetylene diol surface additive include an acrylic surface additive, a fluorine-based surface additive, and a polyoxyalkylene alkyl ether-based surface additive.

The total addition amount of the surface additives is preferably 0.2 to 5% by mass, more preferably 0.4 to 4% by mass, and particularly preferably 0.7 to 3.5% by mass with respect to the total amount of the aqueous inkjet ink. By setting the total addition amount to 0.2% by mass or more, the above-described function of the surface additive can be sufficiently exhibited, and by setting the total addition amount to 5% by mass or less, storage stability and discharge stability of the aqueous inkjet ink can be maintained at a suitable level.

Meawhile, it is suitable to appropriately adjust wet-spreading of the yellow ink on the white ink layer from the viewpoint of achieving both solid uniformity and thin line reproducibility. Specifically, a ratio of the content of the surface additive (AY) to the content of the surface additive (AW) is preferably 0.9 to 1.6, more preferably 1.0 to 1.5, and particularly preferably 1.05 to 1.4. By setting the ratio between the total amounts of the additives of both inks within the above ranges, it is possible to obtain a printed matter excellent in both solid uniformity and thin line reproducibility.

<Water-soluble organic solvent>

Each of the white ink of the present invention and the yellow ink of the present invention preferably contains a water-soluble organic solvent. An aqueous inkjet ink containing a water-soluble organic solvent is excellent in wet-spreadability on a substrate and the white ink layer. Therefore, an opacifying property of the white ink layer, and solid uniformity of a printed matter, and thin line reproducibility and visibility are improved. In addition, storage stability of the white ink and the yellow ink can be made suitable, and as a result, discharge stability is also improved. Note that the "water-soluble organic solvent" in the present application refers to an organic solvent having a solubility of 1% by mass or more in water at 25°C.

The type of the water-soluble organic solvent contained in each of the white ink and the yellow ink is not particularly limited, and any conventionally known water-soluble organic solvent can be used. In particular, it is preferable to use a water-soluble organic solvent containing one or more hydroxyl groups in a molecular structure thereof, and it is particularly preferable to use a glycol monoether-based solvent and/or a polyol-based solvent, from the viewpoint of compatibility and affinity for dispersed particles and components such as a binder resin and a surface additive, which are added as necessary.

Examples of the glycol monoether-based solvent suitably used include diethylene glycol monomethyl ether, diethylene glycol monoethyl ether, diethylene glycol monopropyl ether, diethylene glycol monoisopropyl ether, diethylene glycol monobutyl ether, diethylene glycol monoisobutyl ether, diethylene glycol monohexyl ether, diethylene glycol monoisohexyl ether, diethylene glycol mono-2-ethylhexyl ether, triethylene glycol monomethyl ether, triethylene glycol monoethyl ether, triethylene glycol monobutyl ether, triethylene glycol monoisobutyl ether, tetraethylene glycol monomethyl ether, tetraethylene glycol monoethyl ether, tetraethylene glycol monobutyl ether, propylene glycol monomethyl ether, propylene glycol monoethyl ether, propylene glycol monopropyl ether, propylene glycol monobutyl ether, dipropylene glycol monomethyl ether, dipropylene glycol monoethyl ether, dipropylene glycol monopropyl ether, dipropylene glycol monobutyl ether, tripropylene glycol monomethyl ether, tripropylene glycol monoethyl ether, and tripropylene glycol monobutyl ether.

Examples of the polyol-based solvent suitably used include: alkanediols such as 1,2-ethanediol (ethylene glycol), 1,2-propanediol (propylene glycol), 1,3-propanediol, 1,2-butanediol, 1,3-butanediol, 1,4-butanediol, 2,3-butanediol, 1,2-pentanediol, 1,5-pentanediol, 1,2-hexanediol, 2,2-dimethyl-1,3-propanediol, 2-methyl-1,3-propanediol, 2-ethyl-2-methyl-1,3-propanediol, 3-methyl-1,3-butanediol, 3-methyl-1,5-pentanediol, 2-methyl-2-propyl-1,3-propanediol, 2-methylpentane-2,4-diol, and 2-ethyl-1,3-hexanediol; polyalkylene glycols such as diethylene glycol and dipropylene glycol; and other polyols such as glycerin, 1,2,4-butanetriol, and 1,2,6-hexanetriol.

Among these compounds, it is preferable to select at least one selected from the group consisting of 1,2-propanediol, 1,2-butanediol, 1,3-butanediol, 2,3-butanediol, 1,2-pentanediol, 1,5-pentanediol, 1,2-hexanediol, diethylene glycol monopropyl ether, propylene glycol monomethyl ether, propylene glycol monoethyl ether, propylene glycol monopropyl ether, dipropylene glycol monopropyl ether, and dipropylene glycol monobutyl ether from the viewpoint that both: excellent discharge stability, moisture retention, and drying property of the aqueous inkjet ink; and image quality of a laminate and prevention of delamination from an adjacent layer can be achieved.

In addition to the compounds listed above, examples of the water-soluble organic solvent used include: a monool-based solvent such as ethanol, n-propanol, isopropanol, n-butanol, isobutanol, t-butanol, 3-methoxy-1-butanol, or 3-methoxy-3-methyl-1-butanol; glycol diethers such as diethylene glycol diethyl ether, diethylene glycol ethyl methyl ether, diethylene glycol isopropyl methyl ether, diethylene glycol butyl methyl ether, triethylene glycol dimethyl ether, triethylene glycol butyl methyl ether, and tetraethylene glycol dimethyl ether; a pyrrolidone-based solvent such as 2-pyrrolidone, N-methyl-2-pyrrolidone, N-ethyl-2-pyrrolidone, or 1-(2-hydroxyethyl)-2-pyrrolidone; and an alkanolamine-based solvent such as dimethylethanolamine, 2-amino-2-methyl-1-propanol, diethanolamine, or triethanolamine. Among the compounds listed above, the pyrrolidone-based solvent and the alkanolamine-based solvent are compounds that also function as pH adjusters for the white ink and the yellow ink.

In one embodiment, when each of the white ink of the present invention and the yellow ink of the present invention contains a water-soluble organic solvent, a weighted average value of boiling points of the water-soluble organic solvent and water at 1 atm is preferably 105 to 160°C, more preferably 108 to 150°C, and particularly preferably 110 to 140°C. By adjusting the weighted average value of the boiling points of the water-soluble organic solvent and water within the above ranges, it is easy to achieve both discharge stability, and solid uniformity of a printed matter and thin line reproducibility. Note that the weighted average value of the boiling points at 1 atm is a value obtained by summing up a multiplication value of a boiling point at 1 atm calculated for each of water-soluble organic solvents and water, and a mass ratio to the total amount of the water-soluble organic solvents and water.

The total amount of the water-soluble organic solvents contained in the white ink is preferably 3 to 45% by mass with respect to the total amount of the white ink, and the total amount of the water-soluble organic solvents contained in the yellow ink is preferably 3 to 45% by mass with respect to the total amount of the yellow ink. Furthermore, the total amount is more preferably 5 to 40% by mass, and particularly preferably 8 to 35% by mass, from the viewpoint of discharge stability from an inkjet head, an opacifying property of the white ink layer, and improvement of solid uniformity of a printed matter, and thin line reproducibility and visibility.

<Other components>

In addition to the components described above, additives such as a crosslinking agent, a thermal polymerization initiator, an infrared absorber, an ultraviolet absorber, an antiseptic, and a thickener can be appropriately added to the aqueous inkjet ink as necessary. The addition amount of these additives is suitably 0.01 to 10 % by mass with respect to the total mass of the aqueous inkjet ink.

<Characteristics of white ink and yellow ink>

It is preferable to adjust viscosity of each of the white ink of the present invention and the yellow ink of the present invention at 25°C to 3 to 20 mPa•s. In this viscosity region, stable discharge characteristics are exhibited not only in a head having a frequency of 4 to 10 kHz but also in a head having a high frequency of 10 to 70 kHz. In particular, by setting the viscosity at 25°C to 4 to 10 mPa•s, the ink can be stably discharged even when the ink is used for an inkjet head having a design resolution of 600 dpi or more. Note that the viscosity can be measured using an E-type viscosimeter (TVE25 L-type viscosimeter manufactured by Toki Sangyo Co., Ltd.) using 1 ml of white ink or yellow ink.

In addition, static surface tension at 25°C of each of the white ink of the present invention and the yellow ink of the present invention is preferably 18 to 35 mN/m, and particularly preferably 20 to 32 mN/m, from the viewpoint of obtaining an aqueous inkjet ink that can be stably discharged, and obtaining: a white ink layer excellent in opacifying property; and a printed matter excellent in solid uniformity and visibility. In addition, the static surface tension of the white ink at 25°C is preferably 0.5 to 3 mN/m larger than the static surface tension of the yellow ink at 25°C, and particularly preferably 0.8 to 2.5 mN/m larger than the static surface tension of the yellow ink at 25°C, from the viewpoint of achieving both solid uniformity and thin line reproducibility.

<Method for manufacturing white ink and yellow ink>

The white ink of the present invention and the yellow ink of the present invention containing the above-described components are manufactured, for example, through the following process. Note that the method for manufacturing each of the white ink and the yellow ink is not limited to the following.

(1. Preparation of white ink and yellow ink)

To a dispersion of dispersed particles containing a water-insoluble colorant manufactured using the above-described method, a dispersion of other dispersed particles, water, a binder resin, a surface additive, a water-soluble organic solvent, and the like are appropriately added, and then the mixture is stirred and mixed. Note that, the mixture may be stirred and mixed while being heated in a range of 40 to 100°C as necessary.

(2. Removal of coarse particles)

Coarse particles contained in the mixture are removed using a technique such as filtration separation or centrifugation to obtain a white ink and a yellow ink. As a method of the filtration separation, a conventionally known method can be appropriately used. A filter opening pore diameter is not particularly limited as long as coarse particles, dust, and the like can be removed, but is preferably 0.3 to 5 $\mu$m, and more preferably 0.5 to 3 $\mu$m. When filtration is performed, a single type of filter may be used, or a plurality of types of filters may be used.

<Cyan ink and magenta ink>

The ink set according to the embodiment of the present invention may be formed of only a white ink and a yellow ink, but an aqueous inkjet ink that exhibits a color other than the white ink and the yellow ink can be further used in combination depending on an application. In particular, by using the ink set in combination with a cyan ink and a magenta ink, it is possible to obtain a printed matter particularly excellent in color reproducibility. In addition, by adding a black ink, blackness can be improved, and visibility of characters and the like can be improved.

<Ink-pretreatment liquid set>

The inkjet set according to the embodiment of the present invention can also be used in a form of an ink-pretreatment liquid set by further combining the ink set with a pretreatment liquid containing resin particles. More specifically, a white ink can be printed on a layer (also referred to as a "pretreatment layer" in the present application) formed by applying a pretreatment liquid containing resin particles onto a substrate. When the substrate is a highly hydrophobic substrate, wet-spreadability of the white ink can be enhanced by high affinity between the white ink and the pretreatment layer. As a result, the opacifying property of the white ink layer, and solid uniformity of a printed matter and thin line reproducibility can be improved. Meanwhile, when the substrate is a porous substrate, the resin particles in the pretreatment liquid fill the pores. Therefore, wet-spreadability of the white ink is also improved, and an opacifying property of the white ink layer, and solid uniformity of a printed matter and thin line reproducibility are improved.
In that case, when the dispersed particles (PW) and/or the dispersed particles (PY) contain a dispersing resin, the resin type of the resin particles contained in the pretreatment liquid is preferably the same as the resin type of the dispersing resin. By using the same resin type, affinity between the pretreatment layer and the white ink is improved, and the opacifying property of the white ink layer, and solid uniformity of a printed matter and thin line reproducibility are improved.
When each of the dispersing resin and the resin particles in the pretreatment liquid has an aromatic ring structure, a difference between the amount of monomers having an aromatic ring structure to the total amount of monomers configuring the dispersing resin, and the amount of monomers having an aromatic ring structure to the total amount of monomers configuring the resin particles is preferably 30% by mass or less, more preferably 20% by mass or less, and particularly preferably 10% by mass or less. On the other hand, when the dispersed particles (PW) and/or the dispersed particles (PY) contain a dispersing resin and the dispersing resin does not have an aromatic ring structure, the amount of aromatic ring structures to the total amount of resins configuring the resin particles in the pretreatment liquid is preferably 15% by mass or less (may be 0% by mass), more preferably 10% by mass or less (may be 0% by mass), and particularly preferably 5% by mass or less (may be 0% by mass). By having about the same amount of aromatic ring structures, affinity between the pretreatment layer and the white ink is improved, and the opacifying property of the white ink layer, and solid uniformity of a printed matter and thin line reproducibility are improved.

Furthermore, when the dispersed particles (PW) and/or the dispersed particles (PY) contain a water-insoluble dispersing resin, the difference between an acid value of the resin particles and an acid value of each dispersing resin is preferably 50 mgKOH/g or less, more preferably 30 mgKOH/g or less, and particularly preferably 20 mgKOH/g or less. By satisfying the above conditions, affinity between the pretreatment layer and the white ink is improved, and the opacifying property of the white ink layer, and solid uniformity of a printed matter and thin line reproducibility are improved.

In addition, the pretreatment liquid suitably contains an aggregating agent in addition to the resin particles. By applying the pretreatment liquid containing an aggregating agent onto a substrate, a layer (ink-aggregating pretreatment layer) that intentionally aggregates a solid component contained in the white ink and the yellow ink can be formed. Then, by impact of the white ink and the yellow ink on the ink aggregation layer, bleeding and color unevenness between ink droplets can be prevented, and solid uniformity of a printed matter and thin line reproducibility can be significantly improved.

The "aggregating agent" in the present specification means a component that is contained in the white ink and the yellow ink and that can break a dispersed state of dispersed particles and aggregate the dispersed particles. The aggregating agent that can be suitably used in the pretreatment liquid combined with the white ink of the present invention and the yellow ink of the present invention preferably contains one or more selected from a metal salt and a cationic polymer compound from the viewpoint of suitably exhibiting the above-described effect of the aggregating agent. In particular, a metal salt is preferably used as the aggregating agent, and the aggregating agent particularly preferably contains a salt of a polyvalent metal ion selected from the group consisting of $Ca^{2+}$, $Mg^{2+}$, and $Al^{3+}$ from the viewpoint of particularly improving solid uniformity of a printed matter and thin line reproducibility. When a metal salt is used as the aggregating agent, the content thereof is preferably 0.5 to 25% by mass, and particularly preferably 1 to 20% by mass with respect to the total amount of the pretreatment liquid.

A water-soluble organic solvent, a surface additive, and the like can be appropriately added to the pretreatment liquid in addition to the above. Materials that can be specifically used are the same as those in the case of the white ink and the yellow ink.

Static surface tension of the pretreatment liquid at 25°C is preferably 20 to 45 mN/m, and more preferably 23 to 40 mN/m, from the viewpoint of improving an opacifying property of the white ink layer, and solid uniformity of a printed matter and thin line reproducibility when the pretreatment liquid is used in combination with the white ink and the yellow ink. The static surface tension is particularly preferably 25 to 37 mN/m. Furthermore, the static surface tension of the pretreatment liquid at 25°C is preferably 1 to 10 mN/m larger than the static surface tension of the white ink at 25°C, and particularly preferably 2 to 8 mN/m larger than the static surface tension of the white ink at 25°C, from the viewpoint of an opacifying property of the white ink layer.

<Method for manufacturing printed matter>

Examples of a method for manufacturing a printed matter using the white ink of the present invention and the yellow ink of the present invention include a method in which a step (step 1) of discharging the white ink of the present invention from an inkjet head onto a substrate, a step (step 2) of discharging the yellow ink of the present invention from an inkjet head onto a layer (white ink layer) formed by printing the white ink, and a step (step 3) of drying the white ink and the yellow ink on the substrate are performed in this order.

As an inkjet head scanning method in the steps 1 and 2 (at the time of discharging the white ink and the yellow ink), either a single pass method of discharging ink to a substrate only once to perform recording or a serial method of performing discharge and recording while reciprocating a short shuttle head for scanning in an orthogonal direction to the conveyance direction of the substrate may be adopted. Note that, in the case of the serial method, it is necessary to adjust a discharge timing in consideration of movement of the inkjet head, and displacement of an impact position is likely to occur. Therefore, when the white ink and the yellow ink are printed, the single pass method, particularly a method in which a substrate is caused to pass under a fixed inkjet head is preferably used.

An inkjet head driving method is also not particularly limited, and a known method, for example, a drop on-demand method (pressure pulse method) using a vibration pressure of a piezoelectric element, or a thermal inkjet (bubble jet (registered trademark)) method in which bubbles are formed by heating an ink and a generated pressure is used can be used.

The amount of ink droplets discharged from the inkjet head is preferably 0.2 to 30 picoliters, and more preferably 1 to 20 picoliters, from the viewpoint of a large effect of reducing a drying load and improvement of solid uniformity of a printed matter and thin line reproducibility.

Examples of a drying method used in the step 3 include a heating drying method, a hot air drying method, an infrared ray (for example, an infrared ray having a wavelength of 700 to 2500 nm) drying method, a microwave drying method, and a drum drying method.

**In** the present invention, a drying temperature is preferably 35 to 100°C when the heating drying method is adopted from the viewpoint of preventing unevenness of the white ink layer by preventing bumping of a liquid component in the ink, and obtaining a printed matter excellent in solid uniformity and visibility. **In** addition, when the hot air drying method is adopted, a hot air temperature is preferably 50 to 250°C. From the same viewpoint, when the infrared ray drying method is adopted, 50% or more of an integrated value of the total output of the infrared ray used for infrared irradiation is preferably present in a wavelength region of 700 to 1500 nm.

The drying methods may be used singly, or the plurality of drying methods may be used continuously or may be used simultaneously in combination. For example, by using the heating drying method and the hot air drying method in combination, the ink can be dried more quickly than when each of the methods is used singly.

Note that a step of drying the white ink layer may be provided between the steps 1 and 2. At this time, the white ink layer on the substrate may be completely dried using the same method to the above-described drying method used in step 3. In addition, the step 2 may be performed in a state where a certain amount of water (and water-soluble organic solvent) remains in the white ink layer. In this case, the above method may be used after energy applied to the white ink layer is adjusted, or a room-temperature air drying method or a visible light drying method may be adopted.

<Substrate>

In manufacturing a printed matter using the ink set according to the present invention, printing can be suitably performed on a conventionally known substrate, and as described above, printing can be particularly suitably performed on a highly hydrophobic substrate and a porous substrate. Specific examples of the highly hydrophobic substrate include a thermoplastic resin substrate such as a polyvinyl chloride sheet, a PET film, a polypropylene film, a polyethylene film, a nylon film, or a polystyrene film, a metal substrate such as an aluminum foil, and a glass substrate. Specific examples of the porous substrate include a non-coated paper substrate such as high quality paper, medium paper, PPC paper, groundwood paper, kraft paper, or recycled paper, and a non-coated paperboard substrate such as liner paper, Manila cardboard, or no-coated cardboard.

The substrates listed above may be transparent, translucent, or opaque. However, in the present invention, since a white ink capable of manufacturing a white ink layer having a high opacifying property is used, the substrate is preferably transparent or translucent, or opaque and non-white. In addition, a laminate of two or more types of the substrates listed above may be used, or a release adhesive layer or the like may be provided on a side opposite to the printed surface of the white ink and the yellow ink. Note that an adhesive layer or the like may be provided on the printed surface after the printed matter is prepared. In addition, the form of the substrate used in the printing according to the present invention may be a roll form or a sheet form. In addition, it is also preferable to subject the highly hydrophobic substrate exemplified above to a surface modification method such as a corona treatment or a plasma treatment before applying the white ink (or a pretreatment liquid when the pretreatment liquid is used in combination) from the viewpoint of easily improving the opacifying property of the white ink layer, and solid uniformity of a printed matter and thin line reproducibility by enhancing affinity with the white ink and the yellow ink.

Examples

Hereinafter, the ink set according to the embodiment of the present invention will be described more specifically with reference to Examples and Comparative Examples. Note that, in the following description, "parts" and "%" represent "parts by mass" and "% by mass", respectively, unless otherwise specified.

[Manufacture of dispersed particles]

<Preparation of white inorganic pigment>

As a white inorganic pigment used in the present Examples, white inorganic pigments 1 to 12 presented in Table 1 below were prepared.

[Table 1]

Table 1

| White inorganic pigment No. | Type of inorganic compound | Primary particle size (nm) | Surface treatment | Alumina treatment amount |
|---|---|---|---|---|
| 1 | Titanium oxide | 160 | Alumina | 2.0% |
| 2 | Titanium oxide | 180 | (none) | --- |
| 3 | Titanium oxide | 210 | Alumina | 2.5% |
| 4 | Titanium oxide | 210 | Alumina, Silica, and Organosilicon compound | 0.5% |
| 5 | Titanium oxide | 250 | Alumina | 3.0% |
| 6 | Titanium oxide | 250 | Alumina and Silica | 2.5% |
| 7 | Titanium oxide | 250 | Alumina, Silica, and Polyhydric alcohol | 2.5% |
| 8 | Titanium oxide | 250 | Alumina and Zirconia | 3.0% |
| 9 | Titanium oxide | 250 | Alumina and Polyhydric alcohol | 25% |
| 10 | Titanium oxide | 270 | (none) | ---- |
| 11 | Titanium oxide | 300 | Alumina | 5.0% |
| 12 | Zinc oxide | 280 | Alumina | 3.0% |

<Manufacture and preparation of dispersing resin>

(Manufacture of water-based solutions of dispersing resins 1 to 12)

Into a reaction vessel equipped with a gas introduction tube, a thermometer, a condenser, and a stirrer, 93.4 parts of butanol was charged, and replacement with a nitrogen gas was performed. The inside of the reaction vessel was heated to 110°C, and a mixture of 30 parts of acrylic acid, 35 parts of styrene, 35 parts of lauryl methacrylate as polymerizable monomers, and 6 parts of V-601 (manufactured by Wako Pure Chemical Industries, Ltd.) as a polymerization initiator were added dropwise thereto over two hours to perform a polymerization reaction. After completion of the dropwise addition, the reaction was continued at 110°C for three hours, then 0.6 parts of V-601 was added, and the reaction was further continued at 110°C for one hour. Thereafter, the reaction system was cooled to room temperature, then 11.7 parts of potassium hydroxide was added thereto to neutralize the reaction system, and then 100 parts of water was added thereto. Thereafter, the mixed solution was heated to 100°C or higher to distill off butanol, and then the solid content concentration was adjusted to 30% using water, thereby obtaining a water-based solution of a dispersing resin 1 which is a water-soluble resin. Note that a weight average molecular weight of the dispersing resin 1 measured using the method described above was 16,000, and an acid value calculated using formula (6) was 234 (mgKOH/g).

In addition, water-based solutions of dispersing resins 2 to 12 (each having a solid content concentration of 30%), which are all water-soluble resins, were manufactured using the same method to that in the case of the dispersing resin 1 except that the type and amount of the polymerizable monomer used in the manufacture of the dispersing resin and the amount of potassium hydroxide added after the polymerization reaction were changed as presented in Table 2 below. Note that, in Table 2 below, weight average molecular weights and acid values of the dispersing resins 1 to 12 are also described.

[Table 2]

Table 2

| Dispersing resin No. | | 1 | 2 | 3 | 4 | 5 | 6 | 7 | 8 | 9 | 10 | 11 | 12 |
|---|---|---|---|---|---|---|---|---|---|---|---|---|---|
| Polymerizable monomer | Acrylic acid | 30 | 30 | | 20 | | | 30 | 30 | 30 | 30 | 20 | 20 |
| | Methacrylic acid | | | 40 | | 17.5 | 45 | | | | | | |
| | Styrene | 35 | | 20 | 30 | 35 | | 30 | 8 | 12 | 20 | 67 | 80 |
| | α-Methylstyrene | | | | 30 | | | | | | | | |
| | Benzyl methacrylate | | 35 | | | | 35 | | | | | | |
| | Methyl methacrylate | | | | | 12.5 | | | 62 | 58 | 50 | 13 | |
| | Butyl acrylate | | | | 20 | | | | | | | | |
| | 2-Ethylhexyl acrylate | | | 40 | | | | 25 | | | | | |
| | Lauryl methacrylate | 35 | 35 | | | 35 | 20 | | | | | | |
| | Methoxy polyethylene glycol #400 methacrylate | | | | | | | 15 | | | | | |
| Hydroxide (for neutralization) | Potassium hydroxide | 11.7 | 11.7 | 13.0 | 7.8 | 5.7 | 14.7 | 11.7 | 11.7 | 11.7 | 11.7 | 7.8 | 7.8 |
| Weight average molecular weight | | 16,000 | 17,500 | 15,000 | 15,000 | 16,500 | 17,000 | 18,500 | 17,000 | 17,000 | 15,500 | 15,000 | 14,500 |
| Acid value (mgKOH/g, theoretical value) | | 234 | 234 | 261 | 156 | 114 | 293 | 234 | 234 | 234 | 234 | 156 | 156 |

(Manufacture of water-based solution of dispersing resin 13)

Into a reaction vessel equipped with a gas introduction tube, a thermometer, a condenser, and a stirrer, 20 parts of toluene, 30 parts of acrylic acid and 15 parts of methyl methacrylate as polymerizable monomers, and 0.5 parts of 2,2'-azobisisobutyronitrile and 2.0 parts of 2-(dodecylthiocarbonothioylthio)-isobutyric acid as polymerization initiators were charged, and replacement with a nitrogen gas was performed. The inside of the reaction vessel was heated to 75°C, and a polymerization reaction was performed for three hours to obtain a copolymer (hydrophilic block) formed of acrylic acid and methyl methacrylate.

After completion of the polymerization reaction, the reaction system was cooled to room temperature, and then 60 parts of toluene and 55 parts of benzyl methacrylate as a polymerizable monomer were charged into the reaction vessel, and replacement with a nitrogen gas was performed. Then, the inside of the reaction vessel was heated to 75°C, and a polymerization reaction was performed for three hours to synthesize a polymer (dispersing resin 13) having a block structure in which polybenzyl methacrylate was added to the hydrophilic block.

Thereafter, the reaction system was cooled to room temperature, then 11.7 parts of potassium hydroxide was added to the reaction vessel to neutralize the reaction system, and then 200 parts of water was added thereto. Then, the mixed solution was heated to distill off toluene, and then the solid content concentration was adjusted to 30% using water, thereby obtaining a water-based solution (solid content concentration: 30%) of the dispersing resin 13 which is a water-soluble resin. Note that a weight average molecular weight of the dispersing resin 13 measured using the method described above was 21,000, and an acid value calculated using formula (6) was 234 (mgKOH/g).

(Manufacture of water-based solutions of dispersing resins 14 and 15)

Into a reaction vessel equipped with a gas introduction tube, a thermometer, a condenser, and a stirrer, 17 parts of a bisphenol A propylene oxide adduct (total number of moles of propylene oxide groups added ≈ 4), 55 parts of a bisphenol A ethylene oxide adduct (total number of moles of ethylene oxide groups added ≈ 4), 25 parts of fumaric acid, and 0.5 parts of tin 2-ethylhexanoate were charged, and the inside of the vessel was replaced with nitrogen. Thereafter, the internal temperature was raised to 235°C, and the mixture was allowed to react as it was for one hour. Next, the internal temperature was cooled to 210°C, then 3 parts of fumaric acid and 0.005 parts of 4-tert-butylcatechol (polymerization inhibitor) were added, and the mixture was allowed to react as it was for further 30 minutes. Thereafter, the pressure in the reaction vessel was lowered, and the reaction vessel was held at 8.3 kPa for one hour to synthesize a dispersing resin 14. Note that the dispersing resin 14 had a weight average molecular weight of 18,000 and an acid value of 28 mgKOH/g.

Thereafter, 100 parts of the dispersing resin 14 obtained above was dissolved in an equal amount of methyl ethyl ketone, and then a 6 mol/L potassium hydroxide aqueous solution was added thereto in an amount obtained by multiplying the acid value of the dispersing resin 14 by 1/4 (that is, $28 \times 1/4 = 7$ (parts)). Then, 300 parts of ion-exchanged water was added thereto little by little while the contents were stirred. Thereafter, methyl ethyl ketone was removed under reduced pressure, and ion-exchanged water was further added thereto to adjust the solid content concentration to 30%, thereby obtaining a water-based solution (solid content concentration: 30%) of the dispersing resin 14.

In addition, a water-based solution (solid content concentration: 30%) of a dispersing resin 15 was manufactured in the same manner to that in the case of the dispersing resin 14 except that the polymerizable monomers initially charged into the reaction vessel were changed to 70 parts of a bisphenol A propylene oxide adduct (total number of moles of propylene oxide groups added ≈ 4), 13 parts of fumaric acid, and 13 parts of terephthalic acid, and the polymerizable monomer were charged after the reaction for one hour was changed to 2 parts of fumaric acid and 2 parts of terephthalic acid. The dispersing resin 15 had a weight average molecular weight of 15,000 and an acid value of 35 mgKOH/g.

(Preparation of dispersing resins 16 and 17)

In addition to the dispersing resins 1 to 15, the following sodium polyacrylate and the following styrene-maleic anhydride resin, which are commercial products, were used as dispersing resins 16 and 17, respectively. Note that, when the dispersing resins 16 and 17 were used, each of the dispersing resins was mixed with water in advance to obtain a water-based solution having a solid content concentration of 30%.

- Dispersing resin 16: sodium polyacrylate powder (manufactured by FUJIFILM Wako Pure Chemical Corporation), weight average molecular weight: 6,000, acid value: 597 mgKOH/g.
- Dispersing resin 17: XIBOND 220 (manufactured by POLYSCOPE POLYMER), weight average molecular weight: 15,000, acid value: 120 mgKOH/g.

<Manufacture and preparation of dispersed particles>

(Manufacture of water-based dispersions of dispersed particles PW1a to PW21a)

A water-insoluble colorant, a water-based solution of a dispersing resin, and water presented in Table 3 were charged into a mixing vessel equipped with a stirrer in blend amounts presented in Table 3 in order of water, the water-based solution of a dispersing resin, and the water-insoluble colorant, and then the mixture was stirred (pre-mixed) for one hour. Thereafter, circulation dispersion was performed for eight hours using "Dino-mill" (volume: 0.6 L) manufactured by Shinmaru Enterprises Corporation filled with 1,800 g of zirconia beads having a diameter of 0.5 mm to manufacture each of water-based dispersions of dispersed particles PW1a to PW21a (water-based dispersions of PW1a to PW19a each had a solid content concentration of 55%, a water-based dispersion of PW20a had a solid content concentration of 52%, and a water-based dispersion of PW21a had a solid content concentration of 54%).

Note that the method for manufacturing the dispersed particles described above corresponds to the method A described above.

(Manufacture of water-based dispersion of dispersed particles PW22a)

A water-insoluble colorant, a water-based solution of a dispersing resin, and water presented in Table 3 were charged into a mixing vessel equipped with a stirrer in amounts presented in Table 3 in order of water, the dispersing resin, and the water-insoluble colorant. Next, the mixture was stirred (pre-mixed) for one hour, and then circulation dispersion was started using "Dino-mill" (volume: 0.6 L) manufactured by Shinmaru Enterprises Corporation filled with 1,800 g of zirconia beads having a diameter of 0.5 mm. Then, an average particle size of the mixture was measured at regular time intervals, and when the average particle size reached about 350 nm, the circulation dispersion was terminated, thereby manufacturing a water-based dispersion of dispersed particles PW22a (solid content concentration: 24%).

Note that the method for manufacturing the dispersed particles PW22a described above corresponds to the method A described above.

[Table 3]

Table 3

| Dispersed particles No. | Type and amount of material mixed before circulation dispersion | | | | | Average particle size (nm) of dispersed particles | Density of dispersed particles (g/cm³) |
|---|---|---|---|---|---|---|---|
| | White inorganic pigment | | Water-based solution of dispersing resin | | Water | | |
| | No. | Amount (kg) | No. | Amount (kg) | Amount (kg) | | |
| PW1a | 1 | 2.5 | 1 | 0.83 | 1.67 | 175 | 3.83 |
| PW2a | 2 | 2.5 | 1 | 0.83 | 1.67 | 195 | 3.86 |
| PW3a | 3 | 2.5 | 1 | 0.83 | 1.67 | 230 | 4.13 |
| PW4a | 4 | 2.5 | 1 | 0.83 | 1.67 | 235 | 4.13 |
| PW5a | 5 | 2.5 | 1 | 0.83 | 1.67 | 270 | 4.13 |
| PW6a | 6 | 2.5 | 1 | 0.83 | 1.67 | 270 | 4.03 |
| PW7a | 7 | 2.5 | 1 | 0.83 | 1.67 | 280 | 3.93 |
| PW8a | 8 | 2.5 | 1 | 0.83 | 1.67 | 280 | 4.13 |
| PW9a | 9 | 2.5 | 1 | 0.83 | 1.67 | 285 | 4.13 |
| PW10a | 10 | 2.5 | 1 | 0.83 | 1.67 | 315 | 4.17 |
| PW11a | 11 | 2.5 | 1 | 0.83 | 1.67 | 320 | 4.03 |
| PW12a | 12 | 2.5 | 1 | 0.83 | 1.67 | 300 | 5.39 |
| PW13a | 3 | 2.5 | 2 | 0.83 | 1.67 | 230 | 4.13 |
| PW14a | 3 | 2.5 | 3 | 0.83 | 1.67 | 230 | 4.13 |
| PW15a | 3 | 2.5 | 4 | 0.83 | 1.67 | 235 | 4.14 |
| PW16a | 3 | 2.5 | 5 | 0.83 | 1.67 | 225 | 4.14 |

(continued)

| Dispersed particles No. | Type and amount of material mixed before circulation dispersion | | | | | Average particle size (nm) of dispersed particles | Density of dispersed particles (g/cm³) |
|---|---|---|---|---|---|---|---|
| | White inorganic pigment | | Water-based solution of dispersing resin | | Water | | |
| | No. | Amount (kg) | No. | Amount (kg) | Amount (kg) | | |
| PW17a | 3 | 2.5 | 6 | 0.83 | 1.67 | 240 | 4.14 |
| PW18a | 3 | 2.5 | 7 | 0.83 | 1.67 | 245 | 4.14 |
| PW19a | 3 | 2.5 | 13 | 0.83 | 1.67 | 245 | 4.08 |
| PW20a | 3 | 2.5 | 16 | 0.33 | 2.17 | 250 | 4.14 |
| PW21a | 3 | 2.5 | 17 | 0.67 | 1.83 | 240 | 4.15 |
| PW22a | 11 | 1 | 1 | 0.67 | 3.33 | 350 | 4.06 |

(Manufacture of water-based dispersions of dispersed particles PW1b to PW16b)

A water-based solution of a dispersing resin, where types and amounts are presented in Table 4, was mixed with 0.5 kg of methyl ethyl ketone in advance to prepare a dispersing resin solution. The total amount of the dispersing resin solution was charged into a mixing vessel equipped with a stirrer, then 0.3 kg of methyl ethyl ketone and 1.17 kg of water were further charged thereinto while the contents in the mixing vessel were stirred, and the mixture was stirred for 30 minutes. Thereafter, a water-insoluble colorant, where types and amounts are presented in Table 3, was charged into the mixing vessel, and the mixture was stirred (pre-mixed) for one hour. Thereafter, circulation dispersion was performed for eight hours using "Dino-mill" (volume: 0.6 L) manufactured by Shinmaru Enterprises Corporation filled with 1,800 g of zirconia beads having a diameter of 0.5 mm. Then, 0.5 kg of water was added to the obtained dispersion, then methyl ethyl ketone was distilled off under reduced pressure using an evaporator, and the same amount of water as the amount of water distilled off during the distillation under reduced pressure was added after the distillation under reduced pressure to manufacture each of water-based dispersions of dispersed particles PW1b to PW16b (each having a solid content concentration of 55%).

Note that the method for manufacturing the dispersed particles described above corresponds to the method B described above.

[Table 4]

Table 4

| Dispersed particles No. | Type and amount of material mixed before circulation dispersion | | | | Average particle size (nm) of dispersed particles | Density of dispersed particles (g/cm³) |
|---|---|---|---|---|---|---|
| | Water-based solution of dispersing resin | | White inorganic pigment | | | |
| | No. | Amount (kg) | No. | Amount (kg) | | |
| PW1b | 1 | 0.83 | 1 | 2.5 | 175 | 3.80 |
| PW2b | 1 | 0.83 | 2 | 2.5 | 185 | 3.86 |
| PW3b | 1 | 0.83 | 3 | 2.5 | 235 | 4.10 |
| PW4b | 1 | 0.83 | 4 | 2.5 | 235 | 4.10 |
| PW5b | 1 | 0.83 | 5 | 2.5 | 280 | 4.10 |
| PW6b | 1 | 0.83 | 6 | 2.5 | 285 | 4.00 |
| PW7b | 1 | 0.83 | 7 | 2.5 | 280 | 3.90 |
| PW8b | 1 | 0.83 | 10 | 2.5 | 310 | 4.15 |
| PW9b | 1 | 0.83 | 11 | 2.5 | 330 | 4.00 |
| PW10b | 1 | 0.83 | 12 | 2.5 | 295 | 5.35 |

(continued)

| Dispersed particles No. | Type and amount of material mixed before circulation dispersion | | | | Average particle size (nm) of dispersed particles | Density of dispersed particles (g/cm$^3$) |
|---|---|---|---|---|---|---|
| | Water-based solution of dispersing resin | | White inorganic pigment | | | |
| | No. | Amount (kg) | No. | Amount (kg) | | |
| PW11b | 2 | 0.83 | 3 | 2.5 | 240 | 4.10 |
| PW12b | 4 | 0.83 | 3 | 2.5 | 240 | 4.11 |
| PW13b | 5 | 0.83 | 3 | 2.5 | 245 | 4.11 |
| PW14b | 13 | 0.83 | 3 | 2.5 | 250 | 4.01 |
| PW15b | 14 | 0.83 | 3 | 2.5 | 255 | 4.13 |
| PW16b | 15 | 0.83 | 3 | 2.5 | 250 | 4.13 |

(Manufacture of water-based dispersions of dispersed particles PW1c to PW10c)

A polyepoxy compound, where types and amounts are presented in Table 5, and water were added to and mixed with a water-based dispersion of dispersed particles in the amount presented in Table 5, and the mixture was allowed to stand at 60°C for 24 hours. Then, filtration was performed with a membrane filter having a pore diameter of 5 μm to manufacture each of the water-based dispersions of dispersed particles PW1c to PW10c.

Note that the method for manufacturing the dispersed particles described above corresponds to the method C described above.

[Table 5]

Table 5

| Dispersed particles No. | Type and amount of material mixed | | | | | Average particle size (nm) of dispersed particles | Density of dispersed particles (g/cm$^3$) | Solid content concentration (%) of dispersed particles | Residual acid value (mgKOH/g) of dispersing resin |
|---|---|---|---|---|---|---|---|---|---|
| | Dispersion of dispersed particles | | Polyepoxy compound | | Water | | | | |
| | No. | Amount (g) | Product name | Amount (g) | Amount (9) | | | | |
| PW1c | PW3a | 95 | BDGE | 1.4 | 3.6 | 250 | 4.13 | 53.7% | 70 |
| PW2c | PW3a | 95 | DEGGE | 1.5 | 3.5 | 260 | 4.13 | 53.8% | 72 |
| PW3c | PW3a | 95 | TMPGE | 1.3 | 3.7 | 260 | 4.13 | 53.6% | 82 |
| PW4c | PW3a | 95 | TMPGE | 1.8 | 3.2 | 270 | 4.13 | 54.1% | 23 |
| PW5c | PW3a | 95 | TMPGE | 1 | 4.0 | 255 | 4.13 | 53.3% | 117 |
| PW6c | PW3a | 95 | TMPGE | 0.4 | 4.6 | 260 | 4.13 | 52.7% | 187 |
| PW7c | PW3b | 95 | BDGE | 1.4 | 3.6 | 255 | 4.10 | 53.7% | 70 |
| PW8c | PW3b | 95 | TMPGE | 1.3 | 3.7 | 270 | 4.10 | 53.6% | 82 |
| PW9c | PW12b | 95 | BDGE | 1.4 | 3.6 | 270 | 4.01 | 53.7% | 70 |
| PW10c | PW12b | 95 | TMPGE | 1.3 | 3.7 | 280 | 4.01 | 53.6% | 82 |

Note that, Table 5 above also describes a solid content concentration of each of the water-based dispersions of the dispersed particles PW1c to PW10c and a residual acid value of a dispersing resin after a crosslinking treatment. Details of the abbreviations of the polyepoxy compounds described in Table 5 (and Table 8 described below) are as follows.

BDGE: 1,4-butanediol diglycidyl ether
DEGGE: diethylene glycol diglycidyl ether
TMPGE: trimethylolpropane triglycidyl ether

(Preparation of water-based dispersion of dispersed particles PW1d)

In addition to the dispersed particles manufactured above, ROPAQUE (registered trademark) ULTRA ((meth) acrylic hollow resin particles manufactured by The Dow Chemical Company, average particle size: 380 nm, solid content concentration: 30%), which is a commercial product, was used as a water-based dispersion of dispersed particles PW1d.

(Manufacture of water-based dispersions of dispersed particles PY1a to PY15a and PY16a-1 to PY16a-3)

C.I. Pigment Yellow 155 (primary particle size: 90 nm, specific surface area: 61 $m^2/g$), a water-based solution of a dispersing resin, and water presented in Table 6 were charged into a mixing vessel equipped with a stirrer in amounts presented in Table 6 in order of water, the water-based solution of a dispersing resin, and C.I. Pigment Yellow 155, and then the mixture was stirred (pre-mixed) for one hour. Thereafter, circulation dispersion was performed for five hours using "Dino-mill" (volume: 0.6 L) manufactured by Shinmaru Enterprises Corporation filled with 1,800 g of zirconia beads having a diameter of 0.5 mm to manufacture each of water-based dispersions of dispersed particles PY1a to PY14a (water-based dispersions of PY1a to PY7a and PY10a to PY14a each had a solid content concentration of 26%, a water-based dispersion of PY8a had a solid content concentration of 24%, and a water-based dispersion of PY9a had a solid content concentration of 22.5%).
In addition, a water-based dispersion (solid content concentration: 26%) of dispersed particles PY15a was manufactured in the same manner to that in the water-based dispersion of the dispersed particles PY1a except that the time for circulation dispersion was adjusted. The dispersed particles PY15a had an average particle size of 115 nm.
Furthermore, water-based dispersions (each having a solid content concentration of 26%) of dispersed particles PY16a-1 to PY16a-3 were manufactured in the same manner to that in the water-based dispersion of the dispersed particles PY1a except that C.I. Pigment Yellow 155 having a primary particle size of 160 nm and a specific surface area of 34 $m^2/g$ was used as a water-insoluble colorant and the time for circulation dispersion was adjusted. The dispersed particles PY16a-1 to PY16a-3 had average particle sizes of 195 nm, 220 nm, and 265 nm, respectively.
Note that the method for manufacturing the dispersed particles described above corresponds to the method A described above.

[Table 6]

Table 6

| Dispersed particles No. | Type and amount of material mixed before circulation dispersion | | | | Average particle size (nm) of dispersed particles |
|---|---|---|---|---|---|
| | C.I. Pigment Yellow 155 | Water-based solution of dispersing resin | | Water | |
| | Amount (kg) | No. | Amount (kg) | Amount (kg) | |
| PY1a | 0.6 | 1 | 0.6 | 1.8 | 130 |
| PY2a | 0.6 | 2 | 0.6 | 1.8 | 135 |
| PY3a | 0.6 | 3 | 0.6 | 1.8 | 130 |
| PY4a | 0.6 | 4 | 0.6 | 1.8 | 135 |
| PY5a | 0.6 | 5 | 0.6 | 1.8 | 130 |
| PY6a | 0.6 | 6 | 0.6 | 1.8 | 140 |
| PY7a | 0.6 | 13 | 0.6 | 1.8 | 150 |
| PY8a | 0.6 | 17 | 0.4 | 2.0 | 145 |

(continued)

| Dispersed particles No. | Type and amount of material mixed before circulation dispersion | | | | Average particle size (nm) of dispersed particles |
|---|---|---|---|---|---|
| | C.I. Pigment Yellow 155 | Water-based solution of dispersing resin | | Water | |
| | Amount (kg) | No. | Amount (kg) | Amount (kg) | |
| PY9a | 0.45 | 1 | 0.75 | 1.8 | 125 |
| PY10a | 0.6 | 8 | 0.4 | 2.0 | 140 |
| PY11a | 0.6 | 9 | 0.4 | 2.0 | 130 |
| PY12a | 0.6 | 10 | 0.4 | 2.0 | 130 |
| PY13a | 0.6 | 11 | 0.4 | 2.0 | 130 |
| PY14a | 0.6 | 12 | 0.4 | 2.0 | 135 |

(Manufacture of water-based dispersions of dispersed particles PY1b to PY6b)

A water-based solution of a dispersing resin, where types and amounts are presented in Table 7, was mixed with 0.5 kg of methyl ethyl ketone in advance to prepare a dispersing resin solution. The total amount of the dispersing resin solution was charged into a mixing vessel equipped with a stirrer, then 0.3 kg of methyl ethyl ketone and 1 kg of water were further charged thereinto while the contents in the mixing vessel were stirred, and the mixture was stirred for 30 minutes. Thereafter, a water-insoluble colorant of type and amount presented in Table 3 was charged into the mixing vessel, and mixture was stirred (pre-mixed) for one hour. Thereafter, circulation dispersion was performed for five hours using "Dino-mill" (volume: 0.6 L) manufactured by Shinmaru Enterprises Corporation filled with 1,800 g of zirconia beads having a diameter of 0.5 mm. Then, 0.8 kg of water was added to the obtained dispersion, then methyl ethyl ketone was distilled off under reduced pressure using an evaporator, and the same amount of water as the amount of water distilled off during the distillation under reduced pressure was added after the distillation under reduced pressure to manufacture each of water-based dispersions of dispersed particles PY1b to PY6b (each having a solid content concentration of 26%).
Note that the method for manufacturing the dispersed particles described above corresponds to the method B described above.

[Table 7]

Table 7

| Dispersed particles No. | Type and amount of material mixed before circulation dispersion | | | Average particle size (nm) of dispersed particles |
|---|---|---|---|---|
| | Water-based solution of dispersing resin | | C.I. Pigment Yellow 155 | |
| | No. | Amount (kg) | Amount (kg) | |
| PY1b | 1 | 0.6 | 0.6 | 140 |
| PY2b | 2 | 0.6 | 0.6 | 140 |
| PY3b | 4 | 0.6 | 0.6 | 145 |
| PY4b | 13 | 0.6 | 0.6 | 150 |
| PY5b | 14 | 0.6 | 0.6 | 150 |
| PY6b | 15 | 0.6 | 0.6 | 145 |

(Manufacture of water-based dispersions of dispersed particles PY1c to PY4c)

A polyepoxy compound of the type and amount presented in Table 8 and water were added to and mixed with a water-based dispersion of dispersed particles in the amount presented in Table 8, and the mixture was allowed to stand at 60°C for 24 hours. Then, filtration was performed with a membrane filter having a pore diameter of 5 μm to manufacture each of water-based dispersions of dispersed particles PY1c to PY4c.

Note that the method for manufacturing the dispersed particles described above corresponds to the method C described above.

[Table 8]

Table 8

| Dispersed particles No. | Type and amount of material mixed | | | | | Average particle size (nm) of dispersed particles | Solid content concentration (%) of dispersed particles | Residual acid value (mgK OH/g) of dispersing resin |
| | Dispersion of dispersed particles | | Polyepoxy compound | | Water | | | |
| | No. | Amount (g) | Product name | Amount (g) | Amount (g) | | | |
| PY1c | PY1a | 95 | DEGGE | 1.8 | 3.2 | 150 | 26.5% | 72 |
| PY2c | PY1a | 95 | TMPGE | 1.7 | 3.3 | 150 | 26.4% | 68 |
| PY3c | PY1b | 95 | TMPGE | 1.7 | 3.3 | 160 | 26.4% | 68 |
| PY4c | PY4b | 95 | TMPGE | 1.7 | 3.3 | 170 | 26.4% | 68 |

Note that, Table 8 above also shows the solid content concentration of each of water-based dispersions of the dispersed particles PY1c to PY4c and a residual acid value of a dispersing resin after a crosslinking treatment.

(Manufacture of water-based dispersion of dispersed particles PY1d)

A water-based dispersion (solid content concentration: 26%) of dispersed particles PY1d was manufactured in the same manner to that in the water-based dispersion of the dispersed particles PY1a described above except that C.I. Pigment Yellow 74 was used as the water-insoluble colorant. Note that the dispersed particles PY1d had an average particle size of 135 nm.

[Manufacture I of white ink and yellow ink]

<Manufacture of white inks PW1aI-1 to PW1aI-4, PW2aI, PW3aI-1 to PW3aI-9, PW4aI to PW21aI, PWIbI to PW6bI, PW7bI-1 to PW7bI-5, PW8bI to PW16bI, and PW1cI to PW10cI>

Into a mixing vessel equipped with a stirrer, 10.55 parts of a water-based dispersion (solid content concentration: 55%) of the dispersed particles PW 1a, 10 parts of ion-exchanged water, 20 parts of 1,2-propanediol, 12.4 parts of QE-1042 ((meth)acrylic resin particles manufactured by SEIKO PMC CORPORATION, solid content concentration: 40.5%), 2.9 parts of AQUACER 515 (polyolefin resin particles manufactured by BYK Japan KK, solid content concentration: 35%), 1 part of Surfynol 465 (acetylene diol-based surface additive manufactured by Nissin Chemical Industry Co., Ltd.), 0.5 parts of TEGO Glide 440 (siloxane-based surface additive manufactured by Evonik Industries), and 0.1 parts of Proxel GXL (antiseptic manufactured by Arch Chemicals) were sequentially charged in this order, and then ion-exchanged water was further added thereto such that the total amount of the ink composition was 100 parts. Note that each raw material was charged while the mixture in the mixing vessel was stirred. Thereafter, the mixture was stirred until the mixture became sufficiently uniform, and then the mixture was filtered with a membrane filter having a pore diameter of 1.2 μm to manufacture a white ink PW1aI-1.

Note that details of the materials used in the manufacture of the white ink will be described later. In addition, the weighted average value of boiling points under 1 atm of the water-soluble organic solvent and water contained in the white ink PW1aI-1 is 120.4°C, and the amount of the surface additive (AW) contained in the white ink PW1aI-1 is 1.5% by mass.

In addition, white inks PW1aI-2 to PW1aI-4, PW2aI, PW3aI-1 to PW3aI-9, PW4aI to PW21aI, PW1bI to PW6bI, PW7bI-1 to PW7bI-5, PW8bI to PW16bI, and PW1cI to PW10cI were manufactured in the same manner to that in the case of the white ink PW1aI-1 described above except that the type and amount of the water-based dispersion of dispersed particles charged into the mixing vessel were changed as presented in Table 9 below.

[Table 9]

Table 9

| White ink No. | Dispersed particles used | |
| --- | --- | --- |
| | No. | Input amount (parts) |
| PW1aI-1 | PW1a | 10.55 |
| PW1aI-2 | PW1a | 22.72 |
| PW1aI-3 | PW1a | 32.73 |
| PW1aI-4 | PW1a | 58.18 |
| PW2aI | PW2a | 22.72 |
| PW3aI-1 | PW3a | 14.55 |
| PW3aI-2 | PW3a | 17.27 |
| PW3aI-3 | PW3a | 20.91 |
| PW3aI-4 | PW3a | 24.55 |
| PW3aI-5 | PW3a | 30.00 |
| PW3aI-6 | PW3a | 37.27 |
| PW3aI-7 | PW3a | 41.82 |
| PW3aI-8 | PW3a | 49.09 |
| PW3aI-9 | PW3a | 51.82 |
| PW4aI | PW4a | 24.55 |
| PW5aI | PW5a | 24.55 |
| PW6aI | PW6a | 24.55 |
| PW7aI | PW7a | 24.55 |
| PW8aI | PW8a | 26.36 |
| PW9aI | PW9a | 26.36 |
| PW10aI | PW10a | 26.36 |
| PW11aI | PW11a | 28.18 |
| PW12aI | PW12a | 30.00 |
| PW13aI | PW13a | 24.55 |
| PW14aI | PW14a | 24.55 |
| PW15aI | PW15a | 24.55 |
| PW16aI | PW16a | 24.55 |
| PW17aI | PW17a | 24.55 |
| PW18aI | PW18a | 24.55 |
| PW19aI | PW19a | 24.55 |
| PW20aI | PW20a | 24.55 |
| PW21aI | PW21a | 24.55 |
| PW1bI | PW1b | 22.72 |
| PW2bI | PW2b | 22.72 |
| PW3bI | PW3b | 24.55 |

(continued)

| White ink No. | Dispersed particles used | |
| --- | --- | --- |
| | No. | Input amount (parts) |
| PW4bl | PW4b | 24.55 |
| PW5bl | PW5b | 26.36 |
| PW6bl | PW6b | 26.36 |
| PW7bl | PW7b | 24.55 |
| PW8bl | PW8b | 24.55 |
| PW9bl-1 | PW9b | 29.09 |
| PW9bl-2 | PW9b | 31.82 |
| PW9bl-3 | PW9b | 34.55 |
| PW9bl-4 | PW9b | 37.27 |
| PW9bl-5 | PW9b | 39.09 |
| PW10bl | PW10b | 24.55 |
| PW11bl | PW11b | 24.55 |
| PW12bl | PW12b | 24.55 |
| PW13bl | PW13b | 24.55 |
| PW14bl | PW14b | 24.55 |
| PW15bl | PW15b | 24.55 |
| PW16bl | PW16b | 24.55 |
| PW1cl | PW1c | 25.16 |
| PW2cl | PW2c | 25.12 |
| PW3cl | PW3c | 25.21 |
| PW4cl | PW4c | 24.98 |
| PW5cl | PW5c | 25.35 |
| PW6cl | PW6c | 25.64 |
| PW7cl | PW7c | 25.16 |
| PW8cl | PW8c | 25.21 |
| PW9cl | PW9c | 25.16 |
| PW10cl | PW10c | 25.21 |

<Manufacture of white ink PW22al>

Into a mixing vessel equipped with a stirrer, 50 parts of a water-based dispersion (solid content concentration 24%) of the dispersed particles PW22a, 15.83 parts of ion-exchanged water, 15 parts of 1,2-propanediol, 2 parts of 1,2-hexanediol, 13.3 parts of TAKELAC W-6061 (urethane resin particles manufactured by Mitsui Chemicals, Inc., solid content concentration: 30%), 2.9 parts of AQUACER 515 (polyolefin resin particles manufactured by BYK Japan KK, solid content concentration: 35%), 0.5 parts of BYK-348 (siloxane-based surface additive manufactured by BYK Japan K.K.), 0.3 parts of Surfynol DF-110D (acetylene diol-based surface additive manufactured by Nissin Chemical Industry Co., Ltd., active ingredient: 32%), 0.1 parts of triethanolamine, 0.05 parts of ethylenediaminetetraacetic acid, and 0.02 parts of benzotriazole were sequentially charged in this order. Note that each raw material was charged while the mixture in the mixing vessel was stirred. Thereafter, the mixture was stirred until the mixture became sufficiently uniform, and then the mixture was filtered with a membrane filter having a pore diameter of 1.2 μm to manufacture a white ink PW20al.

<Manufacture of white ink PW1dl>

A white ink PW1dl was manufactured using the same method to that in the white ink PW1al-1 described above except that 21.04 parts of a water-based dispersion (solid content concentration: 55%) of the dispersed particles PW3a and 9.65 parts of a water-based dispersion (solid content concentration: 30%) of the dispersed particles PW1d were used in combination as the water-based dispersion of dispersed particles.

<Manufacture of yellow inks PY1al-1 to PY1al-9, PY2al to PY8al, PY10al to PY15al, PY16al-1 to PY16al-3, PY1bl to PY6bl, and PY1cl to PY4cl>

Into a mixing vessel equipped with a stirrer, 3.27 parts of a water-based dispersion (solid content concentration: 26%) of the dispersed particles PY1a, 20 parts of ion-exchanged water, 20 parts of 1,2-propanediol, 12.4 parts of QE-1042 ((meth)acrylic resin particles manufactured by SEIKO PMC, solid content concentration: 40.5%), 2.9 parts of AQUACER 515 (polyolefin resin particles manufactured by BYK Japan KK, solid content concentration: 35%), 1.2 parts of Surfynol 465 (acetylene diol-based surface additive manufactured by Nissin Chemical Industry Co., Ltd.), 0.6 parts of TEGO Glide 440 (siloxane-based surface additive manufactured by Evonik Industries), and 0.1 parts of Proxel GXL (antiseptic manufactured by Arch Chemicals) were sequentially charged in this order, and then ion-exchanged water was further added thereto such that the total amount of the composition was 100 parts. Note that each raw material was charged while the mixture in the mixing vessel was stirred. Thereafter, the mixture was stirred until the mixture became sufficiently uniform, and then the mixture was filtered with a membrane filter having a pore diameter of 1.2 μm to manufacture a yellow ink PY1al-1.

Note that details of the materials used in the manufacture of the yellow ink will be described later. In addition, a weighted average value of boiling points under 1 atm of the water-soluble organic solvent and water contained in the yellow ink PY1al-1 is 119.6°C, and the amount of the surface additive (AY) contained in the yellow ink PY1al-1 is 1.8% by mass.

In addition, yellow inks PY1al-2 to PY1al-9, PY10al to PY15al, PY16al-1 to PY16al-3, PY2al to PY8al, PY1bl to PY6bl, and PY1cl to PY4cl were manufactured in the same manner to that in the case of the yellow ink PY1al-1 described above except that the type and amount of the water-based dispersion of dispersed particles charged into the mixing vessel were changed as presented in Table 10 below.

[Table 10]

Table 10

| Yellow Ink No. | Dispersed particles used | |
| --- | --- | --- |
| | No. | Input amount (parts) |
| PY1al-1 | PY1a | 3.27 |
| PY1al-2 | PY1a | 3.85 |
| PY1al-3 | PY1a | 6.54 |
| PY1al-4 | PY1a | 7.69 |
| PY1al-5 | PY1a | 13.46 |
| PY1al-6 | PY1a | 16.15 |
| PY1al-7 | PY1a | 17.31 |
| PY1al-8 | PY1a | 18.08 |
| PY1al-9 | PY1a | 20.00 |
| PY2al | PY2a | 7.69 |
| PY3al | PY3a | 7.69 |
| PY4al | PY4a | 7.69 |
| PY5al | PY5a | 7.69 |
| PY6al | PY6a | 7.69 |
| PY7al | PY7a | 7.69 |

(continued)

| Yellow Ink No. | Dispersed particles used | |
|---|---|---|
| | No. | Input amount (parts) |
| PY8al | PY8a | 8.33 |
| PY10al | PY10a | 7.69 |
| PY11al | PY11a | 7.69 |
| PY12al | PY12a | 7.69 |
| PY13al | PY13a | 7.69 |
| PY14al | PY14a | 7.69 |
| PY15al | PY15a | 7.69 |
| PY16al-1 | PY16a-1 | 7.69 |
| PY16al-2 | PY16a-2 | 7.69 |
| PY16al-3 | PY16a-3 | 7.69 |
| PY1bl | PY1b | 7.69 |
| PY2bl | PY2b | 7.69 |
| PY3bl | PY3b | 7.69 |
| PY4bl | PY4b | 7.69 |
| PY5bl | PY5b | 7.69 |
| PY6bl | PY6b | 7.69 |
| PY1cl | PY1c | 7.69 |
| PY2cl | PY2c | 7.69 |
| PY3cl | PY3c | 7.69 |
| PY4cl | PY4c | 7.69 |

<Manufacture of yellow ink PY9al>

Into a mixing vessel equipped with a stirrer, 26.67 parts of a water-based dispersion (solid content concentration 22.5%) of the dispersed particles PY9a, 48.66 parts of ion-exchanged water, 15 parts of 1,2-propanediol, 4 parts of 1,2-hexanediol, 3.3 parts of TAKELAC W-6061 (solid content concentration 30%), 1.4 parts of AQUACER 515 (solid content concentration 35%), 0.5 parts of BYK-348, 0.3 parts of Surfynol DF-110D (active ingredient: 32%), 0.1 parts of triethanolamine, 0.05 parts of ethylenediaminetetraacetic acid, and 0.02 parts of benzotriazole were sequentially charged in this order. Note that each raw material was charged while the mixture in the mixing vessel was stirred. Thereafter, the mixture was stirred until the mixture became sufficiently uniform, and then the mixture was filtered with a membrane filter having a pore diameter of 1.2 $\mu$m to manufacture a yellow ink PY9al.

<Manufacture of yellow ink PY1dl>

A yellow ink PYldl was manufactured using the same method to that in the yellow ink PY1al-1 described above except that 6.35 parts of a water-based dispersion (solid content concentration: 26%) of the dispersed particles PY1a and 2.11 parts of a water-based dispersion (solid content concentration: 26%) of the dispersed particles PW1d were used in combination as the water-based dispersion of dispersed particles.

[Preparation of printed matter]

Two inkjet heads "KJ4B-1200" manufactured by Kyocera Corporation (design resolution: 1,200 dpi, nozzle diameter: 20 $\mu$m) were mounted above a conveyor capable of conveying a substrate, and were filled with a white ink and a yellow ink in this order from an upstream inkjet head in the conveyance direction. Next, a substrate described later was fixed onto the conveyor, and then the conveyor was driven at a constant speed. When the substrate passed below a portion where the inkjet heads were mounted, the white ink and the yellow ink were discharged from the upstream and downstream inkjet heads at a drop volume of 2 pL to print an image. Immediately after the printing, the printed matter was placed into an air oven at 70°C and dried for three minutes to prepare the printed matter.

Note that the following three types of images were prepared as the above image.

Solid printed matter: A solid image with a coverage rate of 100% was printed using the ink filled in the upstream inkjet head, and a solid image with a coverage rate of 100% was printed using the ink filled in the downstream inkjet head so as to completely overlap the solid image.

Line printed matter: A solid image with a coverage rate of 100% was printed using the ink filled in the upstream inkjet head, and a line image of one dot was printed using the ink filled in the downstream inkjet head so as to completely overlap the solid image.

Character printed matter: A solid image with a coverage rate of 100% was printed using the ink filled in the upstream inkjet head, and 20 kanji characters formed of MS Mincho type were randomly printed at 4 points, 6 points, and 8 points, respectively using the ink filled in the downstream inkjet head so as to completely overlap the solid image.

In addition, the following two types of substrates were prepared as the substrate, the above three types of images were printed on each of the following substrates for each combination described in Table 11.

PET substrate: polyethylene terephthalate film "FE2001" (thickness:12 $\mu$m) manufactured by Futamura Chemical Co. Ltd.

Kraft paper substrate: both-surface groundwood unbleached kraft paper (basis weight: 80 g/m$^2$) manufactured by Mitsuyama Corporation

[Examples 1 to 98 and Comparative Examples 1 to 8]

A printed matter was prepared by the above-described method using a combination of a white ink and a yellow ink presented in Table 11, and the following evaluation was performed using the obtained printed matter. Evaluation results are presented in Table 12.

[Table 11-1]

Table 11

| Example / Comparative Example | White ink No. | Yellow Ink No. | Dispersed particles PW in white ink | | | | | Dispersed particles PY in yellow ink | | | SW/(average particle size of dispersed particles PY) | Specification related to formulas (3) and (4) | | | | Formula (4) |
|---|---|---|---|---|---|---|---|---|---|---|---|---|---|---|---|---|
| | | | | | | | | | | | | Formula (3) | | | | |
| | | | Type | WW | WW | SW | DW | Type | WY | Average particle size (nm) | | $0.010 \cdot SW \cdot DW$ (left side) | $9.0 \times 10^6/(SW^2 \cdot DW)$ (right side) | $WW/(SW \cdot DW)$ | $WW \cdot SW^2 \cdot DW$ ($\times 10^6$) | $WY \cdot DW/WW$ |
| Example 1 | PW1al-2 | | PW1a | 12.5 | 12.5 | 175 | 3.83 | | | | 1.35 | 6.70 | 76.7 | 0.019 | 1.47 | 0.61 |
| Example 2 | PW2al | | PW2a | 12.5 | 12.5 | 195 | 3.86 | | | | 1.50 | 7.53 | 61.3 | 0.017 | 1.83 | 0.62 |
| Example 3 | PW3al-4 | | PW3a | 13.5 | 13.5 | 230 | 4.13 | | | | 1.77 | 9.50 | 41.2 | 0.014 | 2.95 | 0.61 |
| Example 4 | PW4al | | PW4a | 13.5 | 13.5 | 235 | 4.13 | | | | 1.81 | 9.71 | 39.5 | 0.014 | 3.08 | 0.61 |
| Example 5 | PW5al | | PW5a | 13.5 | 13.5 | 270 | 4.13 | | | | 2.08 | 11.2 | 29.9 | 0.012 | 4.06 | 0.61 |
| Example 6 | PW6al | | PW6a | 13.5 | 13.5 | 270 | 4.03 | | | | 2.08 | 10.9 | 30.6 | 0.012 | 3.97 | 0.60 |
| Example 7 | PW7al | | PW7a | 13.5 | 13.5 | 280 | 3.93 | | | | 2.15 | 11.0 | 29.2 | 0.012 | 4.16 | 0.58 |
| Example 8 | PW8al | | PW8a | 14.5 | 14.5 | 280 | 4.13 | | | | 2.15 | 11.6 | 27.8 | 0.013 | 4.69 | 0.57 |
| Example 9 | PW9al | | PW9a | 14.5 | 14.5 | 285 | 4.13 | | | | 2.19 | 11.8 | 26.8 | 0.012 | 4.86 | 0.57 |
| Example 10 | PW10al | PY1al-4 | PW10a | 14.5 | 14.5 | 315 | 4.17 | PY1a | 2.0 | 130 | 2.42 | 13.1 | 21.8 | 0.011 | 6.00 | 0.58 |
| Example 11 | PW11al | | PW11a | 15.5 | 15.5 | 320 | 4.03 | | | | 2.46 | 12.9 | 21.8 | 0.012 | 6.40 | 0.52 |
| Example 12 | PW12al | | PW12a | 16.5 | 16.5 | 300 | 5.39 | | | | 2.31 | 16.2 | 18.6 | 0.010 | 8.00 | 0.65 |
| Example 13 | PW13al | | PW13a | 13.5 | 13.5 | 230 | 4.13 | | | | 1.77 | 9.50 | 41.2 | 0.014 | 2.95 | 0.61 |
| Example 14 | PW14al | | PW14a | 13.5 | 13.5 | 230 | 4.13 | | | | 1.77 | 9.50 | 41.2 | 0.014 | 2.95 | 0.61 |
| Example 15 | PW15al | | PW15a | 13.5 | 13.5 | 235 | 4.14 | | | | 1.81 | 9.73 | 39.4 | 0.014 | 3.09 | 0.61 |
| Example 16 | PW16al | | PW16a | 13.5 | 13.5 | 225 | 4.14 | | | | 1.73 | 9.32 | 42.9 | 0.014 | 2.83 | 0.61 |
| Example 17 | PW17al | | PW17a | 13.5 | 13.5 | 240 | 4.14 | | | | 1.85 | 9.94 | 37.7 | 0.014 | 3.22 | 0.61 |
| Example 18 | PW18al | | PW18a | 13.5 | 13.5 | 245 | 4.14 | | | | 1.88 | 10.1 | 36.2 | 0.013 | 3.35 | 0.61 |
| Example 19 | PW19al | | PW19a | 13.5 | 13.5 | 245 | 4.08 | | | | 1.88 | 10.0 | 36.7 | 0.014 | 3.31 | 0.60 |
| Example 20 | PW20al | | PW20a | 13.5 | 13.5 | 250 | 4.14 | | | | 1.92 | 10.4 | 34.8 | 0.013 | 3.49 | 0.61 |
| Example 21 | PW21al | | PW21a | 13.5 | 13.5 | 240 | 4.15 | | | | 1.85 | 10.0 | 37.7 | 0.014 | 3.23 | 0.61 |
| Example 22 | PW1bl | | PW1b | 12.5 | 12.5 | 175 | 3.80 | | | | 1.35 | 6.65 | 77.3 | 0.019 | 1.45 | 0.61 |
| Example 23 | PW2bl | | PW2b | 12.5 | 12.5 | 185 | 3.86 | | | | 1.42 | 7.14 | 68.1 | 0.018 | 1.65 | 0.62 |
| Example 24 | PW3bl | | PW3b | 13.5 | 13.5 | 235 | 4.10 | | | | 1.81 | 9.64 | 39.7 | 0.014 | 3.06 | 0.61 |

EP 4 636 046 A1

38

(continued)

Table 11

| Example / Comparative Example | White ink No. | Yellow Ink No. | Dispersed particles PW in white ink | | | | | Dispersed particles PY in yellow ink | | | SW/(average particle size of dispersed particles PY) | Specification related to formulas (3) and (4) | | | | Formula (4) |
| | | | | | | | | | | | | Formula (3) | | | | |
| | | | Type | WW | WW | SW | DW | Type | WY | Average particle size (nm) | | 0.010·SW·DW (left side) | $9.0 \times 10^6/(SW^2 \cdot DW)$ (right side) | WW/(SW·DW) | $WW \cdot SW^2 \cdot DW$ ($\times 10^6$) | WY·DW/WW |
| Example 25 | PW4bl | | PW4b | 13.5 | 13.5 | 235 | 4.10 | | | | 1.81 | 9.64 | 39.7 | 0.014 | 3.06 | 0.61 |
| Example 26 | PW5bl | | PW5b | 14.5 | 14.5 | 280 | 4.10 | | | | 2.15 | 11.5 | 28.0 | 0.013 | 4.66 | 0.57 |
| Example 27 | PW6bl | | PW6b | 14.5 | 14.5 | 285 | 4.00 | | | | 2.19 | 11.4 | 27.7 | 0.013 | 4.71 | 0.55 |
| Example 28 | PW7bl | | PW7b | 13.5 | 13.5 | 280 | 3.90 | | | | 2.15 | 10.9 | 29.4 | 0.012 | 4.13 | 0.58 |
| Example 29 | PW8bl | | PW8b | 14.5 | 14.5 | 310 | 4.15 | | | | 2.38 | 12.9 | 22.6 | 0.011 | 5.78 | 0.57 |
| Example 30 | PW9bl-1 | | PW9b | 16.0 | 16.0 | 330 | 4.00 | | | | 2.54 | 13.2 | 20.7 | 0.012 | 6.97 | 0.50 |
| Example 31 | PW10bl | | PW10b | 16.5 | 16.5 | 295 | 5.35 | | | | 2.27 | 15.8 | 19.3 | 0.010 | 7.68 | 0.65 |
| Example 32 | PW11bl | | PW11b | 13.5 | 13.5 | 240 | 4.10 | | | | 1.85 | 9.84 | 38.1 | 0.014 | 3.19 | 0.61 |
| Example 33 | PW12bl | | PW12b | 13.5 | 13.5 | 240 | 4.11 | | | | 1.85 | 9.86 | 38.0 | 0.014 | 3.20 | 0.61 |
| Example 34 | PW13bl | | PW13b | 13.5 | 13.5 | 245 | 4.11 | | | | 1.88 | 10.1 | 36.5 | 0.013 | 3.33 | 0.61 |
| Example 35 | PW14bl | | PW14b | 13.5 | 13.5 | 250 | 4.01 | | | | 1.92 | 10.0 | 35.9 | 0.013 | 3.38 | 0.59 |
| Example 36 | PW15bl | | PW15b | 13.5 | 13.5 | 255 | 4.13 | | | | 1.96 | 10.5 | 33.5 | 0.013 | 3.63 | 0.61 |
| Example 37 | PW16bl | | PW16b | 13.5 | 13.5 | 250 | 4.13 | | | | 1.92 | 10.3 | 34.9 | 0.013 | 3.48 | 0.61 |
| Example 38 | PW1cl | | PW1c | 13.5 | 13.5 | 250 | 4.13 | | | | 1.92 | 10.3 | 34.9 | 0.013 | 3.48 | 0.61 |
| Example 39 | PW2cl | | PW2c | 13.5 | 13.5 | 260 | 4.13 | | | | 2.00 | 10.7 | 32.2 | 0.013 | 3.77 | 0.61 |
| Example 40 | PW3cl | | PW3c | 13.5 | 13.5 | 260 | 4.13 | | | | 2.00 | 10.7 | 32.2 | 0.013 | 3.77 | 0.61 |
| Example 41 | PW4cl | | PW4c | 13.5 | 13.5 | 270 | 4.13 | | | | 2.08 | 11.2 | 29.9 | 0.012 | 406 | 0.61 |
| Example 42 | PW5cl | | PW5c | 13.5 | 13.5 | 255 | 4.13 | | | | 1.96 | 10.5 | 33.5 | 0.013 | 3.63 | 0.61 |
| Example 43 | PW6cl | | PW6c | 13.5 | 13.5 | 260 | 4.13 | | | | 2.00 | 10.7 | 32.2 | 0.013 | 3.77 | 0.61 |
| Example 44 | PW7cl | | PW7c | 13.5 | 13.5 | 255 | 4.10 | | | | 1.96 | 10.5 | 33.8 | 0.013 | 3.60 | 0.61 |
| Example 45 | PW8cl | | PW8c | 13.5 | 13.5 | 270 | 410 | | | | 2.08 | 11.1 | 30.1 | 0.012 | 4.04 | 0.61 |
| Example 46 | PW9cl | | PW9c | 13.5 | 13.5 | 270 | 4.01 | | | | 2.08 | 10.8 | 30.8 | 0.012 | 3.95 | 0.59 |
| Example 47 | PW10cl | | PW10c | 13.5 | 13.5 | 280 | 4.01 | | | | 2.15 | 11.2 | 28.6 | 0.012 | 4.24 | 0.59 |

[Table 11-2]

Table 11 (continued 1)

| Example / Comparative Example | White ink No. | Yellow Ink No. | Dispersed particles PW in white ink | | | | | Dispersed particles PY in yellow ink | | | SW/(average particle size of dispersed particles PY) | Specification related to formulas (3) and (4) | | | | Formula (4) |
|---|---|---|---|---|---|---|---|---|---|---|---|---|---|---|---|---|
| | | | | | | | | | | | | Formula (3) | | | | |
| | | | Type | WW | WW | SW | DW | Type | WY | Average particle size (nm) | | $0.010 \cdot SW \cdot DW$ (left side) | $9.0 \times 10^6/(SW^2 \cdot DW)$ (right side) | $WW/(SW \cdot DW)$ | $WW \cdot SW^2 \cdot DW$ ($\times 10^6$) | $WY \cdot DW/WW$ |
| Example 48 | PW3al-4 | PY2al | PW3a | 13.5 | 13.5 | 230 | 4.13 | PY2a | 2.0 | 135 | 1.70 | 9.50 | 41.2 | 0.014 | 2.95 | 0.61 |
| Example 49 | | PY3al | | | 13.5 | | | PY3a | 2.0 | 130 | 1.77 | | | 0.014 | 2.95 | 0.61 |
| Example 50 | | PY4al | | | 13.5 | | | PY4a | 2.0 | 135 | 1.70 | | | 0.014 | 2.95 | 0.61 |
| Example 51 | | PY5al | | | 13.5 | | | PY5a | 2.0 | 130 | 1.77 | | | 0.014 | 2.95 | 0.61 |
| Example 52 | | PY6al | | | 13.5 | | | PY6a | 2.0 | 140 | 1.64 | | | 0.014 | 2.95 | 0.61 |
| Example 53 | | PY7al | | | 13.5 | | | PY7a | 2.0 | 150 | 1.53 | | | 0.014 | 2.95 | 0.61 |
| Example 54 | | PY8al | | | 13.5 | | | PY8a | 2.0 | 145 | 1.59 | | | 0.014 | 2.95 | 0.61 |
| Example 55 | | PY1bl | | | 135 | | | PY1b | 2.0 | 140 | 1.64 | | | 0.014 | 2.95 | 0.61 |
| Example 56 | | PY2bl | | | 13.5 | | | PY2b | 2.0 | 140 | 1.64 | | | 0.014 | 2.95 | 0.61 |
| Example 57 | | PY3bl | | | 13.5 | | | PY3b | 2.0 | 145 | 1.59 | | | 0.014 | 2.95 | 0.61 |
| Example 58 | | PY4bl | | | 13.5 | | | PY4b | 2.0 | 150 | 1.53 | | | 0.014 | 2.95 | 0.61 |
| Example 59 | | PY5bl | | | 13.5 | | | PY5b | 2.0 | 150 | 1.53 | | | 0.014 | 2.95 | 0.61 |
| Example 60 | | PY6bl | | | 13.5 | | | PY6b | 2.0 | 145 | 1.59 | | | 0.014 | 2.95 | 0.61 |
| Example 61 | | PY1cl | | | 13.5 | | | PY1c | 2.0 | 150 | 1.53 | | | 0.014 | 2.95 | 0.61 |
| Example 62 | | PY2cl | | | 13.5 | | | PY2c | 2.0 | 150 | 1.53 | | | 0.014 | 2.95 | 0.61 |
| Example 63 | | PY3cl | | | 13.5 | | | PY3c | 2.0 | 160 | 1.44 | | | 0.014 | 2.95 | 0.61 |
| Example 64 | | PY4cl | | | 13.5 | | | PY4c | 2.0 | 170 | 1.35 | | | 0.014 | 2.95 | 0.61 |
| Comparative Example 1 | PW1al-1 | PY1al-7 | PW1a | 5.8 | 5.8 | 175 | 3.83 | PY1a | 4.5 | 130 | 1.35 | 6.70 | 76.7 | 0.0087 | 0.68 | 2.97 |
| Example 65 | PW1al-2 | | | 12.5 | 12.5 | | | | | | 1.35 | | | 0.019 | 1.47 | 1.38 |
| Example 66 | PW1al-3 | | | 18.0 | 18 | | | | | | 1.35 | | | 0.027 | 2.11 | 0.96 |
| Comparative Example 2 | PW1al-4 | | | 32.0 | 32 | | | | | | 1.35 | | | 0.048 | 3.75 | 0.54 |

40

(continued)

Table 11 (continued 1)

| Example / Comparative Example | White ink No. | Yellow Ink No. | Dispersed particles PW in white ink | | | | | Dispersed particles PY in yellow ink | | | SW/(average particle size of dispersed particles PY) | Specification related to formulas (3) and (4) | | | | Formula (4) |
|---|---|---|---|---|---|---|---|---|---|---|---|---|---|---|---|---|
| | | | | | | | | | | | | Formula (3) | | | | |
| | | | Type | WW | WW | SW | DW | Type | WY | Average particle size (nm) | | 0.010·SW·DW (left side) | 9.0 × 10⁶/(SW²·DW) (right side) | WW/(SW·DW) | WW·SW²·DW (× 10⁶) | WY·DW/WW |
| Comparative Example 3 | PW3al-1 | PY1al-4 | PW3a | 8.0 | 8 | 230 | 4.13 | PY1a | 2.0 | 130 | 1.77 | 9.50 | 41.2 | 0.0084 | 1.75 | 1.03 |
| Example 67 | PW3al-2 | | | 9.5 | 9.5 | | | | | | 1.77 | | | 0.010 | 2.08 | 0.87 |
| Example 68 | PW3al-3 | | | 11.5 | 11.5 | | | | | | 1.77 | | | 0.012 | 2.51 | 0.72 |
| Example 69 | PW3al-5 | | | 16.5 | 16.5 | | | | | | 1.77 | | | 0.017 | 3.60 | 0.50 |
| Example 70 | PW3al-6 | | | 20.5 | 20.5 | | | | | | 1.77 | | | 0.022 | 4.48 | 0.40 |
| Example 71 | PW3al-7 | | | 23.0 | 23 | | | | | | 1.77 | | | 0.024 | 5.02 | 0.36 |
| Example 72 | PW3al-8 | | | 27.0 | 27 | | | | | | 1.77 | | | 0.028 | 5.90 | 0.31 |
| Comparative Example 4 | PW3al-9 | | | 28.5 | 28.5 | | | | | | 1.77 | | | 0.030 | 6.23 | 0.29 |
| Comparative Example 5 | PW3al-4 | PY1al-1 | PW3a | | 13.5 | 230 | 4.13 | PY1a | 0.9 | 130 | 1.77 | 9.50 | 41.2 | 0.014 | 2.95 | 0.26 |
| Example 73 | | PY1al-2 | | | 13.5 | | | | 1.0 | | 1.77 | | | 0.014 | 2.95 | 0.31 |
| Example 74 | | PY1al-3 | | | 13.5 | | | | 1.7 | | 1.77 | | | 0.014 | 2.95 | 0.52 |
| Example 75 | | PY1al-5 | | 13.5 | | | | | 3.5 | | 1.77 | | | 0.014 | 2.95 | 1.07 |
| Example 76 | | PY1al-6 | | | 13.5 | | | | 4.2 | | 1.77 | | | 0.014 | 2.95 | 1.28 |
| Example 77 | | PY1al-8 | | | 13.5 | | | | 4.7 | | 1.77 | | | 0.014 | 2.95 | 1.44 |
| Comparative Example 6 | | PY1al-9 | | | 13.5 | | | | 5.2 | | 1.77 | | | 0.014 | 2.95 | 1.59 |
| Example 78 | PW9bl-2 | PY1al-4 | PW9b | 17.5 | 17.5 | 330 | 4.00 | PY1a | 2.0 | 130 | 2.54 | 13.2 | 20.7 | 0.013 | 7.62 | 0.46 |
| Example 79 | PW9bl-3 | | | 19.0 | 19 | | | | | | 2.54 | | | 0.014 | 8.28 | 0.42 |
| Example 80 | PW9bl-4 | | | 20.5 | 20.5 | | | | | | 2.54 | | | 0.016 | 8.93 | 0.39 |
| Comparative Example 7 | PW9bl-5 | | | 21.5 | 21.5 | | | | | | 2.54 | | | 0.016 | 9.37 | 0.37 |
| Example 81 | PW1dl | PY1dl | PW3a | 116 | 11.57 | 230 | 4.13 | PY1a | 1.7 | 130 | 1.77 | 9.50 | 41.2 | 0.012 | 2.53 | 0.59 |

(continued)

Table 11 (continued 1)

| Example / Comparative Example | White ink No. | Yellow Ink No. | Dispersed particles PW in white ink | | | | | Dispersed particles PY in yellow ink | | | SW/(average particle size of dispersed particles PY) | Specification related to formulas (3) and (4) | | | | Formula (4) |
|---|---|---|---|---|---|---|---|---|---|---|---|---|---|---|---|---|
| | | | | | | | | | | | | Formula (3) | | | | |
| | | | Type | WW | WW | SW | DW | Type | WY | Average particle size (nm) | | 0.010·SW·DW (left side) | $9.0 \times 10^6/(SW^2 \cdot DW)$ (right side) | WW/(SW·DW) | WW·SW²·DW ($\times 10^6$) | WY·DW/WW |
| Example 82 | PW1dl | PY1al-4 | PW3a | 116 | 11.57 | 230 | 4.13 | PY1a | 20 | 130 | 1.77 | 9.50 | 41.2 | 0.012 | 2.53 | 0.71 |
| Example 83 | PW3al-4 | PY1dl | PW3a | 13.5 | 13.5 | 230 | 4.13 | PY1a | 1.7 | 130 | 1.77 | 9.50 | 41.2 | 0.014 | 2.95 | 0.50 |
| Comparative Example 8 | PW22al | PY9al | PW22a | 12.0 | 12 | 350 | 4.06 | PY9a | 6.0 | 120 | 2.92 | 14.2 | 18.1 | 0.0084 | 5.97 | 2.03 |

[Table 11-3]

| Example / Comparative Example | White ink No. | Yellow Ink No. | Dispersed particles PW in white ink | | | | | Dispersed particles PY in yellow ink | | | SW/(average particle size of dispersed particles PY) | Specification related to formulas (3) and (4) | | | | Formula (4) |
|---|---|---|---|---|---|---|---|---|---|---|---|---|---|---|---|---|
| | | | | | | | | | | | | Formula (3) | | | | |
| | | | Type | WW | WW | SW | DW | Type | WY | Average particle size (nm) | | 0.010·SW·DW (left side) | $9.0 \times 10^6/(SW^2 \cdot DW)$ (right side) | WW/(SW·DW) | $WW \cdot SW^2 \cdot DW$ ($\times 10^6$) | WY·DW/WW |
| Example 84 | PW4al | PY10al | PW4a | 13.5 | 13.5 | 235 | 4.13 | PY10a | 2.0 | 115 | 204 | 9.71 | 39.5 | 0.014 | 308 | 0.61 |
| Example 85 | | PY11al-1 | | | 13.5 | | | PY11a-1 | 2.0 | 195 | 1.21 | | | | | 0.61 |
| Example 86 | | PY11al-2 | | | 13.5 | | | PY11a-2 | 2.0 | 220 | 1.07 | | | | | 0.61 |
| Example 87 | | PY11al-3 | | | 13.5 | | | PY11a-3 | 2.0 | 265 | 0.89 | | | | | 0.61 |
| Example 88 | PW11al | PY10al | PW11a | 15.5 | 15.5 | 320 | 4.03 | PY10a | 2.0 | 115 | 2.78 | 12.9 | 21.8 | 0.012 | 6.40 | 0.52 |
| Example 89 | | PY11al-1 | | | 15.5 | | | PY11a-1 | 2.0 | 195 | 1.64 | | | | | 0.52 |
| Example 90 | | PY11 al-2 | | | 15.5 | | | PY11a-2 | 2.0 | 220 | 1.45 | | | | | 0.52 |
| Example 91 | | PY11al-3 | | | 15.5 | | | PY11a-3 | 2.0 | 265 | 1.21 | | | | | 0.52 |
| Example 92 | PW1al-2 | PY11al-1 | PW1a | 12.5 | 12.5 | 175 | 3.83 | PY11a-1 | 2.0 | 195 | 0.90 | 6.70 | 76.7 | 0.019 | 1.47 | 0.61 |
| Example 93 | PW8bl | PY10al | PW8b | 14.5 | 14.5 | 310 | 4.15 | PY10a | 2.0 | 115 | 2.70 | 12.9 | 22.6 | 0.011 | 5.78 | 0.57 |
| Example 94 | PW3al-4 | PY10al | PW3a | 13.5 | 13.5 | 230 | 4.13 | PY10a | 10 | 140 | 1.77 | 9.50 | 41.2 | 0.014 | 2.95 | 0.61 |
| Example 95 | | PY11al | | | 13.5 | | | PY11a | 1.7 | 130 | 1.77 | | | | | 0.61 |
| Example 96 | | PY12al | | | 13.5 | | | PY12a | 3.5 | 130 | 1.77 | | | | | 0.61 |
| Example 97 | | PY13al | | | 13.5 | | | PY13a | 4.2 | 130 | 1.77 | | | | | 0.61 |
| Example 98 | | PY14al | | | 13.5 | | | PY14a | 4.7 | 135 | 1.77 | | | | | 0.61 |

Table 11 (continued 2)

[Table 12-1]

| Table 12 | | | | | | | | |
|---|---|---|---|---|---|---|---|---|
| Example / Comparative Example | Evaluation results | | | | | | | |
| | Solid uniformity | | Thin line reproducibility | | Visibility | Opacifying property | Discharge stability | |
| | PET substrate | Kraft paper substrate | PET substrate | Kraft paper substrate | (Kraft paper substrate) | (PET substrate) | White ink | Yellow Ink |
| Example 1 | A | B | A | B | A | B | A | A |
| Example 2 | A | B | A | B | A | C | B | A |
| Example 3 | A | A | A | A | A | A | A | A |
| Example 4 | A | A | A | A | A | A | A | A |
| Example 5 | A | A | A | A | A | A | A | A |
| Example 6 | A | A | A | A | A | A | A | A |
| Example 7 | A | A | A | A | A | A | A | A |
| Example 8 | A | A | A | A | A | A | A | A |
| Example 9 | A | A | A | A | A | A | A | A |
| Example 10 | B | A | B | A | A | B | C | A |
| Example 11 | B | A | A | A | A | A | B | A |
| Example 12 | B | B | A | A | A | C | B | A |
| Example 13 | A | A | A | A | A | A | A | A |
| Example 14 | A | A | A | A | A | A | A | A |
| Example 15 | A | A | A | A | A | A | A | A |
| Example 16 | A | A | A | A | A | A | B | A |
| Example 17 | B | A | A | A | A | A | A | A |
| Example 18 | A | A | A | A | A | A | A | A |
| Example 19 | A | A | A | A | A | A | A | A |
| Example 20 | B | A | B | B | A | A | A | A |
| Example 21 | A | A | A | A | A | A | A | A |
| Example 22 | A | B | A | B | A | B | A | A |
| Example 23 | A | A | A | B | A | C | B | A |
| Example 24 | A | A | A | A | A | A | A | A |
| Example 25 | A | A | A | A | A | A | A | A |
| Example 26 | A | A | A | A | A | A | A | A |
| Example 27 | A | A | A | A | A | A | A | A |
| Example 28 | A | A | A | A | A | A | A | A |
| Example 29 | B | A | B | A | A | B | B | A |
| Example 30 | B | A | A | A | A | A | B | A |
| Example 31 | A | B | A | A | A | B | B | A |
| Example 32 | A | A | A | A | A | A | A | A |
| Example 33 | A | A | A | A | A | A | A | A |
| Example 34 | A | A | A | A | A | A | B | A |

(continued)

| Table 12 | | | | | | | | |
|---|---|---|---|---|---|---|---|---|
| Example / Comparative Example | Evaluation results | | | | | | | |
| | Solid uniformity | | Thin line reproducibility | | Visibility | Opacifying property | Discharge stability | |
| | PET substrate | Kraft paper substrate | PET substrate | Kraft paper substrate | (Kraft paper substrate) | (PET substrate) | White ink | Yellow Ink |
| Example 35 | A | A | A | A | A | A | A | A |
| Example 36 | B | B | B | A | A | A | B | A |
| Example 37 | B | B | B | A | A | A | B | A |
| Example 38 | A | A | A | A | A | A | A | A |
| Example 39 | A | A | A | A | A | A | A | A |
| Example 40 | A | A | A | A | A | A | A | A |
| Example 41 | A | A | A | A | A | A | A | A |
| Example 42 | A | A | A | A | A | A | A | B |
| Example 43 | A | A | A | A | A | A | B | B |
| Example 44 | A | A | A | A | A | A | A | A |
| Example 45 | A | A | A | A | A | A | A | A |
| Example 46 | A | A | A | A | A | A | A | A |
| Example 47 | A | A | A | A | A | A | A | A |

[Table 12-2]

| Table 12 (continued 1) | | | | | | | | |
|---|---|---|---|---|---|---|---|---|
| Example / Comparative Example | Evaluation results | | | | | | | |
| | Solid uniformity | | Thin line reproducibility | | Visibility | Opacifying property | Discharge stability | |
| | PET substrate | Kraft paper substrate | PET substrate | Kraft paper substrate | (Kraft paper substrate) | (PET substrate) | White ink | Yellow Ink |
| Example 48 | A | A | A | A | A | A | A | A |
| Example 49 | A | A | A | A | A | A | A | A |
| Example 50 | A | A | A | A | A | A | A | A |
| Example 51 | A | A | B | A | A | A | A | A |
| Example 52 | A | A | A | A | A | A | A | B |
| Example 53 | A | A | A | A | A | A | A | A |
| Example 54 | A | A | A | A | A | A | A | A |
| Example 55 | A | A | A | A | A | A | A | A |
| Example 56 | A | A | A | A | A | A | A | A |
| Example 57 | A | A | A | A | A | A | A | A |
| Example 58 | A | A | A | A | A | A | A | A |
| Example 59 | A | A | A | A | A | A | A | A |
| Example 60 | A | A | A | A | A | A | A | A |

| Table 12 (continued 1) | | | | | | | | |
|---|---|---|---|---|---|---|---|---|
| Example / Comparative Example | Evaluation results | | | | | | | |
| | Solid uniformity | | Thin line reproducibility | | Visibility | Opacifying property | Discharge stability | |
| | PET substrate | Kraft paper substrate | PET substrate | Kraft paper substrate | (Kraft paper substrate) | (PET substrate) | White ink | Yello w Ink |
| Example 61 | A | A | A | A | A | A | A | A |
| Example 62 | A | A | A | A | A | A | A | A |
| Example 63 | A | A | A | A | A | A | A | A |
| Example 64 | A | A | A | A | A | A | A | A |
| Comparative Example 1 | B | C | C | D | B | D | A | B |
| Example 65 | A | A | B | B | B | B | A | B |
| Example 66 | A | A | A | A | A | A | A | B |
| Comparative Example 2 | B | B | A | A | A | A | D | B |
| Comparative Example 3 | B | D | A | A | B | D | A | A |
| Example 67 | A | B | A | A | A | B | A | A |
| Example 68 | A | A | A | A | A | A | A | A |
| Example 69 | A | A | A | A | A | A | A | A |
| Example 70 | B | A | A | B | B | A | B | A |
| Example 71 | C | A | B | C | B | A | C | A |
| Example 72 | C | A | B | C | B | A | C | A |
| Comparative Example 4 | D | A | C | D | B | A | D | A |
| Comparative Example 5 | B | B | D | D | D | A | A | A |
| Example 73 | A | A | B | C | C | A | A | A |
| Example 74 | A | A | A | A | A | A | A | A |
| Example 75 | A | A | A | A | A | A | A | A |
| Example 76 | A | A | A | B | A | A | A | A |
| Example 77 | B | A | B | C | B | A | A | B |
| Comparative Example 6 | C | B | C | D | B | A | A | D |
| Example 78 | B | A | A | B | B | A | B | A |
| Example 79 | C | A | A | B | B | A | C | A |
| Example 80 | C | A | B | C | B | A | C | A |
| Comparative Example 7 | D | C | B | C | B | A | D | A |
| Example 81 | A | A | A | A | A | A | A | A |
| Example 82 | A | A | A | A | A | A | A | A |

(continued)

| Table 12 (continued 1) | | | | | | | | |
|---|---|---|---|---|---|---|---|---|
| Example / Comparative Example | Evaluation results | | | | | | | |
| | Solid uniformity | | Thin line reproducibility | | Visibility | Opacifying property | Discharge stability | |
| | PET substrate | Kraft paper substrate | PET substrate | Kraft paper substrate | (Kraft paper substrate) | (PET substrate) | White ink | Yellow Ink |
| Example 83 | A | A | A | A | A | A | A | A |
| Comparative Example 8 | B | D | B | C | B | B | C | D |

[Table 12-3]

| Table 12 (continued 2) | | | | | | | | |
|---|---|---|---|---|---|---|---|---|
| Example / Comparative Example | Evaluation results | | | | | | | |
| | Solid uniformity | | Thin line reproducibility | | Visibility | Opacifying property | Discharge stability | |
| | PET substrate | Kraft paper substrate | PET substrate | Kraft paper substrate | (Kraft paper substrate) | (PET substrate) | White ink | Yellow Ink |
| Example 84 | A | A | A | A | A | A | A | A |
| Example 85 | A | A | A | A | A | A | A | A |
| Example 86 | A | C | C | A | A | A | A | A |
| Example 87 | B | C | C | B | A | A | A | C |
| Example 88 | C | A | A | C | B | A | B | A |
| Example 89 | B | A | A | A | A | A | B | A |
| Example 90 | B | B | A | A | A | A | B | A |
| Example 91 | C | C | A | A | A | A | B | C |
| Example 92 | B | C | C | C | A | B | A | A |
| Example 93 | C | A | B | C | B | B | B | A |
| Example 94 | C | B | C | B | B | A | A | C |
| Example 95 | B | B | B | A | A | A | A | B |
| Example 96 | A | A | A | A | A | A | A | A |
| Example 97 | A | A | A | A | A | A | A | A |
| Example 98 | B | B | B | B | A | A | A | A |

<Evaluation 1: evaluation of solid uniformity>

As for the solid printed matter prepared for each of the PET substrate and the kraft paper substrate, a solid image portion formed by a yellow ink was visually confirmed to evaluate solid uniformity. Evaluation criteria are as follows, and those evaluated as "A", "B", and "C" were defined as actually usable ones.

A: Solid was uniform.

B: Solid was substantially uniform.

C: Slight non-uniformity was observed in solid.

D: Solid was clearly non-uniform.

<Evaluation 2: evaluation of thin line reproducibility>

As for the line printed matter prepared for each of the PET substrate and the kraft paper substrate, a line image portion formed by a yellow ink was visually confirmed to evaluate thin line reproducibility. Evaluation criteria are as follows, and those evaluated as "A", "B", and "C" were defined as practically usable.

A: No bleeding was observed in a thin line.
B: Slight bleeding was observed in a thin line.
C: Relatively large bleeding was observed in a thin line.
D: Significant bleeding was observed in a thin line.

<Evaluation 3: evaluation of visibility>

As for the character printed matter printed on the kraft paper substrate, a character image portion formed by a yellow ink was visually confirmed to evaluate visibility. Evaluation criteria are as follows, and those evaluated as "A", "B", and "C" were defined as practically usable.

A: All characters printed at 4 points were legiable.
B: Illegible characters were present in characters printed at 4 points, but all characters printed at 6 points were legiable.
C: Illegible characters were present in characters printed at 6 points, but all characters printed at 8 points were legible.
D: Illegible characters were present in characters printed at 8 points.

<Evaluation 4: evaluation of opacifying property>

A printed matter (black character printed matter) in which ten kanji characters formed of MS Mincho type were randomly printed in black at 8 points, 12 points, and 18 points, respectively on a kraft paper substrate (OK prince fine paper, basis weight 64 g/m$^2$, manufactured by Oji Paper Co., Ltd.) was prepared in advance. Next, the black character printed matter was layered underneath the character printed matter on a PET substrate where no characters by yellow ink is printed (white ink layer). Then, the opacifying property was evaluated by visually confirming he character portion of the black character printed matter from the white ink layer side. Evaluation criteria are as follows, and those evaluated as "A", "B", and "C" were defined as practically usable.

A: All characters at 8 points, 12 points, and 16 points were illegible.
B: Characters at 8 points and 12 points were illegible, but some of characters at 16 points were legible.
C: Characters at 8 points were illegible, but some of characters at 12 points and 16 points were legible.
D: Legible characters were present among characters at 8 points.

<Evaluation 5: evaluation of discharge stability>

Using the printing apparatus used in the preparation of the printed matter, one inkjet head mounted on the most downstream side in the conveyance direction of the substrate was filled with the white ink and the yellow ink manufactured above. Next, a nozzle check pattern was printed to confirm that ink was normally discharged from all the nozzles (discharge orifices). Thereafter, the printing apparatus was allowed to stand by for a predetermined time under an environment of 25°C, and then the nozzle check pattern was printed again. Then, the discharge stability was evaluated by visually confirming the presence or absence of nozzle failure. Evaluation criteria are as follows, and those evaluated as "A", "B", and "C" were defined as practically usable.

A: No nozzle failure occurred even when printing was performed after the printing apparatus was allowed to stand by for three hours.
B: No nozzle failure occurred even when printing was performed after the printing apparatus was allowed to stand by for one hour, but nozzle failure occurred in one or more nozzles when printing was performed after the printing apparatus was caused to stand by for three hours.
C: Nozzle failure occurred in one to nine nozzles when printing was performed after the printing apparatus was allowed to stand by for one hour.
D: Nozzle failure occurred in ten or more nozzles or ink was not discharged at all when printing was performed after the printing apparatus was allowed to stand by for one hour.

In Examples 1 to 98, the combination of a white ink and a yellow ink satisfied all of the above formulas (1) to (4), and it was confirmed that Examples 1 to 98 had a practically usable level of quality in all of solid uniformity, thin line reproducibility, visibility of the yellow ink layer, opacifying property of the white ink layer, and discharge stability.

In comparison between Example 4 and Examples 84 to 87, comparison between Example 11 and Examples 88 to 91, comparison between Example 1 and Example 92, and comparison between Example 29 and Example 93, it is possible to confirm the influence on an evaluation result when the average particle size of the dispersed particles (PY) and the ratio of SW (average particle size of dispersed particles (PW)) to the average particle size of the dispersed particles (PY)) are changed. Thus, the system in which the average particle size of the dispersed particles (PY) was 60 to 250 nm and the ratio was 1.2 to 2.5 was excellent in all of solid uniformity, thin line reproducibility, visibility, and discharge stability.

Also, in Examples 94 to 98, an influence on the above characteristics was examined when the amount of aromatic ring structures contained in a dispersing resin was changed. As a result, in Examples 95 to 98 in which the amount of aromatic ring structures was 10 to 80% by mass, it was confirmed that all the evaluation results were "A" or "B", and it indicated that the above-described problem of the present invention can be suitably solved by using a dispersing resin having an aromatic ring structure in the above amount. In particular, in Examples 96 and 97, all the evaluation results were "A", and thus it was confirmed that in order to solve the above-described problem of the present invention, it was extremely suitable to set the amount of aromatic ring structures to 20 to 70% by mass.

On the other hand, Comparative Example 1 is a system that does not satisfy the inequality including the left side and the middle side of the above formula (3) and the inequality of the above formula (4). As a result of the evaluation, Comparative Example 1 had a result in which thin line reproducibility on a kraft paper substrate, and the opacifying property of the white ink layer were poor. In particular, it is considered that since the inequality including the left side and the middle side of the above formula (3) was not satisfied, partial deviation of the dispersed particles (PW) occurred on the white ink layer, and thin line reproducibility was deteriorated. Note that the same results were observed in Comparative Example 3. On the contrary, in Comparative Example 7, the inequality including the middle side and the right side of the above formula (3) was not satisfied, and solid uniformity of a printed matter on a PET substrate, and discharge stability of the white ink did not reach a practically usable level. At the time of formation of the white ink layer, the dispersed particles (PW) caused excessive and unbalanced precipitation, and as non-uniformly deposition on a substrate occured, it is considered that this led to deterioration of solid uniformity particularly in a printed matter with respect to a hydrophobic and flat substrate such as a PET substrate.

In Comparative Examples 4 and 5, a value of WY × DW/WW in the above formula (4) is less than 0.3. In these systems, the amount of the dispersed particles (PY) deposited on the white ink layer was considered to be too small, thus thin line reproducibility and visibility were deteriorated particularly in kraft paper which is a porous substrate, and also solid uniformity in a printed matter and thin line reproducibility were deteriorated on a PET substrate. On the other hand, in Comparative Example 6, a value of WY × DW/WW in the above formula (4) is larger than 1.5, and it is considered that thin line reproducibility and discharge stability of a yellow ink deteriorated due to the presence of an excessive amount of dispersed particles (PY).

In Comparative Example 2, the content (WW) of the dispersed particles (PW) in the white ink was 32% by mass and the above formula (2) was not satisfied, and therefore it is considered that the white ink was poor in discharge stability.

Note that Comparative Example 8 is a replication of the combination of the white ink composition W1 and the color ink composition C1 described in Examples of Patent Literature 4 described above. Also in this system, as in the case of Comparative Example 1 described above, the inequality formed by the left side and the middle side of the above formula (3) and the inequality of the above formula (4) were not satisfied, and thus, it was confirmed that solid uniformity on a kraft paper substrate and discharge stability of a yellow ink were deteriorated. In addition, thin line reproducibility on a kraft paper substrate was at a "C" level although it was at a practically usable level, which was not necessarily a favorable result.

[Manufacture II of white ink and yellow ink]

<Manufacture of white inks PW3aI-10 to PW3aI-31>

A water-based dispersion of the dispersed particles PW3a and the materials presented in Table 13 below were charged into a mixing vessel equipped with a stirrer so as to have the formulation described in each column of Table 13. After the water-based dispersion and the materials were charged, the mixture was stirred until the mixture became sufficiently uniform, and then the mixture was filtered with a membrane filter having a pore diameter of 1.2 μm to manufacture each of white inks PW3aI-10 to PW3aI-31.

In the manufacture of the white inks PW3aI-10 to PW3al-31, a required amount of ion-exchanged water was charged into a mixing vessel equipped with a stirrer, then the water-based dispersion of the dispersed particles PW2a was charged, and furthermore, the materials described in each column of Table 13 were sequentially charged into the mixing vessel in order from the upper row to the lower row. Note that each raw material was charged while the mixture in the mixing vessel was stirred.

[Table 13-1]

| Table 13 | | | | PW3al-10 | PW3al-11 | PW3al-12 | PW3al-13 | PW3al-14 | PW3al-15 | PW3al-16 | PW3al-17 | PW3al-18 | PW3al-19 | PW3al-20 |
|---|---|---|---|---|---|---|---|---|---|---|---|---|---|---|
| Amount | Water-based dispersion of dispersed particles | PW3a | Nv 55% | 24.55 | 24.55 | 24.55 | 24.55 | 24.55 | 24.55 | 24.55 | 24.55 | 24.55 | 24.55 | 24.55 |
| | Water-soluble organic solvent | 1,2-PD | bp 188°C | 20 | 20 | 20 | 20 | 20 | 20 | 20 | 20 | 20 | 25 | |
| | | 1,3-BD | bp 207°C | | | | | | | | | | 4 | |
| | | 1,5-PeD | bp 239°C | | | | | | | | | | | 8 |
| | | MP | bp 121°C | | | | | | | | | | | |
| | | PP | bp 150°C | | | | | | | | | | | |
| | | DPM | bp 190°C | | | | | | | | | | 6 | |
| | Binder resin | QE-1042 | Nv 40.5% | | | | | 12.4 | 12.4 | 12.4 | 12.4 | | 10 | 12.4 |
| | | HE-1335 | Nv 45.5% | 11 | | | | | | | | 13.2 | | |
| | | RE-1075 | Nv 47% | | 10.7 | | | | | | | | | |
| | | KT-9204 | Nv 30% | | | 16.7 | | | | | | | | |
| | | WBR-2101 | Nv 27% | | | | 18.6 | | | | | | | |
| | | AQUACER 515 | Nv 35% | 2.9 | 2.9 | 2.9 | 2.9 | 1.5 | 11.4 | 17.2 | | | 2.9 | 2.9 |
| | | AQUACER 539 | Nv 35% | | | | | | | | 2.9 | | | |

EP 4 636 046 A1

50

(continued)

Table 13

| | | PW3al-10 | PW3al-11 | PW3al-12 | PW3al-13 | PW3al-14 | PW3al-15 | PW3al-16 | PW3al-17 | PW3al-18 | PW3al-19 | PW3al-20 |
|---|---|---|---|---|---|---|---|---|---|---|---|---|
| Surface additive (AW) | Surfynol 465 | 1 | 1 | 1 | 1 | 1 | 1 | 1 | 1 | 1 | 1 | 1 |
| | TEGO Glide 440 | 0.5 | 0.5 | 0.5 | 0.5 | 0.5 | 0.5 | 0.5 | 0.5 | 0.5 | 0.5 | 0.5 |
| | NONION EH-208 | | | | | | | | | | | |
| Other component (antiseptic) | Proxel GXL | 0.1 | 0.1 | 0.1 | 0.1 | 0.1 | 0.1 | 0.1 | 0.1 | 0.1 | 0.1 | 0.1 |
| Ion exchanged water | | Balance | Balance | Balance | Balance | Balance | Balance | Balance | Balance | Balance | Balance | Balance |
| Total amount | | 100 | 100 | 100 | 100 | 100 | 100 | 100 | 100 | 100 | 100 | 100 |
| Specifications | Boiling point weighted average value of water-soluble organic solvent and water (°C) | 122.4 | 122.4 | 122.4 | 122.4 | 122.3 | 123.3 | 123.9 | 122.4 | 122.4 | 139.8 | 114.2 |
| | Amount of surface additive (AW) | 1.5 | 1.5 | 1.5 | 1.5 | 1.5 | 1.5 | 1.5 | 1.5 | 1.5 | 1.5 | 1.5 |

[Table 13-2]

Table 13 (continued)

| | | | PW3al-21 | PW3al-22 | PW3al-23 | PW3al-24 | PW3al-25 | PW3al-26 | PW3al-27 | PW3al-28 | PW3al-29 | PW3al-30 | PW3al-31 |
|---|---|---|---|---|---|---|---|---|---|---|---|---|---|
| Amount | Water-based dispersion of dispersed particles | PW3a | Nv 55% | 24.55 | 24.55 | 24.55 | 24.55 | 24.55 | 24.55 | 24.55 | 24.55 | 24.55 | 24.55 | 24.55 |
| | Water-soluble organic solvent | 1,2-PD | bp 188°C | | | 9 | 5 | | | 20 | 20 | 20 | 20 | 20 |
| | | 1,3-BD | bp 207°C | 20 | 20 | | | 10 | | | | | | |
| | | 1,5-PeD | bp 239°C | | 5 | | | | 4 | | | | | |
| | | MP | bp 121°C | | | 4 | 5 | | | | | | | |
| | | PP | bp 150°C | | | | | 5 | | | | | | |
| | | DPM | bp 190°C | | 10 | | | | 16 | | | | | |
| | Binder resin | QE-1042 | Nv 40.5% | 12.4 | 12.4 | 12.4 | 12.4 | 12.4 | 12.4 | 12.4 | 12.4 | 12.4 | 12.4 | 12.4 |
| | | HE-1335 | Nv 45.5% | | | | | | | | | | | |
| | | RE-1075 | Nv 47% | | | | | | | | | | | |
| | | KT-9204 | Nv 30% | | | | | | | | | | | |
| | | WBR-2101 | Nv 27% | | | | | | | | | | | |
| | | AQUACER 515 | Nv 35% | 2.9 | 2.9 | 2.9 | 2.9 | 2.9 | 2.9 | 2.9 | 2.9 | 2.9 | 2.9 | 2.9 |
| | | AQUACER 539 | Nv 35% | | | | | | | | | | | |

(continued)

| Table 13 (continued) | | | PW3al-21 | PW3al-22 | PW3al-23 | PW3al-24 | PW3al-25 | PW3al-26 | PW3al-27 | PW3al-28 | PW3al-29 | PW3al-30 | PW3al-31 |
|---|---|---|---|---|---|---|---|---|---|---|---|---|---|
| | Surface additive (AW) | Surfynol 465 | 1 | 1 | 1 | 1 | 1 | 1 | 1.2 | 1.5 | 1.2 | | 0.5 |
| | | TEGO Glide 440 | 0.5 | 0.5 | 0.5 | 0.5 | 0.5 | 0.5 | 0.6 | 0.7 | | | 0.2 |
| | | NONION EH-208 | | | | | | | | | | 1 | 0.3 |
| | Other component (antiseptic) | Proxel GXL | 0.1 | 0.1 | 0.1 | 0.1 | 0.1 | 0.1 | 0.1 | 0.1 | 0.1 | 0.1 | 0.1 |
| | Ion exchanged water | | Balance | Balance | Balance | Balance | Balance | Balance | Balance | Balance | Balance | Balance | Balance |
| | Total amount | | 100 | 100 | 100 | 100 | 100 | 100 | 100 | 100 | 100 | 100 | 100 |
| Specifications | Boiling point weighted average value of water-soluble organic solvent and water (°C) | | 127.2 | 147.4 | 111.2 | 107.0 | 116.9 | 125.4 | 122.5 | 122.6 | 122.3 | 122.3 | 122.3 |
| | Amount of surface additive (AW) | | 1.5 | 1.5 | 1.5 | 1.5 | 1.5 | 1.5 | 1.8 | 2.2 | 1.2 | 1.0 | 1.0 |

<Manufacture of yellow inks PY1aI-10 to PY1aI-31>

A water-based dispersion of the dispersed particles PY1a and the materials presented in Table 14 below were charged into a mixing vessel equipped with a stirrer so as to have the formulation described in each column of Table 14. After the water-based dispersion and the materials were charged, the mixture was stirred until the mixture became sufficiently uniform, and then the mixture was filtered with a membrane filter having a pore diameter of 1.2 $\mu$m to manufacture each of yellow inks PY1aI-10 to PY1aI-31.

In the manufacture of the yellow inks PW2aI-10 to PW2aI-31, a required amount of ion-exchanged water was charged into a mixing vessel equipped with a stirrer, then the water-based dispersion of the dispersed particles PY1a was charged, and furthermore, the materials described in each column of Table 14 were sequentially charged into the mixing vessel in order from an upper line to a lower line. Note that each raw material was charged while the mixture in the mixing vessel was stirred.

[Table 14-1]

| Table 14 | | | | PY1al-10 | PY1al-11 | PY1al-12 | PY1al-13 | PY1al-14 | PY1al-15 | PY1al-16 | PY1al-17 | PY1al-18 | PY1al-19 | PY1al-20 |
|---|---|---|---|---|---|---|---|---|---|---|---|---|---|---|
| Amount | Water-based dispersion of dispersed particles | PY1a | Nv 26% | 7.69 | 7.69 | 7.69 | 7.69 | 7.69 | 7.69 | 7.69 | 7.69 | 7.69 | 7.69 | 7.69 |
| | Water-soluble organic solvent | 1,2-PD | bp 188°C | 20 | 20 | 20 | 20 | 20 | 20 | 20 | 20 | 20 | 25 | |
| | | 1,3-BD | bp 207°C | | | | | | | | | | 4 | |
| | | 1,5-PeD | bp 239°C | | | | | | | | | | | 8 |
| | | MP | bp 121°C | | | | | | | | | | | |
| | | PP | bp 150°C | | | | | | | | | | | |
| | | DPM | bp 190°C | | | | | | | | | | 6 | |
| | Binder resin | QE-1042 | Nv 40.5% | | | | | 12.4 | 12.4 | 12.4 | 12.4 | | 10 | 12.4 |
| | | HE-1335 | Nv 45.5% | 11 | | | | | | | | 13.2 | | |
| | | RE-1075 | Nv 47% | | 10.7 | | | | | | | | | |
| | | KT-9204 | Nv 30% | | | 16.7 | | | | | | | | |
| | | WBR-2101 | Nv 27% | | | | 18.6 | | | | | | | |
| | | AQUACER 515 | Nv 35% | 2.9 | 2.9 | 2.9 | 2.9 | 1.5 | 11.4 | 17.2 | | | 2.9 | 2.9 |
| | | AQUACER 539 | Nv 35% | | | | | | | | 2.9 | | | |

| Table 14 | | | PY1al-10 | PY1al-11 | PY1al-12 | PY1al-13 | PY1al-14 | PY1al-15 | PY1al-16 | PY1al-17 | PY1al-18 | PY1al-19 | PY1al-20 |
|---|---|---|---|---|---|---|---|---|---|---|---|---|---|
| | Surface additive (AY) | Surfynol 465 | 1.2 | 1.2 | 1.2 | 1.2 | 1.2 | 1.2 | 1.2 | 1.2 | 1.2 | 1.2 | 1.2 |
| | | TEGO Glide 440 | 0.6 | 0.6 | 0.6 | 0.6 | 0.6 | 0.6 | 0.6 | 0.6 | 0.6 | 0.6 | 0.6 |
| | | NONION EH-208 | | | | | | | | | | | |
| | Other component (antiseptic) | Proxel GXL | 0.1 | 0.1 | 0.1 | 0.1 | 0.1 | 0.1 | 0.1 | 0.1 | 0.1 | 0.1 | 0.1 |
| | Ion exchanged water | | Balance | Balance | Balance | Balance | Balance | Balance | Balance | Balance | Balance | Balance | Balance |
| | Total amount | | 100 | 100 | 100 | 100 | 100 | 100 | 100 | 100 | 100 | 100 | 100 |
| Specifications | Boiling point weighted average value of water-soluble organic solvent and water (°C) | | 120.1 | 120.1 | 120.1 | 120.1 | 120.0 | 120.8 | 121.4 | 120.1 | 120.1 | 135.8 | 112.8 |
| | Amount of surface additive (AY) | | 1.8 | 1.8 | 1.8 | 1.8 | 1.8 | 1.8 | 1.8 | 1.8 | 1.8 | 1.8 | 1.8 |

[Table 14-2]

Table 14 (continued)

| | | | PY1al-21 | PY1al-22 | PY1al-23 | PY1al-24 | PY1al-25 | PY1al-26 | PY1al-27 | PY1al-28 | PY1al-29 | PY1al-30 | PY1al-31 |
|---|---|---|---|---|---|---|---|---|---|---|---|---|---|
| Amount | Water-based dispersion of dispersed particles | PY1a | Nv 26% | 7.69 | 7.69 | 7.69 | 7.69 | 7.69 | 7.69 | 7.69 | 7.69 | 7.69 | 7.69 | 7.69 |
| | Water-soluble organic solvent | 1,2-PD | bp 188°C | | | 9 | 5 | | | 20 | 20 | 20 | 20 | 20 |
| | | 1,3-BD | bp 207°C | 20 | 20 | | | | | | | | | |
| | | 1,5-PeD | bp 239°C | | 5 | | | 10 | 4 | | | | | |
| | | MP | bp 121°C | | | 4 | 5 | | | | | | | |
| | | PP | bp 150°C | | | | | 5 | | | | | | |
| | | DPM | bp 190°C | | 10 | | | | 16 | | | | | |
| | Binder resin | QE-1042 | Nv 40.5% | 12.4 | 12.4 | 12.4 | 12.4 | 12.4 | 12.4 | 12.4 | 12.4 | 12.4 | 12.4 | 12.4 |
| | | HE-1335 | Nv 45.5% | | | | | | | | | | | |
| | | RE-1075 | Nv 47% | | | | | | | | | | | |
| | | KT-9204 | Nv 30% | | | | | | | | | | | |
| | | WBR-2101 | Nv 27% | | | | | | | | | | | |
| | | AQUACER 515 | Nv 35% | 2.9 | 2.9 | 2.9 | 2.9 | 2.9 | 2.9 | 2.9 | 2.9 | 2.9 | 2.9 | 2.9 |
| | | AQUACER 539 | Nv 35% | | | | | | | | | | | |

(continued)

| | | | PY1al-21 | PY1al-22 | PY1al-23 | PY1al-24 | PY1al-25 | PY1al-26 | PY1al-27 | PY1al-28 | PY1al-29 | PY1al-30 | PY1al-31 |
|---|---|---|---|---|---|---|---|---|---|---|---|---|---|
| | Surface additive (AY) | Surfynol 465 | 1.2 | 1 | 1.2 | 1.2 | 1.2 | 1.2 | 1.4 | 1.6 | 1.4 | | 0.6 |
| | | TEGO Glide 440 | 0.6 | 0.5 | 0.6 | 0.6 | 0.6 | 0.6 | 0.7 | 0.75 | | | 0.3 |
| | | NONION EH-208 | | | | | | | | | | 1.2 | 0.4 |
| | Other component (antiseptic) | Proxel GXL | 0.1 | 0.1 | 0.1 | 0.1 | 0.1 | 0.1 | 0.1 | 0.1 | 0.1 | 0.1 | 0.1 |
| | Ion exchanged water | | Balance | Balance | Balance | Balance | Balance | Balance | Balance | Balance | Balance | Balance | Balance |
| | Total amount | | 100 | 100 | 100 | 100 | 100 | 100 | 100 | 100 | 100 | 100 | 100 |
| Specifications | Boiling point weighted average value of water-soluble organic solvent and water (°C) | | 124.5 | 142.5 | 110.1 | 106.3 | 115.1 | 122.8 | 120.2 | 120.3 | 120.0 | 120.0 | 120.0 |
| | Amount of surface additive (AY) | | 1.8 | 1.5 | 1.8 | 1.8 | 1.8 | 1.8 | 2.1 | 2.35 | 1.4 | 1.2 | 1.3 |

**Table 14 (continued)**

Note that, in Tables 13 and 14 above, "balance" means that ion-exchanged water was added to adjust the total amount of the mixture to 100 parts. "Nv" represents a solid content concentration, and "bp" represents a boiling point at 1 atm. Details of product names and abbreviations described in Tables 13 and 14 above are as follows.

1,2-PD: 1,2-propanediol (boiling point at 1 atm = 188°C)
1,3-BD: 1,3-propanediol (boiling point at 1 atm = 207°C)
1,5-PeD: 1,5-propanediol (boiling point at 1 atm = 239°C)
MP: propylene glycol monomethyl ether (boiling point at 1 atm = 121°C)
PP: propylene glycol monopropyl ether (boiling point at 1 atm = 150°C)
DPM: dipropylene glycol monomethyl ether (boiling point at 1 atm = 190°C)
QE-1042: (meth)acrylic resin particles manufactured by SEIKO PMC CORPORATION, median diameter (volume based) = 40 nm, acid value = 33 mgKOH/g, solid content concentration: 40.5%
HE-1335: (meth)acrylic resin particles manufactured by SEIKO PMC CORPORATION, median diameter (volume based) = 90 nm, acid value =84 mgKOH/g, solid content concentration: 45.5%
RE-1075: (meth)acrylic resin particles manufactured by SEIKO PMC CORPORATION, median diameter (volume based) =100 nm, acid value =15 mgKOH/g, solid content concentration: 47%
KT-9204: Elitel KT-9204 (polyester resin particles manufactured by Unitika Ltd., acid value =7 mgKOH/g, solid content concentration: 30%)
WBR-2101: Acrit WBR-2101 (urethane resin particles manufactured by Taisei Fine Chemical Co., Ltd., acid value = 10 mgKOH/g, solid content concentration: 27%)
AQUACER 515: polyolefin resin particles manufactured by BYK Japan KK, median diameter (volume based) = 40 nm, solid content concentration: 35%
AQUACER 539: polyolefin resin particles manufactured by BYK Japan KK, median diameter (volume basis) = 60 nm, solid content concentration: 35%
Surfynol 465: acetylene diol-based surface additive manufactured by Nissin Chemical Industry Co., Ltd. (ethylene oxide adduct of 2,4,7,9-tetramethyl-5-decine-4,7-diol)
TEGO Glide 440: siloxane-based surface additive manufactured by Evonik Industries (polydimethylsiloxane having an ethylene oxide group and a propylene oxide group introduced at both ends)
NONION EH-208: polyoxyalkylene alkyl ether-based surface additive manufactured by NOF CORPORATION (polyoxyethylene-2-ethylhexyl ether)
Proxel GXL: antiseptic manufactured by Arch Chemicals Inc.(20% dipropylene glycol solution of 1,2-benzothiazoline-3-one)

[Examples 99 to 125]

A printed matter was prepared with the above-described method using a combination of a white ink and a yellow ink presented in Table 15, and the evaluations 1 to 5 described above were performed using the obtained printed matter. Evaluation results are presented in Table 16.

[Table 15]

Table 15

| Example / Comparative Example | White ink No. | Yellow Ink No. | Dispersed particles PW in white ink | | | | Dispersed particles PY in yellow ink | | Specification related to formulas (3) and (4) | | | | | Other specifications |
|---|---|---|---|---|---|---|---|---|---|---|---|---|---|---|
| | | | | | | | | | Formula (3) | | | | Formula (4) | Amount of surface additive (AY)/amount of surface additive (AW) |
| | | | Type | WW | SW | DW | Type | WY | $0.010 \cdot SW \cdot DW$ (left side) | $9.0 \times 10^6/(SW^2 \cdot DW)$ (right side) | $WW/(SW \cdot DW)$ | $WW \cdot SW^2 \cdot DW$ ($\times 10^6$) | $WY \cdot DW/WW$ | |
| Example 99 | PW3al-10 | PY1al-10 | | | | | | | | | | | | 1.20 |
| Example 100 | PW3al-11 | PY1al-11 | | | | | | | | | | | | 1.20 |
| Example 101 | PW3al-12 | PY1al-12 | | | | | | | | | | | | 1.20 |
| Example 102 | PW3al-13 | PY1al-13 | | | | | | | | | | | | 1.20 |
| Example 103 | PW3al-14 | PY1al-14 | | | | | | | | | | | | 1.20 |
| Example 104 | PW3al-15 | PY1al-15 | | | | | | | | | | | | 1.20 |
| Example 105 | PW3al-16 | PY1al-16 | | | | | | | | | | | | 1.20 |
| Example 106 | PW3al-17 | PY1al-17 | | | | | | | | | | | | 1.20 |
| Example 107 | PW3al-18 | PY1al-18 | PW3a | 13.5 | 230 | 4.13 | PY1a | 2.0 | 9.50 | 41.2 | 0.014 | 2.95 | 0.61 | 1.20 |
| Example 108 | PW3al-19 | PY1al-19 | | | | | | | | | | | | 1.20 |
| Example 109 | PW3al-20 | PY1al-20 | | | | | | | | | | | | 1.20 |
| Example 110 | PW3al-21 | PY1al-21 | | | | | | | | | | | | 1.20 |
| Example 111 | PW3al-22 | PY1al-22 | | | | | | | | | | | | 1.00 |
| Example 112 | PW3al-23 | PY1al-23 | | | | | | | | | | | | 1.20 |
| Example 113 | PW3al-24 | PY1al-24 | | | | | | | | | | | | 1.20 |
| Example 114 | PW3al-25 | PY1al-25 | | | | | | | | | | | | 1.20 |
| Example 115 | PW3al-26 | PY1al-26 | | | | | | | | | | | | 1.20 |
| Example 116 | PW3al-4 | PY1al-27 | | | | | | | | | | | | 1.40 |
| Example 117 | | PY1al-28 | | | | | | | | | | | | 1.57 |

EP 4 636 046 A1

| Example / Comparative Example | White ink No. | Yellow Ink No. | Dispersed particles PW in white ink | | | | Dispersed particles PY in yellow ink | | Specification related to formulas (3) and (4) | | | | | Other specifications |
|---|---|---|---|---|---|---|---|---|---|---|---|---|---|---|
| | | | | | | | | | Formula (3) | | | | Formula (4) | Amount of surface additive (AY)/amount of surface additive (AW) |
| | | | Type | WW | SW | DW | Type | WY | $0.010 \cdot SW \cdot DW$ (left side) | $9.0 \times 10^6/(SW^2 \cdot DW)$ (right side) | $WW/(SW \cdot DW)$ | $WW \cdot SW^2 \cdot DW$ ($\times 10^6$) | $WY \cdot DW/WW$ | |
| Example 118 | PW3al-27 | PY1al-4 | | | | | | | | | | | | 1.00 |
| Example 119 | | PY1al-27 | | | | | | | | | | | | 1.17 |
| Example 120 | PW3al-28 | PY1al-4 | | | | | | | | | | | | 0.82 |
| Example 121 | | PY1al-27 | | | | | | | | | | | | 0.95 |
| Example 122 | | PY1al-28 | | | | | | | | | | | | 1.07 |
| Example 123 | PW3al-29 | PY1al-29 | | | | | | | | | | | | 1.17 |
| Example 124 | PW3al-30 | PY1al-30 | | | | | | | | | | | | 1.20 |
| Example 125 | PW3al-31 | PY1al-31 | | | | | | | | | | | | 1.30 |

[Table 16]

Table 16

| Example / Comparative Example | Evaluation results | | | | | | | |
|---|---|---|---|---|---|---|---|---|
| | Solid uniformity | | Thin line reproducibility | | Visibility | Opacifying property | Discharge stability | |
| | PET substrate | Kraft paper substrate | PET substrate | Kraft paper substrate | (Kraft paper substrate) | (PET substrate) | White ink | Yellow Ink |
| Example 99 | A | B | A | A | A | A | A | B |
| Example 100 | A | B | A | A | A | A | B | B |
| Example 101 | A | A | A | A | A | A | A | A |
| Example 102 | A | A | A | A | A | A | A | A |
| Example 103 | A | A | A | A | A | A | A | A |
| Example 104 | A | A | A | A | A | A | A | A |
| Example 105 | B | A | A | A | A | A | B | B |
| Example 106 | A | A | A | A | A | A | A | A |
| Example 107 | A | B | B | B | A | A | B | B |
| Example 108 | A | A | A | A | A | A | A | A |
| Example 109 | A | A | A | A | A | A | A | A |
| Example 110 | A | A | A | A | A | A | A | A |
| Example 111 | B | A | B | A | A | A | A | A |
| Example 112 | A | A | A | A | A | A | A | A |
| Example 113 | A | B | A | B | A | A | B | A |
| Example 114 | A | A | A | A | A | A | A | A |
| Example 115 | A | A | A | A | A | A | A | A |
| Example 116 | A | A | A | A | A | A | A | A |
| Example 117 | A | B | B | B | A | A | A | A |
| Example 118 | B | A | A | A | A | A | A | A |
| Example 119 | A | A | A | A | A | A | A | A |
| Example 120 | C | B | B | B | B | A | A | A |
| Example 121 | B | B | B | A | A | A | A | A |
| Example 122 | A | A | A | A | A | A | A | A |
| Example 123 | A | A | A | A | A | A | A | A |
| Example 124 | B | A | B | B | A | B | B | B |
| Example 125 | A | A | A | A | A | A | A | A |

In Examples 99 to 125, the types and blend amounts of the binder resin, the water-soluble organic solvent, and the surface additive configuring the white ink and the yellow ink were changed. Note that all the inks satisfied the above formulas (1) to (4), and as a result of evaluation, it was confirmed that Examples 99 to 125 had actually usable quality in all of solid uniformity, thin line reproducibility, visibility of the yellow ink layer, opacifying property of the white ink layer, and discharge stability.

By comparing Example 2 in Tables 11 and 12 and Examples 116 to 122 in Tables 15 and 16, the influence of the ratio of the content of the surface additive (AY) in the yellow ink to the content of the surface additive (AW) in the white ink on solution of the problem of the present invention can be confirmed. In Examples 2, 116 to 119, 121, and 122 in which the ratio was 0.9 to 1.6, all the evaluation results were "A" or "B", and it was indicated that the above-described problem of the present invention can be suitably solved by adjusting the ratio. In particular, in Examples 2, 116, and 122, all the evaluation results were "A", and it was confirmed that the ratio is extremely suitably 1.05 to 1.4 in order to solve the above-described problem of the present invention.

**Claims**

1. An ink set comprising: an aqueous white inkjet ink; and an aqueous yellow inkjet ink used to be printed on a layer formed by printing the aqueous white inkjet ink, wherein

   the aqueous white inkjet ink contains dispersed particles (PW) of an inorganic white pigment,
   the aqueous yellow inkjet ink contains dispersed particles (PY) of C.I. Pigment Yellow 155, and
   when a content of the dispersed particles (PW) to a total amount of the aqueous white inkjet ink is represented by WW (% by mass), an average particle size and a density of the dispersed particles (PW) are represented by SW (nm) and DW (g/cm$^3$), respectively, and a content of the dispersed particles (PY) to a total amount of the aqueous yellow inkjet ink is represented by WY (% by mass), formulas (1) to (4) below are all satisfied.

$$150 \leq SW \leq 350 \quad (1)$$

$$6 \leq WW \leq 30 \quad (2)$$

$$0.010 \times SW \times DW \leq WW \leq [9.0 \times 10^6 \div (SW^2 \times DW)] \quad (3)$$

$$0.30 \leq (WY \times DW / WW) \leq 1.5 \quad (4)$$

2. The ink set according to claim 1, wherein the inorganic white pigment contains titanium oxide treated with alumina.

3. The ink set according to claim 1 or 2, wherein

   the aqueous white inkjet ink further contains a polyolefin resin as a binder resin, and
   the aqueous yellow inkjet ink further contains a polyolefin resin as a binder resin.

4. The ink set according to any one of claims 1 to 3, wherein

   the aqueous white inkjet ink further contains at least one selected from the group consisting of a siloxane-based surface additive and an acetylene diol-based surface additive as a surface additive (AW), and
   the aqueous yellow inkjet ink further contains at least one selected from the group consisting of a siloxane-based surface additive and an acetylene diol-based surface additive as a surface additive (AY).

5. The ink set according to claim 4, wherein a ratio of a content of the surface additive (AY) contained in the aqueous yellow inkjet ink to a content of the surface additive (AW) contained in the aqueous white inkjet ink is 0.9 to 1.6.

6. A method for manufacturing a printed matter using the ink set according to any one of claims 1 to 5, the method comprising:
   performing, in this order, a step (step 1) of discharging the aqueous white inkjet ink from an inkjet head onto a substrate, a step (step 2) of discharging the aqueous yellow inkjet ink from an inkjet head onto a layer formed by printing the aqueous white inkjet ink, and a step (step 3) of drying the aqueous white inkjet ink and the aqueous yellow inkjet ink on the substrate.

## INTERNATIONAL SEARCH REPORT

| International application No. |
| --- |
| **PCT/JP2023/028406** |

| A. | CLASSIFICATION OF SUBJECT MATTER |
| --- | --- |

*C09D 11/322*(2014.01)i; *C09D 11/40*(2014.01)i; *B41M 5/00*(2006.01)i; *B41J 2/01*(2006.01)i; *B41J 2/21*(2006.01)i
FI: C09D11/40; C09D11/322; B41J2/01 501; B41J2/01 123; B41J2/01 125; B41J2/21; B41M5/00 120; B41M5/00 100

According to International Patent Classification (IPC) or to both national classification and IPC

| B. | FIELDS SEARCHED |
| --- | --- |

Minimum documentation searched (classification system followed by classification symbols)

C09D11/322; C09D11/40; B41M5/00; B41J2/01; B41J2/21

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | JP 2019-065246 A (RICOH CO LTD) 25 April 2019 (2019-04-25)<br>claims, paragraphs [0128], [0157], [0169], [0174]-[0270] | 1-6 |
| A | JP 2019-077070 A (ROLAND DG CORP) 23 May 2019 (2019-05-23)<br>entire text | 1-6 |
| A | JP 2016-112701 A (KONICA MINOLTA INC) 23 June 2016 (2016-06-23)<br>entire text | 1-6 |
| A | JP 2022-146841 A (RICOH CO LTD) 05 October 2022 (2022-10-05)<br>entire text | 1-6 |

☐ Further documents are listed in the continuation of Box C.   ☑ See patent family annex.

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **28 September 2023** | **10 October 2023** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

International application No.

**PCT/JP2023/028406**

| Patent document cited in search report | | | Publication date (day/month/year) | Patent family member(s) | | | Publication date (day/month/year) |
|---|---|---|---|---|---|---|---|
| JP | 2019-065246 | A | 25 April 2019 | (Family: none) | | | |
| JP | 2019-077070 | A | 23 May 2019 | (Family: none) | | | |
| JP | 2016-112701 | A | 23 June 2016 | (Family: none) | | | |
| JP | 2022-146841 | A | 05 October 2022 | US | 2022/0298373 | A1 | |
| | | | | entire text | | | |
| | | | | EP | 4063462 | A1 | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2009024072 A
- JP 2018111742 A
- JP 2022100822 A
- JP 2014094495 A
- JP 2017186534 A
- JP 2022040645 A
- JP 2022201213 A
- JP 2016089020 A